(19) Europäisches Patentamt
European Patent Office
Office européen des brevets

(11) **EP 4 558 338 B1**

(12) **EUROPEAN PATENT SPECIFICATION**

(45) Date of publication and mention
of the grant of the patent:
**18.03.2026 Bulletin 2026/12**

(21) Application number: **23744782.6**

(22) Date of filing: **20.07.2023**

(51) International Patent Classification (IPC):
**B41J 11/00** (2006.01)      **B41J 29/393** (2006.01)
**B65H 5/02** (2006.01)       **B65H 7/02** (2006.01)

(52) Cooperative Patent Classification (CPC):
**B41J 11/007; B41J 29/393; B65H 5/021;
B65H 7/02;** B65H 2404/283; B65H 2511/20;
B65H 2801/06

(86) International application number:
**PCT/EP2023/070182**

(87) International publication number:
**WO 2024/018013 (25.01.2024 Gazette 2024/04)**

(54) **CONVEYOR BELT HAVING MAGNETIC LINEAR ENCODER READABLE MAGNETIC MARKERS**

FÖRDERBAND, DAS VON MAGNETISCHEN LINEAREN CODIERERN LESBARE MAGNETISCHE MARKIERUNGEN AUFWEIST

COURROIE DE TRANSPORTEUR DOTÉE DE MARQUEURS MAGNÉTIQUES LISIBLES PAR UN CODEUR LINÉAIRE MAGNÉTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.07.2022 EP 22186308**

(43) Date of publication of application:
**28.05.2025 Bulletin 2025/22**

(73) Proprietor: **Moovimenta AG
4153 Reinach (CH)**

(72) Inventors:
• **SICK, Holger**
**8600 Dübendorf (CH)**
• **DOMANICO, Pietro**
**8600 Dübendorf (CH)**

(74) Representative: **Bohest AG
Holbeinstrasse 36-38
4051 Basel (CH)**

(56) References cited:
US-A1- 2008 218 577      US-A1- 2009 079 999
US-A1- 2009 148 209      US-A1- 2009 219 373

**Description**

TECHNICAL FIELD

The present invention relates to a conveyor belt comprising a periodic pattern of magnetic markers embedded into the belt, being arranged in a row running in parallel to the belt's travel direction. The invention furthermore concerns a conveying device comprising such belt. In particular it also concerns a single pass or multipass inkjet printer comprising such belt.

PRIOR ART

In any conveyor device which is integrated with other machine components or equipment and where the speed and position of substrates on the conveyor belt must be synchronized with other devices, as with pick-and-place, filling or printing applications, accurate conveyor belt position control is required. A customary way of determining the position of a conveyor belt during operation has been the use of a rotatable wheel which is in non-slipping contact with the belt's conveying surface, wherein the moving belt causes the wheel to rotate, and the wheel's rotation is translated into a belt travel distance.

Single pass inkjet printers are a special type of conveying device which simultaneously print an image onto the conveyed good. The basic colours (in the simplest CMYK model black, yellow, magenta and cyan, in more sophisticated models optionally more colours such as light magenta and light cyan, in some cases up to nine basic colours) are ejected as small ink dots from nozzles of individual printing heads which are spaced apart from each other in the longitudinal direction by some offset. The printing heads with colour nozzles extend over the entire transversal width of the substrate, so that a transversal movement of the printing heads is not necessary. By this arrangement it is possible to sequentially print all basic colours in one single pass onto the substrate, whereby the substrate is transported from one printing head to the next one, in order to obtain the fully printed image with all colours. Non-basic colours are formed by mixing two or more of the basic colours, which is done by superposing ink droplets of different basic colours. The inkjet printer must thus be able to print ink droplets of different basic colours, originating from different printing heads being longitudinally spaced apart by some offset, onto the same site of the substrate. Considering e.g. a printing resolution of 600 dpi (dots per inch) means a positioning tolerance of $\pm$ 21 $\mu$m for each drop of colour. This tolerance should be maintained along the entire print process area length which increases with increasing distance between the printing heads spacing and with increasing number of basic colours. This requires that the printing driver synchronises the ink ejection of the printing heads and exactly knows the position of the substrate at any time while it is conveyed from one printing head to the next one with a tolerance as low as possible and in any case not exceeding the printing resolution.

Conveyor belts comprising magnetic markers that allow the determination of the position of the belt by an appropriate magnetic detector, and conveying devices using such belts have been known for quite some time. The magnetic markers are magnets with north to south pole running along the belt's thickness from the one side of the belt to the other one. Typical detecting devices are magnetic linear encoders which as such are conventional and on the market. The oldest publication that the applicant is aware in this field is JP S55-123806. This publication, apparently already in the field of printers, discloses belt position determination using magnetic markers on the belt and using two magnetic heads, presumably simply in order to generate a "quadrature signal" (see below). Other publications disclosing belts with magnetic markers and their use in printers are JP 2001/125333 A1, US 2008/049054 A1 and US 2008/0192076 A1.

The aforementioned four publications apparently concerned belts which were endless right away, that is, there was no end-joining necessary. The vast majority of the belts are however marketed in open-ended form such as to allow cutting the belt on-site, after having it mounted on the conveying device, to the necessary length and pre-tensioning to the desired tension. Only after these steps have been carried out the open-ended belt, mounted and its open ends being held under the required pretension, is made endless. Such end-joining is customarily made using heat and pressure and optionally with co-use of a hot-melt adhesive. In the case of a belt containing magnetic markers such end-joining leads to a deterioration or even destruction of the magnetic markers, such that in the end-joining zone the magnetic markers are no longer readable by a magnetic linear encoder.

Not pre-published EP 4 060 291 A1 discloses a device for position determination on a support with a periodic magnetic marker pattern, the device having two linear encoders, a "downstream" one and an "upstream" one. The device is able to deal with a "transition region" wherein the magnetic signal is unreliable or absent, by having the "reading window" (the distance between the two linear encoders) is greater than the "transition region". EP 4 060 291 A1 relies on a calculated displacement for dealing with one sole "transition region"; this publication is however silent as to how this should work when there are several "transition regions" of different size.

Whether a marker is "readable" or "not readable" by the magnetic linear encoder is a yes/no decision despite the fact that the maximum magnetic flux density of the sinusoid magnetic signal of the markers does not drop sharply to zero but gradually decreases to zero when entering the end-joining zone. A belt position determining system must at some stage decide to completely disregard the output of a linear encoder when that encoder enters the end-joining zone with decreasing intensity of the sinusoid signal and its output position information thus becomes unreliable. Similarly the system must at some stage decide to start to re-consider the output of that linear encoder again when that encoder leaves the end-joining zone and the intensity of the sinusoid signal has again increased sufficiently such as that the output position information of that encoder has become again reliable.

The said end-joining zone containing markers not readable by the magnetic linear encoder typically has a length of 80-120 mm. Nevertheless, position determination using the magnetic markers must still be possible at any time and at any belt position. The customary initial solution is to use two linear encoders being spaced apart from each other by a longitudinal distance which is greater than the longitudinal length of the end-joining zone. In this way it can be guaranteed that there is always at least one linear encoder which is not in the end-joining zone and which can provide position information from readable magnetic markers. The applicant is aware of some prior art that intended to address the foregoing.

JP 2006/096429A1 discloses belt position determination using optical (transparent/opaque) markers on the belt, wherein the belt has a "knot 141x" (a zone broader than one marker and apparently transparent), using two detectors and a "home position tab" to be detected by an "origin detection machine". The signals are processed by a CPU.

US 2012/124848 A1 is concerned with position detection using a code containing absolute position values, that code containing at least one discontinuity, using at least two sensors. This publication does thus not rely on markers to be counted by sensors, but on position values to be directly read and, if necessary, to be corrected for the missing position values in the discontinuities.

US 2012/124849 A1 concerns an angular position determination on a rotating shaft using magnetic markers. There the magnetic markers are applied as an open-ended strip around the shaft, and the ends of the strip are subsequently mechanically joined. The end-joint forms a zone devoid of magnetic markers. In order to detect that zone the markers are arranged near the borders of the end-joint at a spatial frequency (called there "location frequency") which is different from their spatial frequency along the remainder of the strip, such as twice that latter spatial frequency. This allows the linear encoders to detect the proximity of the end-join zone.

WO 2016/146463 A1 concerns the problem of position determination in a belt with magnetic markers wherein the belt's end-joining zone contains unreadable magnetic markers, using two linear encoders. For this purpose this publication uses a reference marker and two associated reference marker detectors which should allow to switch from the first linear encoder to the second one and vice versa, depending on which of the two linear encoders is in the end-joining zone. This publication also discloses a single-pass inkjet printer using such belt.

The present invention aims to provide an improved position determination in belts containing magnetic markers and wherein the belt has an end-joining zone in which the magnetic markers are unreadable for a position determining system.

## SUMMARY

The present invention thus provides a conveyor comprising

a) an endless conveyor belt with a belt periphery, an outer conveying surface, an inner pulley-facing surface, magnetic markers along the entire belt periphery except for one or more blank zone(s) each of a length $L_j$, wherein j is the index of the blank zone, the magnetic markers being arranged in belt travel direction such that in alternating manner the north pole or the south pole of a magnetic marker points to the outer conveying surface, adjacent such north and south poles being spaced apart from each other by a pole pitch DP, producing thereby a periodic magnetic field of a default maximum intensity; wherein in each of said blank zone(s) the magnetic markers are absent or produce a magnetic field of lower maximum intensity than said default maximum intensity;

b) at least 2 position sensing units arranged along the belt periphery and in spatial proximity of the magnetic markers, each one being capable, when the conveyor belt runs in travel direction, of detecting the magnetic field from magnetic markers not being in the blank zone(s) and to produce thereby 1) a sinusoidal voltage signal about the orientation of the magnetic flux density B sensed from the magnetic markers and thus corresponding to the angular position of the position sensing unit with respect to the pattern; and 2) a corresponding cosinusoidal voltage signal corresponding to the angular position of the position sensing unit with respect to the pattern ; wherein among said at least 2 position sensing units there are at least 2 spaced position sensing units of which each spaced position sensing unit is spaced apart from any one of the remaining spaced position sensing units by a peripheral distance in belt travel direction which is greater than any length $L_j$ of any blank zone;

c) means capable of generating a blank zone entering signal when the maximum intensity of the magnetic field detected by a position sensing unit drops, or is about to drop, down to or below a threshold intensity lower than said default maximum intensity, and means capable of generating a blank zone leaving signal for that position sensing unit when the maximum intensity of the magnetic field detected by that same position sensing unit rises, or has risen, to or above said threshold intensity;

d) a control unit that derives, when the conveyor belt runs in travel direction, belt position information from the sinusoidal and cosinuosoidal voltage signals of all position sensing units, provided that the control unit disregards the sinusoidal and cosinusoidal voltage signals from any position sensing unit as from the time point that it receives said blank zone entering signal for that position sensing unit and re-considers the sinusoidal and cosinusoidal voltage signals of that position sensing unit as from the time point that it receives said blank zone leaving signal for that position sensing unit.

Preferred embodiments of the inventive conveyor are according to the dependent claims.

The invention also provides a single pass or multipass inkjet printer comprising the inventive conveyor.

BRIEF DESCRIPTION OF THE FIGURES

Fig. 1 shows a preferred embodiment of a position sensing unit as used in the instant invention;
Figs. 2, 3 and 4 show two embodiments of the conveyor of the invention;
Fig. 5 schematically show the construction of a preferred embodiment of the control unit as used in the instant invention;

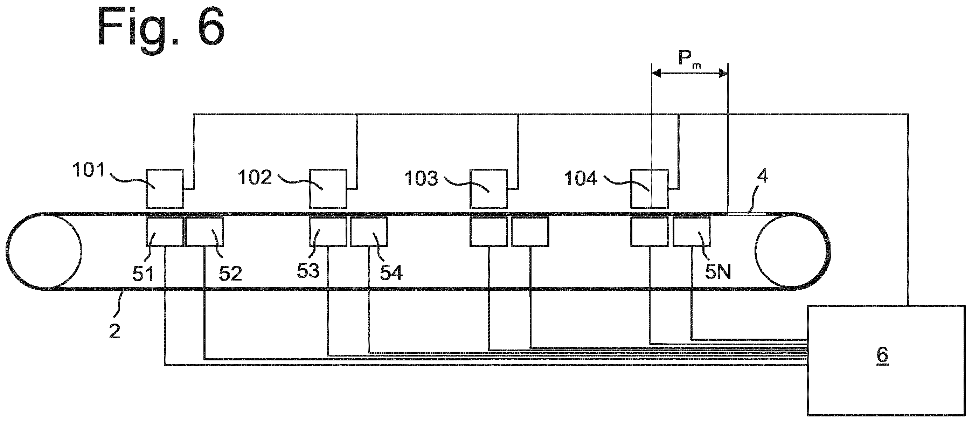

Fig. 6 shows a schematic view of a printer comprising the conveyor of the invention;
Fig. 7 shows results of a synchronisation test using a conveyor of the invention, with respect to a prior art conveyor wherein position determination is done with a commercial linear encoder; and
Fig.8 shows the results of a phase error correction on cosinusiodal and sinusoidal input signals containing a phase error in between them.

DETAILED DESCRIPTION OF THE INVENTION

For the purposes of the invention the following definitions apply:

The "periphery" of the endless belt essentially corresponds to the longitudinal length of the open-ended belt or tape from which the endless belt was made by end-joining. The periphery of the endless belt typically runs along the "pitch line" or "neutral line" of the endless belt, that is, the line internal to the endless belt that does not change length when the endless belt is in use and is bent over pulleys. The term "periphery" shall refer, as customary in the art, to both a physical peripheral lateral edge of the endless belt and to the associated length L of such peripheral lateral edge. The end-joining to make the belt or tape endless is typically done as the last step and is as such customary, using a hot-press and optionally a hot-melt adhesive.

The "magnetic markers" suitable for the invention form a pattern of alternating north/south poles when seen from the one side of the belt. From the other side of the belt the pattern of magnetic poles is inverted, because for each north pole on the one side there is one south pole on the other side. The distance between the magnetic flux density maxima of adjacent north/south poles is half the period length of the magnetic marker pattern and is commonly designated as "pole pitch". If a magnetic detection device is moved along the path of alternating north and south poles and detects their magnetic field from a certain distance then the detected signal does not have a near-rectangular shape but rather a sinusoid shape.

For the purposes of the invention this pole pitch is designated as DP. Although any value of DP is possible for the purposes of the invention it is preferred that DP is in the range of about 0.5 to about 10 mm; and more preferably that DP is about 0.5 mm, about 1 mm, about 2 mm, about 2.5 mm, about 5 mm or about 10 mm. The term "about" does not imply a variability in the nominal value of DP itself but reflects a variability due to the elongation or contraction of the conveyor belt comprised in the inventive conveyor during operation. The DP may thus deviate by up to +2% over its respective nominal value by said conveyor belt elongation and may thus deviate by up to -2% below its respective nominal value by said conveyor belt contraction; these deviations being suitable as a definition for the term "about" used here.

The pattern of magnetic markers is preferably essentially periodic in direction of the belt travel. "Essentially periodic" preferably means that the standard deviation of the geometric dimensions of the magnetic markers (such as their length in belt direction, their width transversal to the belt travel direction and/or their thickness in belt thickness direction) and/or the standard deviation of the magnetic flux density B they produce at a given constant distance in belt thickness direction from the belt surface does not exceed 50% of the average value of the geometric dimension in question or of said average magnetic flux density, respectively. More preferably "essentially periodic" means that said standard deviation(s) do(es) not exceed 10% of the respective average value(s). Most preferably, "essentially periodic" is periodic.

A "blank zone" is a zone on the conveyor belt wherein the magnetic markers are absent, destroyed, erased or have a lower magnetic flux density B with respect to the default maximum magnetic flux density B that magnetic markers outside of any such blank zone produce by default. A typical example of a blank zone in the foregoing sense is the end-joining zone of the conveyor belt, in which end-joining zone the magnetic markers have been damaged or destroyed by the action of heat and pressure during the end-joining process. Another example of a blank zone is a zone wherein the magnetic markers have been identified as defective and wherein all such defective markers have been deliberately erased to make clear for the position sensing units that position information is not to be derived therefrom. The conveyor belt used in the invention may comprise one or more such blank zones; typically it may comprise exactly one such blank zone in the form of said end-joining zone.

A "Hall sensor" detects the magnetic flux density B over the Hall effect and produces an output voltage typically proportional to B.

A "magnetoresistive sensor" detects the direction (inclination) of the magnetic flux density B with respect to the direction of the pattern of magnetic markers in the conveyor belt, and thus with respect to the conveyor belt's travel direction, by means of anisotropic magnetoresistance (AMR), giant magnetoresistance (GMR) or tunnel magnetoresistance (TMR), preferably for the purposes of the invention by AMR. In the case of an AMR sensor the resistivity $\rho(\alpha)$ of the magnetoresistive material depends on the angle $\alpha$ between the direction of current flow I in the magnetoresistive material (which remains constant within the AMR sensor) and the direction of the magnetic flow density B (which varies depending on the position of the AMR sensor with respect to the magnetic marker pattern) and is preferably given by the formula

$$\rho(\alpha)=\rho_o+(\rho_p-\rho_o)\cos^2(\alpha)$$

wherein $\rho_o$ is the resistivity when B is orthogonal(perpendicular) to I and $\rho_p$ is the resistivity when B is parallel to I, and typically $\rho_o$ is greater than $\rho_p$. In the case of a GMR or TMR sensor the resistance $\rho(\alpha)$ of a thin insulating material sandwiched between a reference layer being magnetized with a fixed reference magnetic field $B_{ref}$ and a free layer which can be magnetized in any direction by an external magnetic field B (which varies depending on the position of the GMR or TMR sensor with respect to the magnetic marker pattern) depends on the angle $\alpha$ between $B_{ref}$ and B and is preferably given by the formula

$$\rho(\alpha)=\rho_p+(\rho_p-\rho_{ap})\cos(\alpha)$$

wherein $\rho_p$ is the resistivity when B and $B_{ref}$ are parallel and $\rho_{ap}$ is the resistivity when B and $B_{ref}$ are antiparallel, and typically $\rho_p$ is minimal and $\rho_{ap}$ is maximal. Magnetoresistive materials for any of AMR, GMR and TMR sensors are known as such in the art.

A "position sensing unit" detects an angular position within the pattern of magnetic markers which preferably is essentially periodic in the foregoing sense. The typical output of a position sensing unit arranged in proximity of the magnetic markers is thus, when the belt runs in travel direction, 1) a sinusoidal voltage signal about the orientation of the magnetic flux density B sensed from the magnetic markers and thus corresponding to the angular position of the position sensing unit with respect to the pattern; and 2) a corresponding cosinusoidal voltage signal corresponding to the angular position of the position sensing unit with respect to the pattern. A position sensing unit in the foregoing sense preferably comprises a first Wheatstone bridge comprising two half bridges, each half bridge being formed from an upper and a lower leg, the upper and lower legs being made of resistors which are magnetoresistive sensors in the foregoing sense, that first Wheatstone bridge being capable of generating said sinusoidal signal; and a second Wheatstone bridge of same construction, that second Wheatstone bridge being capable of generating said cosinsuoidal signal. The two Wheatstone bridges may contain upper and lower legs each made up of several magnetoresistive sensors in the above sense which may be electrically switched in series and/or parallel to each other, but with the spatial orientation being different from each other to allow for correction of errors in the magnetic signal B from the magnetic markers, as known in the art; e.g. when the magnetoresistive sensors are AMR sensors see US 2017/322052 A1. If the magnetoresistive sensors making up the Wheatstone bridge are AMR sensors then said angular position (in radians) is within a full period of $2\pi$ which corresponds to said pole pitch DP, thus half the distance between two adjacent north poles (or two adjacent south poles) of the magnetic marker pattern. If the magnetoresistive sensors making up the Wheatstone bridge are GMR or TMR sensors then said angular position (in radians) is within a full period of $2\pi$ which corresponds to 2DP, thus to the full distance between adjacent north poles (or adjacent south poles) of the magnetic marker pattern. For said first Wheatstone bridge to generate the sinusoidal signal and said second Wheatstone bridge to generate the cosinusoidal signal the following features are preferred:

a) If the magnetoresistive sensors contained in the Wheatstone bridges are AMR sensors:

a1) The upper legs of the first and second half bridges of the first Wheatstone bridge are separated from each other by a full pole pitch, thus a distance DP, and the lower legs of the first and second half bridges are separated from each other by the same distance DP, wherein these distances are measured from the geometric centers of the magnetoresistive sensors making up the legs in question. The same distances apply to the upper legs of the first and second half bridges of the second Wheatstone bridge and to the lower legs of the first and second half bridge of the second Wheatstone bridge;

a2) the first and second Wheatstone bridge are spaced apart from each other by a spacing distance which is a quarter of the pole pitch of the magnetic markers in the belt, thus DP/4, wherein that spacing distance is measured from the geometrc center of the magnetoresistive sensor of the lower leg of the first half bridge of the first Wheatstone bridge to the geometric center of the magnetoresistive sensor of the lower leg of the first half bridge of the second Wheatstone bridge.

b) If the magnetoresistive sensors contained in the Wheatstone bridges are GMR or TMR sensors:

b1) as above a1);

b2) as above a2) except that the spacing distance between first and second Wheatstone bridges is half of the pole pitch of the magnetic markers in the belt, thus DP/2.

If these features are fulfilled then, when the position sensing unit is arranged near, or in spatial proximity of, the magnetic markers pattern in the belt in such a way that the direction of the magnetic marker pattern, and thus the belt travel direction, is parallel to said spacing distance, and the conveyor belt runs in said travel direction, the first Wheatstone bridge generates as a difference voltage between its midpoints, a sinusoidal voltage signal with given magnitude, and the second Wheatstone bridge generates as difference voltage between its midpoints the corresponding cosinusoidal voltage signal thereof with same magnitude within experimental error.

Such a position sensing unit however preferably comprises a first pair of Wheatstone bridges as described above and being spaced apart from each other by said spacing distance so as to generate from these a sinusoidal and a corresponding cosinusoidal signal, and also comprises a second pair of Wheatstone bridges as describe above and being again spaced apart from each other by said spacing distance so as to generate from the pattern of alternating north and south magnetic poles again a sinusoidal and a corresponding cosinusoidal signal. The two pairs of Wheatstone bridges in turn are separated from each other by a full DP, wherein that separation is measured from the geometric center of the magnetoresistive sensor of the lower leg of the first half bridge of the first Wheatstone bridge of the first pair of Wheatstone bridges to the geometric center of the magnetoresistive sensor of the lower leg of the first half bridge of the first Wheatstone bridge of the second pair of Wheatstone bridges. Furthermore one of the pairs of Wheatstone bridges has a power supply the polarity of which is inverted with respect to the polarity of the power supply of the other pair of Wheatstone bridges. The consequence of the combination of spacing of exactly DP between the two pairs of Wheatstone bridges and of the inverted polarity of their power supplies causes the magnetoresistive sensors of the second pair of Wheatstone bridges to detect a purported magnetic north pole when they actually are over a magnetic south pole, simultaneously when the magnetoresistive sensors of the first pair of Wheatstone brigdes are over, and detect, an actual magnetic north pole, and vice versa. Likewise the magnetoresistive sensors of the second pair of Wheatstone bridges detect a purported magnetic south pole when they actually are over a magnetic north pole, simultaneously when the magnetoresistive sensors of the first pair are, and detect, an actual magnetic south pole, and vice versa. Analogous considerations can be made for the magnetoresistive sensors of the first pair and the magnetoresistive sensors of the second pair. Summing, and optionally averaging, the signals from the first Wheatstone bridge of the first pair of Wheatstone bridges and the signal from the first Wheatstone bridge of the second pair of Wheatstone brigdes may remove systematic differences in magnetic flux density B and/or spatial dimension between magnetic north and south poles, to give a summed, or averaged, sinusoidal (respective cosinusoidal) signal. Analogously summing, and optionally averaging, the signals from the second Wheatstone bridge of the first pair of Wheatstone brigdes and the signal from the second Wheatstone bridge of the second pair of Wheatstone brigdes may again remove systematic differences in magnetic flux density B and/or spatial dimension between north and south poles, to give a summed, or averaged, corresponding cosinusoidal (respective corresponding sinusoidal) signal.

For the purposes of the invention a "sinusoidal signal" refers to an analog signal S (before conversion in an ADC to digital signal) with units typically of Volts or Ampères which can be represented as a discrete Fourier spectrum in time of the formula

$$S = C + A_1 \sin(\omega t + \gamma_1) + \sum_{i=2}^{N} A_i \sin(i\omega t + \gamma_i)$$

wherein C, $A_1$ and $A_i$ (with i=2,3,...N) are constants with same unit as S, $\varphi = 2\pi f$ is in units of 1/s and is the basic angular velocity of the Fourier spectrum, $\gamma_1$ and $\gamma_i$ (with i=2,3,...N) are in radians and are angular offsets, and N is a maximum integer which theoretically may be up to infinity but in reality is typically in the range of 10 to 100, and more precisely is e.g. 10, 20, 50 or 100. In this definition the magnitude of $A_1$ is at least 2 times, preferably at least 10 times and more preferably at least 20 times the magnitude of any of the coefficients $A_i$; and/or the $\gamma_1$ and $\gamma_i$ (with i=2,3,...N) are all equal within experimental error. Most preferably $S = C + A_1 \sin(\omega_t + \gamma_1)$ within experimental error. A corresponding "cosinusoidal signal" is understood as an analog signal also conforming to the above formulae, explanations and definitions, with the proviso that to any $\gamma_1$ and $\gamma_i$ (with i=2,3,...N) a extra offset is added. This extra offset would in theory be exactly $+\pi/2$ to represent an exact shift from sine to cosine, in reality the extra offset may deviate from $+\pi/2$ by a further small offset of $\pm\alpha$. This is one reason for the need of error correction (see below).

The conveyor of the invention also comprises means capable of generating a blank zone entering signal when the maximum intensity of the magnetic field detected by a position sensing unit drops, or is about to drop, down to or below a threshold intensity lower than said default maximum intensity, telling the control unit to start disregarding the position signal of that position sensing unit.

The blank zone entering signal may be derived from the falling intensity of the magnetic signals detected by the position sensing units themselves, once they enter a blank zone. This is an example of means that are capable of generating a blank zone entering signal when the maximum intensity of the magnetic field detected by a position sensing unit drops down to or below a threshold intensity.

Preferably in view of position accuracy however there are extra means capable of generating such blank zone entering signals and which are arranged upstream with respect to a corresponding downstream position sensing unit such that the upstream extra means produces the blank zone entering signal before that corresponding downstream position sensing unit itself enters the blank zone. This is an example of means that are capable of generating a blank zone entering signal when the maximum intensity of the magnetic field detected by a position sensing unit is about to drop down to or below a threshold intensity.

For such extra means capable of generating a blank zone entering signal when entering a blank zone the term "start signalling means" is also used herein. These extra means capable of generating a blank zone entering signal when entering a blank zone, or start signalling means, typically are Hall sensors in the foregoing sense.

The conveyor of the invention furthermore may either comprise in addition to each start signalling means, a corresponding timer for allowing to elapse a time period after which elapse a blank zone leaving signal is produced, following which the position signal of the position sensing unit is reconsidered by the control unit (embodiment A). If the blank zone entering signal is generated by the position sensing units themselves (embodiment A1) then this time period t fulfills the inequality

$$\frac{L}{v} < t < \frac{D_u + L}{v}$$

wherein L is a length which is greater than the greatest length of any blank zone present on the belt; and $D_u$ is the distance from the end of said blank zone in question to the start of the next blank zone upstream (with respect to the travel direction of the belt) of said blank zone in question. If there is only one blank zone then said "blank zone in question" and said "next blank zone upstream" refer to one and the same blank zone and $D_u$ refers to the entire belt periphery except the length of the sole blank zone present. It is recalled that the belt in the inventive conveyor is endless and distances are actually peripheral distances around the belt loop. Alternatively, if the blank zone entering signal is generated by said upstream start signalling means (embodiment A2), then said timer period fulfills the inequality

$$\frac{L + D_m}{v} < t < \frac{D_u + L}{v}$$

wherein $D_m$ is the distance between the upstream start signalling means and the associated downstream position sensing unit and all other symbols have the same meaning as for the above inequality.

The conveyor of the invention alternatively may furthermore comprise in addition to each means capable of generating a blank zone entering signal corresponding extra means capable of generating a blank zone leaving signal when exiting a blank zone (embodiment B). These means capable of generating a blank zone leaving signal may be the position sensing units themselves, in which case they are an example of means that are capable of generating a blank zone leaving signal when the maximum intensity of the magnetic field detected by a position sensing unit rises to or above said threshold intensity. Alternatively there may be extra means capable of generating a blank zone leaving signal when exiting a blank zone, each such extra means being arranged downstream with respect to a corresponding upstream position sensing unit such that the downstream extra means produces the blank zone leaving signal after that corresponding upstream position sensing unit has left the blank zone. This is an example of means that are capable of generating a blank zone leaving signal when the maximum intensity of the magnetic field detected by a position sensing unit has risen to or above said threshold intensity. Extra means capable of generating a blank zone leaving signal when exiting a blank zone are called herein "end signalling means". The control unit starts to reconsider the position information from a given position sensing unit as from the time it receives from the corresponding end signalling means a blank zone leaving signal.

If the blank zone entering signals are generated by the position sensing units themselves then preferably the blank zone leaving signals are also generated by the position sensing units themselves (embodiment B1). These position sensing units are then also examples of means capable of generating a blank zone leaving signal when the maximum intensity of the magnetic field detected by that same position sensing unit rises to or above said threshold intensity.

However if the blank zone entering signals are generated by start signalling means, such as Hall sensors, then preferably the blank zone leaving signals are also generated by end signalling means, such as Hall sensors (embodiment B2), or the said extra means are capable of generating both blank zone entering signals and blank zone leaving signals (embodiment B3). Extra means capable of generating a blank zone entering signal when entering a blank zone and capable of generating a blank zone laving signal when leaving a blank zone are called herein "start/end signalling means".

A conveyor of the invention capable of detecting both the start and the end of blank zones (such as in embodiments B, B1, B2, B3) is preferred. More preferred is a conveyor of the invention comprising both start signalling means and end signalling means means for this purpose, in particular where both start and end signalling means are Hall sensors (such as embodiment B2).

If detection of the start and end of blank zones is done by the position sensing units themselves (above embodiment B1) then each position sensing unit will produce its own blank zone entering signal when it enters a blank zone (as detectable by weakening or disappearing magnetic signal) and will produce its own blank zone leaving signal when it leaves that blank zone (as detectable by reappearing or re-increasing magnetic signal). The control unit will disregard the position signal from any position sensing unit in the time period between receipt of its blank zone entering signal and receipt of its blank zone leaving signal. Here among all position sensing units that are present there are typically at least two position sensing units, preferably at least three position sensing units (not necessarily but preferably being adjacent to each other) of which any two are pairwise spaced apart from each other by a distance which is greater than the greatest length of any blank zone present on the belt. Position sensing units fulfilling this condition are termed "spaced position sensing units" throughout this application.

If the conveyor of the invention comprises start signalling means and end signalling means, in particular where both these start and end signalling means are Hall sensors (above embodiment B2) then there are for each position sensing unit one such start signalling means and one such end signalling means, wherein each start signalling means is upstream of one corresponding position sensing unit and each end signalling means is downstream thereof, such that start and end signalling means sandwich between them the corresponding position sensing unit. For at least the mandatory at least two spaced position sensing units of which each one is spaced apart from any one of the remaining spaced position sensing units by a peripheral distance in belt travel direction which is greater than any length $L_j$ of any blank zone, each of these spaced position sensing units also being with associated start and end signalling means, any pair of two (not necessarily but preferably adjacent to each other) upstream and downstream spaced position sensing units furthermore preferably has the end signalling means of the paired upstream position sensing unit spaced apart from the start signalling means of the paired downstream position sensing unit by distance L which is greater than the greatest length $L_j$ of any blank zone present on the belt which ensures that always at least one of the paired position sensing units is outside of any of the blank zones present on the conveyor belt. The distance by which the paired upstream and downstream position sensing units themselves are spaced apart from each other is then even greater than said distance L. The control unit disregards the position information from a given position sensing unit as from the time it receives the blank zone entering signal from the corresponding start signalling means (when that corresponding first extra means enters the blank zone) and starts to re-consider the position information of that position sensing unit as from the time it receives from the associated end signalling means the blank zone leaving signal (when that corresponding end signalling means leaves the blank zone). This embodiment B2 is considered the most preferred.

If the conveyor of the invention comprises start/end signalling means, in particular where the start/end signalling means are Hall sensors (above embodiment B3) then there may be for each position sensing unit exactly one start/end signalling means, wherein the position sensing units and start/end signalling means are arranged in alternating manner in the conveyor belt's longitudinal, or belt travel, direction, along the belt periphery, and each position sensing unit is sandwiched between two adjacent start/end signalling means. Also there are at least two spaced position sensing units, preferably at least three spaced positions sensing units of which any pair of two (not necessarily but preferably adjacent to each other) upstream and downstream position sensing units are spaced apart from each other by distance $L_1$ which is greater than the greatest length of any blank zone present on the belt. In this embodiment B3 either each start/end signalling means generates the blank zone entering signal for a position sensing unit that is downstream of (and not necessarily but preferably adjacent to) said start/end signalling means (when the start/end signalling means enters a blank zone) and the start/end signalling means generates the blank zone leaving signal for that same position sensing unit when that start/end signalling means leaves that blank zone.

Within embodiment B3, as embodiment B31, the control unit disregards the position information from a given position sensing unit as from the time it receives the blank zone entering signal from the corresponding upstream start/end signalling means (when that corresponding start/end signalling means enters the blank zone) and starts to re-consider the position information of that position sensing unit as from the time it receives from the corresponding downstream start/end signalling means the blank zone leaving signal (when that corresponding start/end signalling means leaves the blank zone). This embodiment, B31, is similar to above embodiment B2 except that there are start/end signalling means instead of separate start signalling means and end signalling means.

Alternatively within embodiment B3, in embodiment B32, there is one first start signalling means which is upstream of all position sensing units and is capable of generating a blank zone entering signal for a downstream (and not necessarily but preferably adjacent) position sensing unit when entering a blank zone; one second start signalling means which is downstream of all position sensing units, the blank zone entering signal produced by that start signalling means when entering a blank zone being used (interpreted) as a blank zone leaving signal for an upstream (and not necessarily but preferably adjacent) position sensing unit, and further start signalling means the number of which being one less than the number of position sensing units, and each such further start signalling means means being sandwiched between an upstream (and not necessarily but preferably adjacent) position sensing unit and a downstream (and not necessarily but preferably adjacent) position sensing unit; and the blank zone entering signal generated by each such further start signalling means being used (interpreted) as a blank zone entering signal for said downstream (and not necessarily but preferably adjacent) position sensing unit and being used (interpreted) as a blank zone leaving signal for said upstream (and not necessarily but preferably adjacent) position sensing unit. In this embodiment B32 the distance $L_m$ by which any of the said further start signalling means is separated from the corresponding upstream position sensing unit for which it produces a blank zone entering signal (used/interpreted blank zone leaving signal) is greater than the greatest length of any blank zone present on the conveyor belt. Also the distance $L_n$ by which said second start signalling means is separated from the adjacent upstream position sensing unit for which it produces a blank zone entering (used/interpreted blank zone leaving) signal is also greater than the greatest length of any blank zone present on the conveyor belt. In this embodiment B32 the control unit disregards the position information from the most upstream position sensing unit as from the time it receives the blank zone entering signal from the said first start signalling means, when that first start signalling means enters a blank zone, disregards the position information from any of the other position sensing units as from the time it receives the blank zone entering signal from a further start signalling means which is upstream (and not necessarily but preferably adjacent) to that position sensing unit, when that further start signalling means enters a blank zone, re-considers the signal of the most downstream position sensing unit as from the time it receives the blank zone entering (used/interpreted blank zone leaving) signal from the said second start signalling means means, and re-considers the position information from any of the other position sensing units as from the time it receives the blank zone entering (used/interpreted blank zone leaving) signal from the further start signalling means which is downstream (and not necessarily but preferably adjacent) to that position sensing unit.

In any embodiment of the inventive conveyor where generation of the blank zone entering and/or blank zone leaving signals is done by the position sensing units themselves (such as in above embodiments A1 and B1) the blank zone entering and/or blank zone leaving signals may also be derived from a phasor (= sum of squares) of the sinusoidal and cosinusoidal signals of the position sensing units, or from a square root of that sum. That sum of squares is also within experimental error constant, and the square root thereof is equal within experimental error to the default maximum intensity of the sinusoidal and cosinusoidal signals. However in the case where one of the two magnetoresistive sensors of the position sensing unit enters said blank zone of the belt and thus generates a signal with reduced amplitude, said sum of the squares of the two signals, or square root thereof, drops significantly below that default intensity. If such a significant intensity drop occurs, such as typically down to 0.4 to 0.9 times of said default intensity, then this is indicative of the position sensing unit entering a blank zone and triggers the generation of said blank zone entering signal. On the other hand, if the intensity of the sum of the squares of the two signals, or of the square root thereof, rises again to more than 0.9 times or essentially 1.0 times of said default intensity then this is indicative of both magnetoresistive sensors of the position sensing unit being again outside the blank zone, and this triggers the generation of said blank zone leaving signal.

Analogously in any embodiment of the inventive conveyor where generation of the blank zone entering and blank zone leaving signals is done by extra means, such as Hall sensors, and each position sensing unit is sandwiched between two such extra means (such as in above embodiments B2, B3, B31 and B32) the above phasor may also be obtained from the signals of two extra means which sandwich between them a position sensing unit. The evaluation of the blank zone entering and blank zone leaving signals from the decrease and re-increase of the phasor, respectively, is as explained above. The sandwiching start signalling means and end signalling means (embodiment B2), the sandwiching start/end signalling means (embodiment B31), or the sandwiching start signalling means (embodiment B32) are spaced apart from each other by a distance LH which is given by

$$LH = (2N + 0.5) \times DP$$

wherein N is a positive integer of at least 0 and DP is as defined above, provided that N is large enough to accomodate for the position sensing unit that is sandwiched in between. The intensities of the signals of the sandwiching start signalling means and end signalling means (embodiment B2), the sandwiching start/end signalling means (embodiment B31), or the sandwiching start signalling means (embodiment B32), respectively, are in consideration of the above defined spacing LH again a sinusoidal and a corresponding cosinusoidal signal that allow the said phasor (sum of the squares of their intensities) to be formed therefrom. With any such phasor-derived blank zone entering and blank zone leaving signals the control unit disregards the position information of any position sensing unit as from the time it receives a phasor derived blank zone entering signal from the phasor-generating extra means that sandwich that position unit and reconsiders the position information of that position sensing unit as from the time it receives a phasor derived blank zone leaving signal from the phasor-generating extra means that sandwich that position unit.

In all embodiments of the conveyor of the invention all position sensing units and, if present, all extra means capable of producing a blank zone entering signal or capable of producing a blank zone leaving signal, are preferably arranged near, or atop of, or below, a portion of the conveyor belt's periphery that is not bent over, or is not in contact with, a pulley.

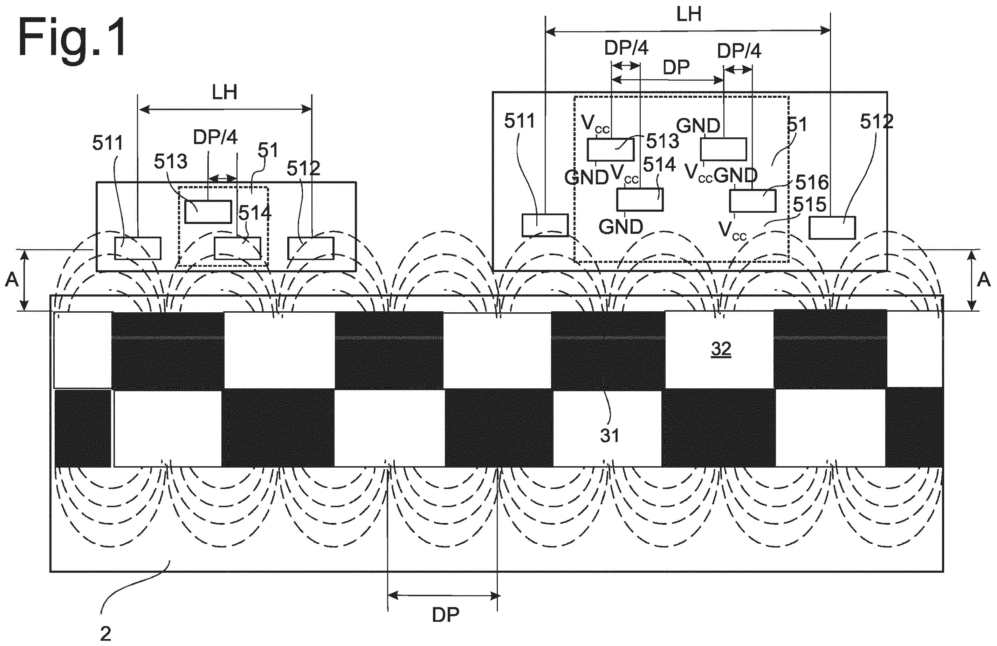

A position sensing unit suitable for above most preferred embodiment B2 (whether using phasor-derived blank zone entering and leaving signals, or not) may comprise said start signalling means and said end signalling means as a combined unit, optionally even in one and the same housing, as shown in the left or right parts of Fig.1. The combined unit depicted in the left part of Fig.1 comprises the start signalling means and end signalling means 511 resp. 512, such as in the form of two Hall sensors, and the two Wheatstone bridges 513,514 (wherein the legs are made up of resistors which are AMR sensors) of the position sensing unit 51 in a spatial arrangement such that the start signalling means 511, such as a Hall sensor, is on the outside of the first Wheatstone bridge 513 and the end signalling means, 512, such as a Hall sensor, is on the outside of the second Wheatstone bridge 514, such that the start signalling means 511 and the end signalling means 512 sandwich in between them the Wheatstone bridges 513,514 and form a row-like arrangement of start signalling means 511, such as Hall sensor / first Wheatstone bridge 513 / second Wheatstone bridge 514 / end signalling means 512, such as Hall sensor. The two Wheatstone bridges 513,514 are shown in a vertically staggered arrangement to allow for a correctly shown to-scale spacing apart by DP/4, to allow by that spacing for generation of sinusoidal and cosinusoidal signals therefrom. This staggering als symbolically represents a spatial intertangling of the legs of the first Wheatstone bridge 513 with the legs of the second Wheatstone bridge which also is advantageous for generation of sinusoidal and cosinusoidal signals therefrom. When such a combined unit having said row arrangement is aligned such that said row is parallel to the belt travel direction, the belt is traveling in its travel direction and said start signalling means is upstream with respect to the belt travel direction, then the start signalling means 511 will be the first of the four sensors to detect the start of the end-joining zone of the belt and will thus produce said blank zone entering signal already before any of the two Wheatstone bridges 513,514 enters that blank zone, whereas the end signalling means 512 that is downstream with respect to the belt travel direction will be the last of the four sensors to detect the end of the blank zone of the belt and will thus produce said blank zone leaving signal only after each of the two Wheatstone bridges 513,514 has left that blank zone. The blank zone entering signal is either directly formed from the decreasing signal of said start signalling means entering the blank zone, or from a phasor formed from the sum of the square of the signal intensities of the start and end signalling means 511,512, or a square root of that sum, which is also sinusoidal and cosinusoidal if the distance **LH** shown in the left part of Fig.1 between them is calculated according to the above formula. Analogously the blank zone leaving signal is either directly formed from the re-increasing signal of said end signalling means 512 leaving the blank zone, or from the re-increasing phasor formed from the signals of the start and end signalling means 511,512 which is also sinusoidal and cosinusoidal if the distance **LH** shown in the left part of Fig.1 between them is calculated according to the above formula. In either way, whether directly or by phasor formation, it is ensured that the sinusoidal and cosinusoidal signals from the two magnetoresistive sensors 513,514 forming the position sensing unit are only considered by the control unit when they represent useful positional information.

A further position sensing unit suitable for above most preferred embodiment B2 (whether using phasor-derived blank zone entering and leaving signals, or not) also comprising said start and end signalling means as a combined unit, optionally even in one and the same housing, is shown in the right part of Fig.1. This embodiment of a combined unit however comprises in its position sensing unit 51 a first pair of Wheatstone bridges 513,514 and a second pair of Wheatstone bridges 515,516 (wherein the legs are again made up of resistors which are AMR sensors), wherein two Wheatstone bridges of each pair are again shown in a vertically staggered arrangement (see corresponding explanation of the left part of Fig.1). The first and second pairs of Wheatstone bridges are separated from each other by a full DP and one of the pairs of Wheatstone bridges (513,514) has a power supply the polarity of which (VCC vs. GND) is inverted with respect to the polarity (GND vs. VCC) of the power supply of the other pair of Wheatstone bridges (515,516). The purpose of such full DP spacing between the pairs of Wheatstone bridges and of inverted power supply polarity is as explained above in the general definition of the position sensing unit. The purpose and meaning of the spacing LH bewteen the start signalling means 511 and the end signalling means 512, such as Hall sensors, and the remaining explanations are as made above for the left part of Fig.1.

In order to generate said phasors the conveyor of the unit then preferably also comprises an analog or digital circuit. In an analog ciruitry the two squares may typically be formed with two customary analog multipliers; the summing of the two squares may typically be with a customary summing operational amplifier.For comparing said sum of squares or a square root thereof with a threshold voltage, which again may be typically be 0.4 to 0.9 times of said constant intensity, and in order to decide about whether to generate said blank zone entering signal or said blank zone leaving signal the analog circuitry may typically also comprise a comparator. A digital circuitry for performing the phasor calculations and doing the comparison with said threshold may typically form part of the control unit and may be programmed by software.

The inventive conveyor preferably comprises at least 3 position sensing units, more preferably 3 to 16 position sensing units or still more preferably 4 to 8 or 4 to 16 position sensing units, and then preferably relies on the position information derived from at least two position sensing units for error correction. In this case at any time during belt travel there are at least two such position sensing units that are not in a blank zone of the belt. In order to ensure this there are at least 3 spaced position sensing units of which each one is spaced apart from any one of the remaining ones by a peripheral distance in belt travel direction which is greater than the greatest $L_j$ of any of the blank zones present in the conveyor belt, that is, if any of these at least 3 position sensing units is designated with an index i and any one of the remaining ones is designated with an index k (i and k being from 1 to N, and i and k being different from each other), then the associated peripheral distance between them, designated as $L_{ik}$ and measured as a magnitude

$$L_{ik} = \left| (t_i - t_k) \times v \right|$$

(wherein $t_i$ and $t_j$ are the time when the i-th and j-th position sensing unit, respectively, (or the associated i-th and j-th start signalling means) produces a blank zone entering signal and v is as defined above), is greater than said greatest $L_j$; wherein $L_j$ is measured as described above.

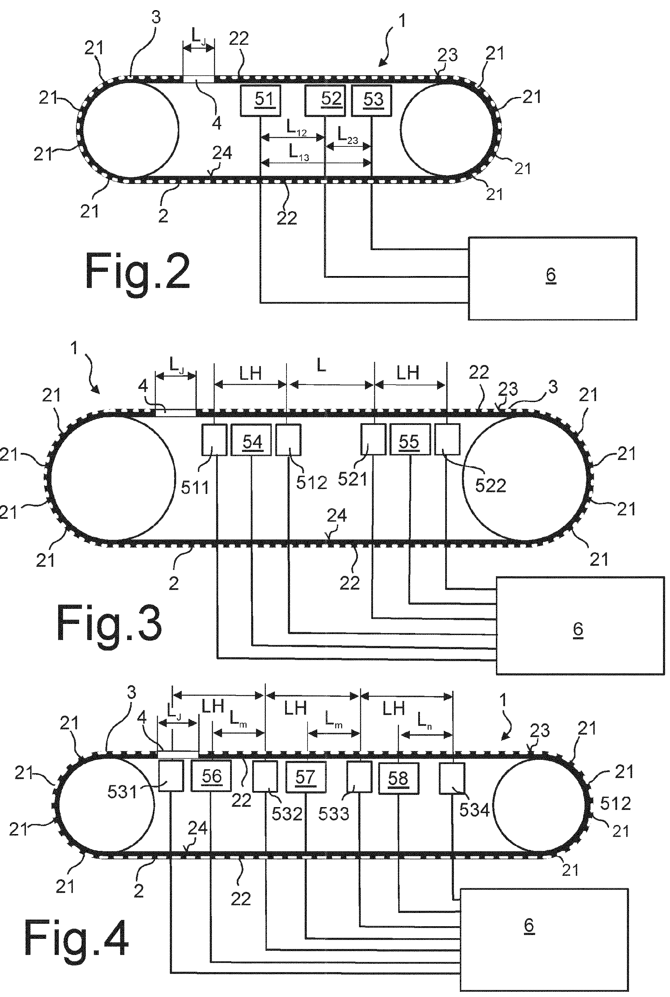

Fig.2 shows an implementation of above embodiment A1 or B1 of the conveyor 1 of the invention. It comprises an endless conveyor belt 2 having a periphery composed of portions 21 that are bent over pulleys and portions 22 thereof that are not bent over pulleys and which may be straight (as shown in the figure) or which may be convexly bent, e.g. by using an appropriately bent support. The travel (looping) direction of the belt would in this example be clockwise. This embodiment does not use any extra means for detection of the entering of a blank zone 4; it instead uses the signal information provided by the position sensing units 51,52,53 themselves as means for generation the blank zone entering signals. For generation of the corresponding blank zone leaving signal it may either comprise suited timers (see the explanations for above embodiment A1) or it may generate corresponding blank zone leaving signals from the position sensing units 51,52,53 themselves (see the explanations for above embodiment B1), in the latter case such as by the above explained phasor calculation from the sinusoidal and cosinusoidal signals thereof. The alternating, preferably essentially periodic pattern of magnetic markers 3 runs along the entire periphery of the belt 2 (portions thereof bent over pulleys, 21, and portions thereof not bent over pulleys, 22), except for a blank zone 4 which may be the end-joining zone of the conveyor belt 2. In this blank zone the markers produce a magnetic field with less than default maximum intensity (as would be produced by the magnetic markers 3 outside the blank zone) or, as shown in the figure, are totally eradicated. The 3 position sensing units are designated with numerals 51,52,53. The pairwise spacing distances $L_{12}$, $L_{13}$ and $L_{23}$ between any two of these three spacing units are each greater than the length $L_j$ of the sole blank zone. By fulfilling this requirement it does not matter which one of the three position sensing units is in the blank zone 4 and which can thus not produce a useful position signal: There are the two other position sensing units that are not in the blank zone 4, so that the control unit 6 can always rely on the position information received from at least two of the position sensing units.

The "length $L_j$" of any of the belt's blank zones is defined for the purposes of the invention, when the belt moves in the belt's travel direction, as

$$L_j = (t_2 - t_1) \times v$$

wherein $t_1$-$t_2$ is the time period between blank zone entering signal and corresponding blank zone leaving signal, wherein either, as applicable, both blank zone entering signal and corresponding blank zone leaving signal are produced by one and the same position sensing unit as defined above; or the blank zone entering signal is produced by a start signalling means as defined above and the corresponding blank zone leaving signal is produced by an end signalling means as defined above; or the blank zone entering signal is produced by one upstream start signalling means and the corresponding blank zone leaving signal is a blank zone entering signal produced by an adjacent downstream start signalling means but which is used (interpreted) as a blank zone leaving signal, wherein "upstream" and "downstream" relate to the belt travel direction; or the blank zone entering and leaving signals are derived from phasors as described above , and v is the belt speed.

Fig. 3 shows a further embodiment of the conveyor 1 of the invention according to most preferred embodiment B2, with only 2 position sensing units 54,55, and with start signalling means 511 and end signalling means 512, such as Hall sensors, for detecting the entrance and leaving of the first position sensing unit 54 of a blank zone 4, and with start signalling means 521 and end signalling means 522, such as Hall sensors, for detecting the entrance and leaving of the second position sensing unit 55 of the blank zone 4. The travel (looping) direction of the belt would in this example again be clockwise. The start signalling means 511,521 may generate the blank zone entering signal for the first and second position sensing units 54,55, respectively, when entering the blank zone 4, and the end signalling means 512,522 may generate the blank zone leaving signals for the first and second position sensing units 54,55, respectively, when leaving the blank zone 4. Alternatively the start and end signalling means 511,512 may together generate such blank zone entering and leaving signals for the first position sensing unit 54 using above explained phasor calculation and the start and end signalling means 521,522 may together generate such blank zone entering and leaving signals for the second position sensing unit 55 using above explained phasor calculation. For this phasor calculating alternative the spacing **LH** between the start and end signalling means 511,512 and between the start and end signalling means 521,522 is again such that it fulfills the above equation for the **LH** calculation, The end signalling means 512 of the upstream position sensing unit 54 is spaced apart from the start signalling means 521 of the downstream position sensing unit 55 by a distance L which is greater than the length $L_j$ of the sole blank zone 4 present on the conveyor belt 2. The distance by which the upstream, 54, and downstream, 55, position sensing units themselves are spaced apart from each other is then even greater than said distance L. The remaining parts and associated numerals are as shown in and described for Fig.2.Fig. 4 shows a further embodiment of the conveyor 1 of the invention according to above embodiment B32. The travel (looping) direction of the conveyor belt 2 would in this example again be clockwise. There is one first start signalling means 531, such as a Hall sensor, which is upstream of all position sensing units and is capable of generating a blank zone entering signal for a downstream (and not necessarily but preferably adjacent) position sensing unit 56 when entering the blank zone 4 of length $L_j$, one second start signalling means 534, such as a Hall sensor, which is downstream of all position sensing units and is capable of generating a blank zone entering (used/intepreted blank zone leaving) signal for an upstream (and not necessarily but preferably adjacent) position sensing unit 57, when entering the blank zone 4, and two further start signalling means, 532 resp. 533, such as Hall sensors, which are capable of generating a blank zone entering signal for a respective downstream and adjacent position sensing unit, 57 resp. 58, when entering a blank zone 4, which blank zone entering signal is simultaneously also used (intepreted) as a blank zone leaving signal for a respective upstream and adjacent position sensing unit, 56 resp. 57. The number of such further start signalling means 532,533 is thus two, which is one less than the number of position sensing units 56,57,58. Each of the further start signalling means, 532 resp. 533, is sandwiched between a respective upstream (and adjacent) position sensing unit, 56 resp. 57, and a respective downstream (and adjacent) position sensing unit, 57 resp. 58. The distance $L_m$ by which any of the further start signalling means 531,532 is separated from the respective upstream position sensing unit, 56 resp. 57, is greater than the length $L_j$ of the sole blank zone 4 present on the conveyor belt 2. Also the distance $L_n$ by which the second start signalling means 534 is separated from the adjacent upstream position sensing unit 58 is also greater than said $L_j$. The control unit 6 disregards the position information from the most upstream position sensing unit 56 as from the time it receives the blank zone entering signal from the first start signalling means 531, when that first extra means 531 enters the blank zone 4, disregards the position information from the other position sensing units, 57 resp. 58, as from the time it receives the blank zone entering signal from the respective and adjacent upstream start signalling means, 532 resp. 533, re-considers the signal of the most downstream position sensing unit 57 as from the time it receives the blank zone entering (used/interpreted blank zone leaving) signal from the second start signalling means 534, and re-considers the position information from any of the other position sensing units, 56 resp. 57, as from the time it receives the blank zone entering (used/interpreted blank zone leaving) signal from the respective downstream and adjacent further start signalling means, 532 resp. 533. The remaining parts and associated numerals are as shown in and described for Fig.2 and 3.

For the purposes of the invention a length involving an extra means as one of its endpoints is measured, as concerns that endpoint, starting from the geometric centre of the extra means, in particular where such extra means is a Hall sensor, then the geometric centre of the semiconductor layer contained therein is taken. Analogously a length involving a magnetoresistive sensor as one of its endpoints is measured, as concerns that endpoint, starting from the centre of the bridge within the Wheatstone bridge contained therein.

The inventive conveyor comprises at least two, preferably at least three and more preferably a plurality of position sensing units, as discussed above. The output voltages of any position sensing units is preferably converted to a digital information of typically 8 to 16 bits depth using a customary analog-to-digital converter (ADC). This conversion is done irrespective of whether the position sensing unit in question produces a sinusoidal /cosinusoidal voltage signal with default intensity (as long as the position sensing units is near readable magnetic markers) or whether it produces a sinusoidal /cosinuosidal voltage signal of less than default intensity (when the position sensing units is in one of the belt's blank zones). It is the task of the control unit to decide about whether the digital information so produced is to be considered or not, based on the blank zone entering signals and blank zone leaving signals it receives from each of the position sensing units.

The position sensing units, the optional start signalling and end signalling means and the optional start/end signalling means may be arranged such that they are nearer to the conveying surface of the conveyor belt than to its pulley-facing surface, or they may be arranged such that they are nearer to the conveyor belt's pulley-facing surface that to its conveying surface. In either of these two variants, the magnetic markers may be at the conveying surface (not covered by any cover layer), near the conveying surface (e.g. when covered by a top cover layer), embedded in the belt, at the pulley-facing surface (not covered by any bottom layer), or near the pulley-facing surface (e.g. when covered by a bottom cover layer).

The output signals of the position sensing units may be optionally filtered by a low-pass filter in order to remove high-frequent noise therein, before conversion to digital signals with the ADC's.

The output of each ADC is typically an unsigned byte (if the ADC has 8 bit depth). In this case the positive maximum of the sinusoidal and cosinusoidal signals, if they are assumed as ideal, would be near 255, such as 238; the zero point would be at 128; and the negative minimum of the sinusoidal and cosinusoidal signals would be near zero, such as 18. The amplitude of the digitized cosinusoidal and sinusoidal signals would in this case be 110. If the ADC's have 16 bit depth their output is typically an unsigned short integer and the positive maximum of the sinusoidal and cosinusoidal signals, if they are assumed as ideal, would be near 65535, such as 62768; the zero point would be at 32768; and the negative minimum of the sinusoidal and cosinusoidal signals would be near zero, such as 2768. The amplitude of the digitized cosinusoidal and sinusoidal signals would in this case be 30000. The amplitudes of the analog input sinusoidal and cosinusoidal signals are conveniently scaled appropriately before being fed into the ADC's, e.g. by using two op amp instrumentation amplifiers, such that the operational range of 256 (8 bit depth) or 65538 (16 bit depth) of the ADC's is used as far as possible yet without saturating their output. This optimized digital output amplitude of the ADC's, such as the above 110 in the case of a 8 bit depth ADC and the above 30000 in the case of a 16 bit depth ADC, is called in the following the "nominal amplitude A" of the digital signal output of the ADC's.

The control unit performs essentially all subsequent tasks with the digital signals it receives from the ADC's from all position sensing units. The control unit may be software-implemented (thus by an appropriately programmed computer or hardware-implemented (e.g. by a field-programmable gate array FPGA, optionally in combination with a microcontroller).

The mandatory and optional functions of the control unit are described in the following. In this description any references to "$\omega t$" are a product of angular velocity multiplied by time, thus a positional angle (in radians). If a position sensing unit comprises AMR sensors, then that positional angle is within a full period of $2\pi$ which corresponds to the pole pitch DP, thus to half the distance between two adjacent north poles (or two adjacent south poles) of the magnetic marker pattern. Alternatively, if a position sensing unit comprises GMR or TMR sensors then said angular position (in radians) is within a full period of $2\pi$ which corresponds to 2DP, thus to the full distance between two adjacent north poles (or two adjacent south poles) of the magnetic marker pattern. The same assumptions are valid for calculated position angles $\varphi$ and phase shifts $\alpha$ and $\Delta\alpha$ that will be used in the following discussion.

The first mandatory task of the control unit is to disregard the digital signals from any position sensing unit in the time frame between blank zone entering signal and blank zone leaving signal it receives from that position sensing unit. For this the control unit may comprise for each position sensing unit a corresponding flag that it sets to a value indicating "non-consideration" (such as "zero") when the control unit receives from the position sensing unit in question the blank zone entering signal and that it sets to a value indicating "consideration" (such as "one") when the control unit receives from the position sensing unit in question the blank zone leaving signal.

A second, optional but preferred task of the control unit is to process the digital signals from any ADC's (and thus from any associated position sensing units) that it considers, based on the foregoing first task, for removal of phase, offset and amplitude (POA) errors from the digital sinusoidal and cosinusoidal signals from any considered ADC. The two error-loaded input signals from each of the considered ADC's, $\cos_{input}$ and $\sin_{input}$, can be written, even if digitized, within experimental error as follows:

$$\cos_{input} = \left(A + \Delta A_C\right)\left(\cos\left(\omega t - \frac{\alpha}{2}\right) + C\right) + Z \quad (1)$$

$$\sin_{input} = \left(A + \Delta A_S\right)\left(\sin\left(\omega t + \frac{\alpha}{2}\right) + S\right) + Z \quad (2)$$

wherein C and S (dimensionless) designate the offsets, $\Delta A_C$ and $\Delta A_S$ (an integer in units of the ADC) designate the amplitude deviations from the above nominal amplitude A, $\alpha$ (in radians) designates a further phase shift beyond the normal phase shift of $-\pi/2$ of sinusoidal with respect to cosinusoidal signal, and Z (an integer in units of the ADC) designates the zero point of the ADC. When the output of the ADC is in unsigned integers the zero point Z is typically at half the resolution of the ADC, i.e. in the case of an 8-bit ADC it is at $2^7 = 128$ and in the case of a 16-bit ADC it is at $2^{15} = 32768$; when

the output of the ADC is in signed integers Z is typically zero.

The aim of this second optional but preferred task is to generate from the above input signals digital error-corrected cosinusoidal, $\cos_{corr}$, and sinusoidal, $\sin_{corr}$, signals. In the instant invention these digital error-corrected signals are assumed and defined as follows, within experimental error:

$$\cos_{corr} = \frac{1}{G_c}(A + \Delta Ac)\left( \cos\left( \omega t - \frac{\alpha}{2} + \Delta\alpha \right) + C + \frac{Z}{(A + \Delta Ac)} - \Delta C \right) \quad (3a)$$

$$= \frac{1}{G_c}(A + \Delta Ac)\left( \cos\left( \omega t - \frac{\alpha}{2} \right)\cos(\Delta\alpha) - \sin\left( \omega t - \frac{\alpha}{2} \right)\sin(\Delta\alpha) + C + \frac{Z}{(A + \Delta Ac)} - \Delta C \right) \quad (3b)$$

$$\sin_{corr} = \frac{1}{G_s}(A + \Delta As)\left( \sin\left( \omega t + \frac{\alpha}{2} - \Delta\alpha \right) + S + \frac{Z}{(A + \Delta As)} - \Delta S \right) \quad (4a)$$

$$= \frac{1}{G_s}(A + \Delta As)\left( \sin\left( \omega t + \frac{\alpha}{2} \right)\cos(\Delta\alpha) - \cos\left( \omega t + \frac{\alpha}{2} \right)\sin(\Delta\alpha) + S + \frac{Z}{(A + \Delta As)} - \Delta S \right) \quad (4b)$$

wherein $G_C$ and $G_S$ (dimensionless) are scaling gains to the nominal amplitude A ; $\Delta C$ and $\Delta S$ (dimensionless) are digital correctional offsets, and $\Delta\alpha$ (radians) is a correctional phase shift. After applying these corrections $\frac{1}{G_c}(A + \Delta Ac)$ and $\frac{1}{G_s}(A + \Delta As)$ should each be as close as possible to the above nominal amplitude A; and $\Delta\alpha - \frac{\alpha}{2}$ , C -$\Delta C$ and S -$\Delta S$ should each be as close as possible to zero.

In (3b) and (4b) $\Delta\alpha$ is furthermore assumed as small and $\alpha/2$ is assumed as small, and in view of the latter (from the first terms of the respective Taylor series),

$$\sin\left( \omega t - \frac{\alpha}{2} \right) = \sin\left( \omega t + \frac{\alpha}{2} \right) - \alpha\cos\left( \omega t + \frac{\alpha}{2} \right)$$

$$\cos\left( \omega t + \frac{\alpha}{2} \right) = \cos\left( \omega t - \frac{\alpha}{2} \right) - \alpha\sin\left( \omega t - \frac{\alpha}{2} \right)$$

$$\sin\left( \omega t - \frac{\alpha}{2} \right) = \frac{1}{(1-\alpha^2)}\sin\left( \omega t + \frac{\alpha}{2} \right) - \frac{\alpha}{(1-\alpha^2)}\cos\left( \omega t - \frac{\alpha}{2} \right) \quad (3c)$$

$$\cos\left( \omega t + \frac{\alpha}{2} \right) = \frac{1}{(1-\alpha^2)}\cos\left( \omega t - \frac{\alpha}{2} \right) - \frac{\alpha}{(1-\alpha^2)}\sin\left( \omega t + \frac{\alpha}{2} \right) \quad (4c)$$

With (3c) and $\Delta\alpha$ and $\alpha/2$ as small the foregoing (3b) is thus further amended to:

$$COS_{corr} = \frac{1}{G_c} \left( \begin{array}{l} \left( \left( 1 + \frac{\alpha\Delta\alpha}{\left(1-\alpha^2\right)} \right) COS_{input} - \frac{\left(A+\Delta Ac\right)}{\left(A+\Delta As\right)} \frac{\Delta\alpha}{\left(1-\alpha^2\right)} sin_{input} \right. \\ \left. -\left(A+\Delta Ac\right) \left( \frac{\alpha\Delta\alpha}{\left(1-\alpha^2\right)} C + \Delta C - \frac{\Delta\alpha}{\left(1-\alpha^2\right)} S \right) + \frac{\Delta\alpha}{\left(1-\alpha^2\right)} \left( \frac{\left(A+\Delta Ac\right)}{\left(A+\Delta As\right)} - \alpha \right) Z \right) \end{array} \right) \quad (3d)$$

Assuming $1-\alpha^2$ and $\left( 1 + \frac{\alpha\Delta\alpha}{\left(1-\alpha^2\right)} \right)$ each as essentially unity (3d) can be further simplified to:

$$COS_{corr} = \frac{1}{G_c} \left( \begin{array}{l} COS_{input} - \frac{\left(A+\Delta Ac\right)}{\left(A+\Delta As\right)} \Delta\alpha sin_{input} \\ -\left(A+\Delta Ac\right)\left(\alpha\Delta\alpha C + \Delta C - \Delta\alpha S \right) + \Delta\alpha \left( \frac{\left(A+\Delta Ac\right)}{\left(A+\Delta As\right)} - \alpha \right) Z \end{array} \right) \quad (3e)$$

Still furthermore optionally assuming approximately $(A+\Delta A_C) = (A+\Delta A_S)$ equation (3e) can still furthermore be simplified to:

$$COS_{corr} = \frac{1}{G_c} \left( \begin{array}{l} COS_{input} - \Delta\alpha sin_{input} \\ -\left(A+\Delta Ac\right)\left(\alpha\Delta\alpha C + \Delta C - \Delta\alpha S \right) + \Delta\alpha\left(1-\alpha\right) Z \end{array} \right) \quad (3f)$$

Even still furthermore optionally $\alpha\Delta\alpha C$ may be assumed as zero and $1-\alpha$ as essentially equal to unity, so (3f) can be further simplified to:

$$COS_{corr} = \frac{1}{G_c} \left( \begin{array}{l} COS_{input} - \Delta\alpha sin_{input} \\ -\left(A+\Delta Ac\right)\left(\Delta C - \Delta\alpha S \right) + \Delta\alpha Z \end{array} \right) \quad (3g)$$

In a simplest embodiment $(A+\Delta A_C)$ may be assumed as A, so (3g) gives:

$$COS_{corr} = \frac{1}{G_c} \left( COS_{input} - \Delta\alpha sin_{input} - A\left(\Delta C - \Delta\alpha S \right) + \Delta\alpha Z \right) \quad (3h)$$

Analogously with (4c) and $\Delta\alpha$ and $\alpha/2$ as small the foregoing (4b) is further amended to:

$$sin_{corr} = \frac{1}{G_s} \left( \begin{array}{l} \left( \left( 1 + \frac{\alpha\Delta\alpha}{\left(1-\alpha^2\right)} \right) sin_{input} - \frac{\left(A+\Delta As\right)}{\left(A+\Delta Ac\right)} \frac{\Delta\alpha}{\left(1-\alpha^2\right)} COS_{input} \right. \\ \left. -\left(A+\Delta As\right) \left( \frac{\alpha\Delta\alpha}{\left(1-\alpha^2\right)} S + \Delta S - \frac{\Delta\alpha}{\left(1-\alpha^2\right)} C \right) + \frac{\Delta\alpha}{\left(1-\alpha^2\right)} \left( \frac{\left(A+\Delta As\right)}{\left(A+\Delta Ac\right)} - \alpha \right) Z \right) \end{array} \right) \quad (4d)$$

Again assuming $1-\alpha^2$ and $\left( 1 + \frac{\alpha\Delta\alpha}{\left(1-\alpha^2\right)} \right)$ each as essentially unity (4d) can be further simplified to:

$$\sin_{corr} = \frac{1}{G_s}\left( \begin{array}{l} \sin_{input} \;-\dfrac{\left(A+\Delta A_s\right)}{\left(A+\Delta A_c\right)}\Delta\alpha\cos_{input} \\[2mm] -\left(A+\Delta A_s\right)\left(\alpha\Delta\alpha S+\Delta S-\Delta\alpha C\right)\;+\Delta\alpha\left(\dfrac{\left(A+\Delta A_s\right)}{\left(A+\Delta A_c\right)}-\alpha\right)Z \end{array}\right) \quad (4e)$$

Still furthermore again optionally assuming approximately $(A+\Delta A_C) = (A+\Delta A_S)$ equation (4e) can still furthermore be simplified to

$$\sin_{corr} = \frac{1}{G_s}\left(\begin{array}{l}\sin_{input} \;-\Delta\alpha\cos_{input}\\[1mm] -\left(A+\Delta A_s\right)\left(\alpha\Delta\alpha S+\Delta S-\Delta\alpha C\right)\;+\Delta\alpha\left(1-\alpha\right)Z\end{array}\right) \quad (4f)$$

Even still furthermore optionally $\alpha\Delta\alpha S$ may be assumed as zero and $1-\alpha$ again as essentially equal to unity, so (4f) can be further simplified to:

$$\sin_{corr} = \frac{1}{G_s}\left(\sin_{input} \;-\Delta\alpha\cos_{input} -\left(A+\Delta A_s\right)\left(\Delta S-\Delta\alpha C\right)\;+\Delta\alpha Z\right) \quad (4g)$$

In a simplest embodiment $(A+\Delta A_S)$ may be assumed as A, so (4g) gives:

$$\sin_{corr} = \frac{1}{G_s}\left(\sin_{input} \;-\Delta\alpha\cos_{input} - A\left(\Delta S-\Delta\alpha C\right)\;+\Delta\alpha Z\right) \quad (4h)$$

Equations (3f), (3g) or (3h) and (4f), (4g) or (4h) are simple preferred equations for calculating $\sin_{corr}$ and $\cos_{corr}$.

For this second optional but preferred task three exemplary variants are exemplified in the following, assuming that the sinusoidal and cosinusoidal input signals sininput and cosinput conform to the most preferred definition thereof mentioned above.

In the first exemplary variant the control unit stores the values of $\cos_{input}$ and $\sin_{input}$ for positional angles $\varphi$ over a full period of $2\pi$. It scans the stored $\cos_{input}$ values for the maximum (assumed at $\varphi = 0$) and minimum (assumed at $\varphi = \pi$) thereof, takes these as $C_{max}$ and $C_{min}$, respectively, and uses these in above (1), which gives:

$$\frac{C_{max}-C_{min}}{2} - A = \Delta A_c \quad (5)$$

$$\frac{C_{max}+C_{min}}{C_{max}-C_{min}} - \frac{2Z}{\left(C_{max}-C_{min}\right)} = C \quad (6)$$

wherein all symbols are as above.

Analogously the control unit scans the stored values of $\sin_{input}$ for the maximum (assumed at $\varphi = \pi/2$) and minimum (assumed at $\varphi = 3\pi/2$) thereof, takes these as $S_{max}$ and $S_{min}$, respectively, and uses these in above (2) which gives:

$$\frac{S_{max}-S_{min}}{2} - A = \Delta A_s \quad (7)$$

$$\frac{S_{max}+S_{min}}{S_{max}-S_{min}} - \frac{2Z}{S_{max}-S_{min}} = S \qquad (8)$$

wherein again all symbols are as above.

The control unit uses as the above gains $G_C$ and $G_S$:

$$G_C = \frac{(A+\Delta A_C)}{A} = \frac{C_{max}-C_{min}}{2A} \qquad (9)$$

$$G_S = \frac{(A+\Delta A_S)}{A} = \frac{S_{max}-S_{min}}{2A} \qquad (10)$$

Using above (6) in the above requirement $C - \Delta C = 0$

$$\text{gives} \quad \frac{C_{max}+C_{min}}{C_{max}-C_{min}} - \frac{2Z}{C_{max}-C_{min}} = \Delta C \qquad (11)$$

Analogously using above (8) in the above requirement $S - \Delta S = 0$

$$\text{gives} \quad \left(\frac{S_{max}+S_{min}}{S_{max}-S_{min}} - \frac{2Z}{S_{max}-S_{min}}\right) = \Delta S \qquad (12)$$

Furthermore the control unit scans the stored $\cos_{input}$ and $\sin_{input}$ value pairs for a first instance where at the same time $\sin_{input1} - Z = \cos_{input1} - Z$, taking that value as $CS_{eq1}$, and for a second instance where at the same time $\sin_{input2} - Z = -\cos_{input2} - Z$, taking that value as $CS_{eq2}$. $CS_{eq1}$ would be at $\varphi = \pi/4$ and $CS_{eq2}$ at $\varphi = 3\pi/4$ in the absence of any further phase shift between $\sin_{input}$ and $\cos_{input}$. The further phase shift $\alpha$ between $\sin_{input}$ and $\cos_{input}$ is due to the further phase shift $\alpha$ of the sine term in $\sin_{input}$ with respect to the cosine term in $\cos_{input}$ (see (1) and (2)). It is also an inverse phase shift of $-\alpha$ of the cosine term in $\cos_{input}$ with respect to the sine term in $\cos_{input}$. Thus for $CS_{eq1}$:

$$CS_{eq1} = (A+\Delta A_S)\left(\sin\left(\frac{\pi}{4}+\alpha\right)+S\right)$$

$$\frac{CS_{eq1}}{(A+\Delta A_S)} - S = \sin\left(\frac{\pi}{4}+\alpha\right)$$

Using (7) and (8) therein gives:

$$\frac{2CS_{eq1}+2Z-(S_{max}+S_{min})}{(S_{max}-S_{min})} = \sin\left(\frac{\pi}{4}+\alpha\right) \qquad (13)$$

For $CS_{eq2}$:

$$CS_{eq2} = (A + \Delta As)\left( \sin\left(\frac{3\pi}{4} + \alpha\right) + S\right) = -(A + \Delta Ac)\left(\cos\left(\frac{3\pi}{4} - \alpha\right) + C\right)$$

$$= -(A + \Delta Ac)\left(-\cos\left(\frac{\pi}{4} + \alpha\right) + C\right)$$

$$-\left(\frac{CS_{eq2}}{(A + \Delta Ac)} + C\right) = -\cos\left(\frac{\pi}{4} + \alpha\right)$$

Using (5) and (6) therein gives:

$$-\left(\frac{2CS_{eq2} + (C_{max} + C_{min}) - 2Z}{(C_{max} - C_{min})}\right) = -\cos\left(\frac{\pi}{4} + \alpha\right) \qquad (14)$$

From (13) and (14) the sought phase shift $\alpha/2$, and thus the correctional phase $\Delta\alpha$ which must be equal thereto as per above (3) and (4), are obtained as

$$\frac{\alpha}{2} = \Delta\alpha = \frac{1}{2}\text{atn}\left(\frac{(2CS_{eq1} + 2Z - (S_{max} + S_{min}))(C_{max} - C_{min})}{(2CS_{eq2} + (C_{max} + C_{min}) - 2Z)(S_{max} - S_{min})}\right) - \frac{\pi}{8} \qquad (15)$$

In order to carry out this first exemplary variant of error correction the control unity stores $\cos_{input}$ and $\sin_{input}$ value pairs from a given period and calculates $\Delta A_C$, $\Delta A_S$, $G_C$, $G_S$, $\Delta C$, $\Delta S$ and $\Delta\alpha$ from formulae (5), (7), (9), (10), (11), (12) and (15), respectively, and using the stored $\cos_{input}$ and $\sin_{input}$ value pairs. It then uses the values of $\Delta A_C$, $\Delta A_S$, $G_C$, $G_S$, $\Delta C$, $\Delta S$ and $\Delta\alpha$ so obtained to simultaneously correct the offset, amplitude and phase errors in any input signal value pair $\cos_{input}/\sin_{input}$ from the considered ADC for one or more subsequent periods, using above formulae (3d), (3e) or (3f) and (4d), (4e) or (4f). In this first exemplary variant for error correction one single iteration is needed for obtaining error corrected signals $\cos_{corr}$ and $\sin_{corr}$, without need for further processing. The control unit preferably replaces the stored $\cos_{input}$ and $\sin_{input}$ value pairs from a given period by corresponding updated values from a subsequent period, after typically one or two subsequent periods has(have) been observed.

This first exemplary variant does not use any feedback of a simulated positional angle an/or error correction for combining with the measured positional angle. The omission of such feedback may avoid potential stability problems associated with high-frequent noise in the measured input positional angle. Such noise may cause the calculated positional angle to be fed back to be phase-shifted with respect to the original measured positional angle, thus switching from negative to positive feedback and thus causing possible oscillation. This problem may also occur when the feedback is digital, when the calculation rate of the simulated positional angle becomes comparable to the sampling rate of the digital measured positional angle.

The second exemplary variant for error correction uses corrected value pairs ($\sin_{corr}|\cos_{corr}$) obtained from equations (3g) and (4g) wherein the ADC zero point Z has been removed by subtraction and is assumed as zero. In this second exemplary variant from each value pair ($\sin_{corr}|\cos_{corr}$) a magnitude M and a phase $\varphi$ between the two signals is derived:
:

$$M_\varphi = \sqrt{\cos_{corr}^2 + \sin_{corr}^2} \qquad (16)$$

$$\cos(\varphi) = \frac{\cos_{corr}}{M_\varphi} \quad (16a), \quad \sin(\varphi) = \frac{\sin_{corr}}{M_\varphi} \quad (16b)$$

$$\varphi = atn\left(\frac{\sin_{corr}}{\cos_{corr}}\right) \qquad (17)$$

The $\varphi$ may be evaluated using equation (17) or using the known CORDIC algorithm in "vectoring" mode. An exemplary outline of such "vectoring" CORDIC algorithm is as in following steps i)-v):

i) assume an approximation $\varphi'$ for the negative of the phase $\varphi$ (thus for $-\varphi$), the initial value for $\varphi'$ being zero; assume an array of tangent values of incremental corrective angles $\varphi_i$, wherein i is an integer running from -2 up to a maximum of N, chosen such as that $atn(2^{-N})$ is not larger than the acceptable residual error for $\varphi$, and the values of the i-th tangent being given as $\tan(\varphi_i) = 2^{-i}$, and assume a sign variable $\sigma$ that takes the value +1 if the initial $\sin_{corr}$ value is $\geq 0$ or the value -1 if the initial $\sin_{corr}$ value is < 0;

ii) calculate new iterative values for $\sin_{corr}$ and $\cos_{corr}$ as follows:

$$\begin{pmatrix}(\cos_{corr})_{i+1}\\(\sin_{corr})_{i+1}\end{pmatrix} = \frac{1}{\sqrt{1+2^{-2i}}}\begin{pmatrix}1 & \sigma 2^{-i}\\-\sigma 2^{-i} & 1\end{pmatrix}\begin{pmatrix}(\cos_{corr})_i\\(\sin_{corr})_i\end{pmatrix},$$

wherein if i = 0, the above initial values for $\cos_{corr}$ and $\sin_{corr}$ are inserted on the right side (this multiplication matrix including its leading factor $\dfrac{1}{\sqrt{1+2^{-2i}}}$ is orthonormal; it only performs a rotation of the vector on the right side without altering its magnitude);

iii) if $(\sin_{corr})_{i+1}$ obtained in step ii) has the same sign as $(\sin_{corr})_i$

add the value $\sigma \times atn(2^{-i})$ to $\varphi'$,

set $(sincorr)_i = (sincorr)_{i+1}$

and

set $(coscorr)_i = (coscorr)_{i+1}$;

iv) increase i by 1; and

v) repeat steps ii) - iv) until $(\sin_{corr})_{i+1}$ is equal to zero, or until i has reached N, whichever occurs earlier;

v) take the sought magnitude M as the $(\cos_{corr})_i$ used as input in the last iteration of ii)+iii), and take the sought phase $\varphi$ as the $\varphi'$ obtained in the last iteration of of ii)+iii).

The arrays of $atn(2^{-i})$ and $\dfrac{1}{\sqrt{1+2^{-2i}}}$ are typically stored in respective lookup tables, e.g. in the control unit.

The value pairs $(M|\varphi)$ so obtained from one or two periods of the input signals are needed in order to derive the values of $\Delta C$, $\Delta S$, $\Delta\alpha$, $G_C$ and $G_S$, which is explained in the following (for a magnitude M at phase angle $\varphi$ the short notation "$M_\varphi$" is used, e.g. for magnitude M at zero radians "$M_0$" is written). It is assumed that each value $\varphi$ is approximately identical to the value of $\omega t \pm \alpha/2$ in the $\cos_{input}$ and $\sin_{input}$ values from which it was obtained.

Then from equation (3g) for the correcting gain $G_C$ and the difference $(C-\Delta C)$, setting Z as zero (it has been subtracted from $\cos_{input}$ and $\sin_{input}$, see above):

$$M_0\cos(\varphi=0) = (\cos_{corr})_0 = \frac{1}{G_C}\left(\cos_{input} - \Delta\alpha\sin_{input} + (A+\Delta Ac)(\Delta\alpha S - \Delta C)\right)$$

$$= \frac{1}{G_C}\left((A+\Delta Ac)(1+C) - \Delta\alpha(A+\Delta As)S + (A+\Delta Ac)(\Delta\alpha S - \Delta C)\right) = M_0$$

$$M_\pi \cos(\varphi = \pi) = (\cos_{corr})_\pi = \frac{1}{G_C}\left((\cos_{input})_\pi - \Delta\alpha(\sin_{input})_\pi + (A + \Delta Ac)(\Delta\alpha S - \Delta C)\right)$$

$$= \frac{1}{G_C}\left((A + \Delta Ac)(-1 + C) - \Delta\alpha(A + \Delta As)S + (A + \Delta Ac)(\Delta\alpha S - \Delta C)\right) = -M_\pi$$

$$M_0 - M_\pi = \frac{2}{G_C}\left((C - \Delta C)(A + \Delta Ac) + \Delta\alpha S(\Delta Ac - \Delta As)\right)$$

$$M_0 + M_\pi = \frac{1}{G_C}\left(2(A + \Delta Ac)\right)$$

$$G_C = \frac{2(A + \Delta Ac)}{M_0 + M_\pi} \qquad (18a)$$

$$\frac{(M_0 - M_\pi)}{(M_0 + M_\pi)} = (C - \Delta C) + \frac{(\Delta\alpha S(\Delta Ac - \Delta As))}{((A + \Delta Ac))}$$

and neglecting the small righmost term:

$$[0121] \quad C - \Delta C = \left(\frac{M_0 - M_\pi}{M_0 + M_\pi}\right) \qquad (19a)$$

If the value pairs (M|φ) of two periods are collected then for the correcting gain $G_C$ and the difference (C-ΔC):

$$M_0 - M_\pi + M_{2\pi} - M_{3\pi} = \frac{4}{G_C}\left((C - \Delta C)(A + \Delta Ac) + \Delta\alpha S(\Delta Ac - \Delta As)\right)$$

$$M_0 + M_\pi + M_{2\pi} + M_{3\pi} = \frac{4}{G_C}\left((A + \Delta Ac)\right) \quad G_C = \frac{2(A + \Delta Ac)}{M_0 + M_\pi + M_{2\pi} + M_{3\pi}} \qquad (18b)$$

$$\frac{(M_0 - M_\pi + M_{2\pi} - M_{3\pi})}{(M_0 + M_\pi + M_{2\pi} + M_{3\pi})} = (C - \Delta C) + \frac{(\Delta\alpha S(\Delta Ac - \Delta As))}{((A + \Delta Ac))}$$

and again neglecting the small righmost term:

$$C - \Delta C = \left(\frac{M_0 - M_\pi + M_{2\pi} - M_{3\pi}}{M_0 + M_\pi + M_{2\pi} + M_{3\pi}}\right) \qquad (19b)$$

Analogously from equation (4d) for the correcting gain $G_S$ and the difference (S-ΔS):

$$M_{\pi/2}\sin(\varphi = \pi/2) = (\sin_{corr})_{\pi/2} = \frac{1}{G_S}\left((\sin_{input})_{\pi/2} - \Delta\alpha(\cos_{input})_{\pi/2} + (A+\Delta A_S)(\Delta\alpha C - \Delta S)\right)$$

$$= \frac{1}{G_S}\left(\begin{array}{c}(A+\Delta A_S)(1+S) - \Delta\alpha((A+\Delta A_C)(C)) \\ + (A+\Delta A_S)(\Delta\alpha C - \Delta S)\end{array}\right) = M_{\pi/2}$$

$$M_{3\pi/2}\sin(\varphi = 3\pi/2) = (\sin_{corr})_{3\pi/2} = \frac{1}{G_S}\left((\sin_{input})_{3\pi/2} - \Delta\alpha(\cos_{input})_{3\pi/2} + (A+\Delta A_S)(\Delta\alpha C - \Delta S)\right)$$

$$= \frac{1}{G_S}\left(\begin{array}{c}((A+\Delta A_S)(-1+S)) - \Delta\alpha((A+\Delta A_C)(C)) \\ + (A+\Delta A_S)(\Delta\alpha C - \Delta S)\end{array}\right) = -M_{3\pi/2}$$

$$M_{\pi/2} - M_{3\pi/2} = \frac{1}{G_S}\left(2(A+\Delta A_S)(S-\Delta S) + 2\Delta\alpha C(\Delta A_S - \Delta A_C)\right)$$

$$M_{\pi/2}\sin(\varphi = \pi/2) = (\sin_{corr})_{\pi/2} = \frac{1}{G_S}\left((\sin_{input})_{\pi/2} - \Delta\alpha(\cos_{input})_{\pi/2} + (A+\Delta A_S)(\Delta\alpha C - \Delta S)\right)$$

$$= \frac{1}{G_S}\left(\begin{array}{c}(A+\Delta A_S)(1+S) - \Delta\alpha((A+\Delta A_C)(C)) \\ + (A+\Delta A_S)(\Delta\alpha C - \Delta S)\end{array}\right) = M_{\pi/2}$$

$$M_{3\pi/2}\sin(\varphi = 3\pi/2) = (\sin_{corr})_{3\pi/2} = \frac{1}{G_S}\left((\sin_{input})_{3\pi/2} - \Delta\alpha(\cos_{input})_{3\pi/2} + (A+\Delta A_S)(\Delta\alpha C - \Delta S)\right)$$

$$= \frac{1}{G_S}\left(\begin{array}{c}((A+\Delta A_S)(-1+S)) - \Delta\alpha((A+\Delta A_C)(C)) \\ + (A+\Delta A_S)(\Delta\alpha C - \Delta S)\end{array}\right) = -M_{3\pi/2}$$

$$M_{\pi/2} + M_{3\pi/2} = \frac{1}{G_S}\left(2(A+\Delta A_S)\right)$$

$$G_S = \frac{2(A+\Delta A_S)}{M_{\pi/2} + M_{3\pi/2}} \quad (20a)$$

$$\frac{M_{\pi/2} - M_{3\pi/2}}{M_{\pi/2} + M_{3\pi/2}} = (S-\Delta S) + \frac{\left(\Delta\alpha C(\Delta A_S - \Delta A_C)\right)}{\left((A+\Delta A_S)\right)}$$

and neglecting the small righmost term:

$$\frac{M_{\pi/2} - M_{3\pi/2}}{M_{\pi/2} + M_{3\pi/2}} = (S-\Delta S) \quad (21a)$$

If the value pairs $(M|\varphi)$ of two periods are collected then

$$M_{\pi/2} - M_{3\pi/2} + M_{5\pi/2} - M_{7\pi/2} = \frac{4}{G_s}\left( (A + \Delta A_s)(S - \Delta S) + \Delta\alpha C(\Delta A_s - \Delta A_c) \right)$$

$$M_{\pi/2} + M_{3\pi/2} + M_{5\pi/2} + M_{7\pi/2} = \frac{4}{G_s}(A + \Delta A_s) \quad G_s = \frac{4(A + \Delta A_s)}{M_{\pi/2} + M_{3\pi/2} + M_{5\pi/2} + M_{7\pi/2}} \quad (20b)$$

$$\frac{M_{\pi/2} - M_{3\pi/2} + M_{5\pi/2} - M_{7\pi/2}}{M_{\pi/2} + M_{3\pi/2} + M_{5\pi/2} + M_{7\pi/2}} = (S - \Delta S) + \frac{\left(\Delta\alpha C(\Delta A_s - \Delta A_c)\right)}{(A + \Delta A_s)}$$

and again neglecting the small righmost term:

$$\frac{M_{\pi/2} - M_{3\pi/2} + M_{5\pi/2} - M_{7\pi/2}}{M_{\pi/2} + M_{3\pi/2} + M_{5\pi/2} + M_{7\pi/2}} = (S - \Delta S) \quad (21b)$$

For the correcting additional phase shift $\Delta\alpha$:

$$M_{\pi/4}\cos(\varphi = \pi/4) = (\cos_{corr})_{\pi/4}$$

$$= \frac{1}{G_c}\left( (\cos_{input})_{\pi/4} - \Delta\alpha(\sin_{input})_{\pi/4} + (A + \Delta A_c)(\Delta\alpha S - \Delta C) \right)$$

$$= \frac{1}{G_c}\left( (A + \Delta A_c)\left(\frac{1}{\sqrt{2}} + C\right) - \Delta\alpha\left( (A + \Delta A_s)\left(\frac{1}{\sqrt{2}} + S\right)\right) \atop + (A + \Delta A_c)(\Delta\alpha S - \Delta C) \right) = \frac{M_{\pi/4}}{\sqrt{2}}$$

$$M_{3\pi/4}\cos(3\pi/4) = (\cos_{corr})_{3\pi/4}$$

$$= \frac{1}{G_c}\left( (\cos_{input})_{3\pi/4} - \Delta\alpha(\sin_{input})_{3\pi/4} + (A + \Delta A_c)(\Delta\alpha S - \Delta C) \right)$$

$$= \frac{1}{G_c}\left( (A + \Delta A_c)\left(-\frac{1}{\sqrt{2}} + C\right) - \Delta\alpha\left( (A + \Delta A_s)\left(\frac{1}{\sqrt{2}} + S\right)\right) \atop + (A + \Delta A_c)(\Delta\alpha S - \Delta C) \right) = -\frac{M_{3\pi/4}}{\sqrt{2}}$$

$$\frac{M_{\pi/4}}{\sqrt{2}} - \frac{M_{3\pi/4}}{\sqrt{2}} = \frac{1}{G_c}\left( 2(A + \Delta A_c)(C + \Delta\alpha S - \Delta C) - 2\Delta\alpha\left( (A + \Delta A_s)\left(\frac{1}{\sqrt{2}} + S\right)\right)\right)$$

$$M_{5\pi/4}\cos(\varphi = 5\pi/4) = (\cos_{corr})_{5\pi/4}$$

$$= \frac{1}{G_c}\left( (\cos_{input})_{5\pi/4} - \Delta\alpha(\sin_{input})_{5\pi/4} + (A + \Delta A_c)(\Delta\alpha S - \Delta C) \right)$$

$$= \frac{1}{G_c}\left( (A + \Delta A_c)\left(-\frac{1}{\sqrt{2}} + C\right) - \Delta\alpha\left( (A + \Delta A_s)\left(-\frac{1}{\sqrt{2}} + S\right)\right) \atop + (A + \Delta A_c)(\Delta\alpha S - \Delta C) \right) = -\frac{M_{5\pi/4}}{\sqrt{2}}$$

$$M_{7\pi/4}\cos(7\pi/4)$$

$$=(\cos_{corr})_{7\pi/4}=\frac{1}{G_C}\left((\cos_{input})_{7\pi/4}-\Delta\alpha(\sin_{input})_{7\pi/4}-A\Delta C\right)$$

$$=\frac{1}{G_C}\left[\begin{array}{c}(A+\Delta Ac)\left(\dfrac{1}{\sqrt{2}}+C\right)-\Delta\alpha\left((A+\Delta As)\left(-\dfrac{1}{\sqrt{2}}+S\right)\right)\\[2mm]+(A+\Delta Ac)(\Delta\alpha S-\Delta C)\end{array}\right]=\frac{M_{7\pi/4}}{\sqrt{2}}$$

$$\frac{M_{7\pi/4}}{\sqrt{2}}-\frac{M_{5\pi/4}}{\sqrt{2}}=\frac{1}{G_C}\left(2(C+\Delta\alpha S-\Delta C)(A+\Delta Ac)-2\Delta\alpha\left((A+\Delta As)\left(-\frac{1}{\sqrt{2}}+S\right)\right)\right)$$

$$\frac{M_{\pi/4}}{\sqrt{2}}-\frac{M_{3\pi/4}}{\sqrt{2}}-\left(\frac{M_{7\pi/4}}{\sqrt{2}}-\frac{M_{5\pi/4}}{\sqrt{2}}\right)=\frac{M_{\pi/4}}{\sqrt{2}}-\frac{M_{3\pi/4}}{\sqrt{2}}+\frac{M_{5\pi/4}}{\sqrt{2}}-\frac{M_{7\pi/4}}{\sqrt{2}}$$

$$=\frac{1}{G_C}\left[\begin{array}{c}2(A+\Delta Ac)(C+\Delta\alpha S-\Delta C)-2\Delta\alpha\left((A+\Delta As)\left(\dfrac{1}{\sqrt{2}}+S\right)\right)\\[2mm]-\left(2(C+\Delta\alpha S-\Delta C)(A+\Delta Ac)-2\Delta\alpha\left((A+\Delta As)\left(-\dfrac{1}{\sqrt{2}}+S\right)\right)\right)\end{array}\right]$$

$$=-\frac{4\Delta\alpha}{\sqrt{2}G_C}(A+\Delta As)$$

which for $\Delta\alpha$ gives

$$\frac{G_C}{4(A+\Delta As)}\left(M_{3\pi/4}-M_{\pi/4}+M_{7\pi/4}-M_{5\pi/4}\right)=\Delta\alpha \qquad (22a)$$

wherein for the correcting gain $G_C$ the above formula (18a) may be used.

If the value pairs $(M|\varphi)$ from two periods have been collected then

$$\frac{G_C}{8(A+\Delta As)}\left(\begin{array}{c}M_{3\pi/4}-M_{\pi/4}+M_{7\pi/4}-M_{5\pi/4}\\+M_{11\pi/4}-M_{9\pi/4}+M_{15\pi/4}-M_{13\pi/4}\end{array}\right)=\Delta\alpha \qquad (22b)$$

wherein for the correcting gain $G_C$ the above formula (18b) may be used.

In order to carry out this second exemplary variant of error correction the control unit thus proceeds as follows:

a) it calculates for each input value pair of $\cos_{input}$ and $\sin_{input}$ of one or two periods the magnitude M and phase $\varphi$ using equations (16) and (17), respectively. The values of $\Delta C$, $\Delta S$ and $\Delta\alpha$ are here taken as zero and the values of $G_C$ and $G_S$ are here taken as unity; so each input value pair of $\cos_{input}$ and $\sin_{input}$ is identical to a corresponding corrected value pair $\cos_{corr}$ and $\sin_{corr}$ as would be obtainable with formulae (4c) and (4d); and so here equations (16) and (17) can also be used for the $\cos_{input}$ and $\sin_{input}$ value pairs. The control unit stores all value pairs of magnitude M and phase $\varphi$ so obtained for further evaluation. The control unit preferably evaluates equations (16) and (17) using the above outlined CORDIC algorithm in "vectoring" mode.

b) it calculates from the stored value pairs $(M|\varphi)$ a value for $G_C$ using above equation (18a), assuming $(A+\Delta A_C)$ as equal to A, and a value for $C-\Delta C$ using above equation (19a) (if one period was stored), or calculates from the stored value pairs $(M|\varphi)$ a value for $G_C$ using above equation (18b), again assuming $(A+\Delta A_C)$ as equal to A, and a value for $C-\Delta C$ using above equation (19b) (if two periods were stored); it calculates from the stored value pairs $(M|\varphi)$ a value for

$G_S$ using above equation (20a), assuming (A+$\Delta A_S$) as equal to A, and a value for S-$\Delta S$ using above equation (21a) (if one period was stored), or calculates from the stored value pairs (M|φ) a value for $G_S$ using above equation (20b), again assuming (A+$\Delta A_S$) as equal to A, and a value for S-$\Delta S$ using above equation (21b) (if two periods were stored); and calculates a value for $\Delta\alpha$ using above equation (22a) (if one period was stored) or above equation (22b) (if two periods were stored).

c) it adds the value of C-$\Delta C$ obtained by step b) or d1), as applicable, to the value of $\Delta C$ and the value of S-$\Delta S$ obtained by step b) or d1), as applicable, to the value of $\Delta S$.

d) for any value pair of $cos_{input}$ and $sin_{input}$ of at least one further period it

    d1) calculates a corresponding value pair of $cos_{corr}$ and $sin_{corr}$ using equations (3d) and (4d), assuming Z as zero and (A+$\Delta A_C$) and (A+$\Delta A_S$) as equal to A, and the values of $G_C$, $G_S$ and $\Delta\alpha$ as obtained by step b) or d1), as applicable, and the values of $\Delta C$ and $\Delta S$ as obtained by above step b) or step d1), as applicable, and by above step c); and calculates from the value pair of $cos_{corr}$ and $sin_{corr}$ so obtained a value pair of magnitude M and phase φ using equations (16) and (17), again preferably using above CORDIC algorithm in "vectoring" mode; and calculates from the value pair of magnitude M and phase φ so obtained new values for $G_C$, C-$\Delta C$, $G_S$, S-$\Delta S$ and $\Delta\alpha$ by the procedures described in step b);

    d2) if $G_C$ and/or $G_S$ obtained by step d1) deviate by more than an acceptable difference from unity, and/or C-$\Delta C$, S-$\Delta S$ and/or $\Delta\alpha$ obtained by step d1) deviate by more than an acceptable difference from zero, it goes to step c) and subsequent steps to re-process the same value pair of $cos_{input}$ and $sin_{input}$; otherwise it takes the value pair of magnitude M and phase φ obtained in step d1) as the final magnitude M and the final phase φ, and processes the next value pair of $cos_{input}$ and $sin_{input}$ of said at least one next period by carrying out step d1) and subsequent steps.

e) the control unit re-performs steps a) and b) after one to ten, preferably four, further periods of value pairs of $cos_{input}$ and $sin_{input}$ each having been processed by steps c) to d2).

A third exemplary variant for error correction may be used when the sign and preferably also an approximate magnitude of α/2 are known. This third exemplary variant again uses corrected value pairs ($sin_{corr}$|$cos_{corr}$) wherein the ADC zero point Z has been removed by subtraction, if necessary, and is assumed as zero, and uses the identity

$$\alpha\Delta\alpha \equiv 2\left(\left(\frac{\alpha}{2} - \Delta\alpha\right)\Delta\alpha + \Delta\alpha^2\right)$$

. Above formulae (3e) and (4e) can so be converted to following formulae (3i) and (4i):

$$cos_{corr} = \left(\begin{array}{l} \dfrac{(A+\Delta Ac)}{G_c(A+\Delta Ac)}cos_{input} - \dfrac{(A+\Delta Ac)}{G_c(A+\Delta As)}\Delta\alpha sin_{input} \\[6pt] -\dfrac{(A+\Delta Ac)}{G_c}\left(\begin{array}{l}\left(2\left(\left(\dfrac{\alpha}{2}-\Delta\alpha\right)\Delta\alpha+\Delta\alpha^2\right)\right)(C-\Delta C) \\[6pt] +\left(1+\left(2\left(\left(\dfrac{\alpha}{2}-\Delta\alpha\right)\Delta\alpha+\Delta\alpha^2\right)\right)\right)\Delta C - \Delta\alpha(S-\Delta S) - \Delta\alpha\Delta S \end{array}\right) \end{array}\right) \quad (3i)$$

$$sin_{corr} = \left(\begin{array}{l} \dfrac{(A+\Delta As)}{G_s(A+\Delta As)}sin_{input} - \dfrac{1}{G_s}\dfrac{(A+\Delta As)}{(A+\Delta Ac)}\Delta\alpha cos_{input} \\[6pt] -\dfrac{(A+\Delta As)}{G_s}\left(\begin{array}{l}\left(2\left(\left(\dfrac{\alpha}{2}-\Delta\alpha\right)\Delta\alpha+\Delta\alpha^2\right)\right)(S-\Delta S) \\[6pt] +\left(1+2\left(\left(\dfrac{\alpha}{2}-\Delta\alpha\right)\Delta\alpha+\Delta\alpha^2\right)\right)\Delta S - \Delta\alpha(C-\Delta C) - \Delta\alpha\Delta C \end{array}\right) \end{array}\right) \quad (4i)$$

which, assuming $(A+\Delta A_C)$ and $(A+\Delta A_S)$ as equal to the magnitude M where appropriate gives in turn (3j) and (4j):

$$\cos_{corr} = \frac{(A+\Delta A_C)}{G_c}\left(\begin{array}{l}\dfrac{1}{M}\cos_{input} - \dfrac{1}{M}\Delta\alpha\sin_{input}\\[2mm]-\left(\begin{array}{l}\left(2\left(\left(\dfrac{\alpha}{2}-\Delta\alpha\right)\Delta\alpha+\Delta\alpha^2\right)\right)(C-\Delta C)\\[2mm]+\left(1+\left(2\left(\left(\dfrac{\alpha}{2}-\Delta\alpha\right)\Delta\alpha+\Delta\alpha^2\right)\right)\right)\Delta C\\[2mm]-\Delta\alpha(S-\Delta S)-\Delta\alpha\Delta S\end{array}\right)\end{array}\right) \qquad (3j)$$

$$\sin_{corr} = \frac{(A+\Delta A_S)}{G_s}\left(\begin{array}{l}\dfrac{1}{M}\sin_{input} - \dfrac{1}{M}\Delta\alpha\cos_{input}\\[2mm]-\left(\begin{array}{l}\left(2\left(\left(\dfrac{\alpha}{2}-\Delta\alpha\right)\Delta\alpha+\Delta\alpha^2\right)\right)(S-\Delta S)\\[2mm]+\left(1+2\left(\left(\dfrac{\alpha}{2}-\Delta\alpha\right)\Delta\alpha+\Delta\alpha^2\right)\right)\Delta S\\[2mm]-\Delta\alpha(C-\Delta C)-\Delta\alpha\Delta C\end{array}\right)\end{array}\right) \qquad (4j)$$

On the other hand, using above equations (3a) and (4a) in above equation (16a), assuming Z as zero:

$$M_\varphi\cos(\varphi) \equiv \cos_{corr} = \frac{1}{G_c}(A+\Delta A_c)\left(\cos\left(\omega t - \frac{\alpha}{2}+\Delta\alpha\right)+C-\Delta C\right)$$

$$= \frac{1}{G_c}(A+\Delta A_c)\left(\begin{array}{l}\cos(\omega t+\Delta\alpha)\cos\left(\dfrac{\alpha}{2}\right)+\sin(\omega t+\Delta\alpha)\sin\left(\dfrac{\alpha}{2}\right)\\[2mm]+C-\Delta C\end{array}\right)$$

In the above equation the $\omega t$ may be assumed as approximately equal to $\varphi$ and $\Delta\alpha$ and $\alpha/2$ may be assumed as near zero. Therefore:

$$M_\varphi\cos(\varphi) = \left(\begin{array}{l}\dfrac{(A+\Delta A_c)}{G_c}\cos(\varphi)-\dfrac{(A+\Delta A_c)}{G_c}\Delta\alpha\sin(\varphi)+\dfrac{(A+\Delta A_c)}{G_c}\dfrac{\alpha}{2}\sin(\varphi)\\[3mm]+\dfrac{(A+\Delta A_c)}{G_c}\dfrac{\alpha}{2}\Delta\alpha\cos(\varphi)+\dfrac{(A+\Delta A_c)}{G_c}(C-\Delta C)\end{array}\right)$$

$$\left( M_\varphi - \frac{(A + \Delta A_c)}{G_c}\left(1 + \frac{\alpha\Delta\alpha}{2}\right) \right)\cos(\varphi) = \frac{(A + \Delta A_c)}{G_c}\left(\frac{\alpha}{2} - \Delta\alpha\right)\sin(\varphi)$$
$$+ \frac{(A + \Delta A_c)}{G_c}(C - \Delta C) \qquad (23a)$$

Analogously using above equations (3a) and (4a) in above equation (16b) and assuming Z as zero:

$$M_\varphi\sin(\varphi) \equiv \sin_{corr} = \frac{1}{G_S}(A + \Delta A_S)\left( \sin\left(\omega t + \frac{\alpha}{2} - \Delta\alpha\right) + S - \Delta S \right)$$
$$= \frac{1}{G_S}(A + \Delta A_S)\left( \begin{array}{l} \sin(\omega t - \Delta\alpha)\cos\left(\frac{\alpha}{2}\right) + \cos(\omega t - \Delta\alpha)\sin\left(\frac{\alpha}{2}\right) \\ + S - \Delta S \end{array} \right):$$

In the above equation the $\omega t$ may again be assumed as approximately equal to $\varphi$ and $\Delta\alpha$ and $\alpha/2$ may again be assumed as near zero. Therefore:

$$M_\varphi\sin(\varphi) = \left( \begin{array}{l} \dfrac{(A + \Delta A_S)}{G_S}\sin(\varphi) - \dfrac{(A + \Delta A_S)}{G_S}\Delta\alpha\cos(\varphi) + \dfrac{\alpha}{2}\dfrac{(A + \Delta A_S)}{G_S}\cos(\varphi) \\ + \Delta\alpha\dfrac{\alpha}{2}\dfrac{(A + \Delta A_S)}{G_S}\sin(\varphi) + \dfrac{(A + \Delta A_S)}{G_S}(S - \Delta S) \end{array} \right)$$

$$\left( M_\varphi - \frac{(A + \Delta A_S)}{G_S}\left(1 + \frac{\alpha\Delta\alpha}{2}\right) \right)\sin(\varphi) = \frac{(A + \Delta A_S)}{G_S}\left(\frac{\alpha}{2} - \Delta\alpha\right)\cos(\varphi)$$
$$+ \frac{(A + \Delta A_S)}{G_S}(S - \Delta S) \qquad (23b)$$

Because $M_\varphi$ and $\varphi$ are independent from each other equation (23a) yields the following, using the above identity:

$$\left( M_\varphi - \frac{(A + \Delta A_c)}{G_c}\left(1 + \left(\frac{\alpha}{2} - \Delta\alpha\right)\Delta\alpha + \Delta\alpha^2\right) \right) = 0$$
$$\Rightarrow \frac{(A + \Delta A_c)}{G_c} = \frac{M_\varphi}{\left(1 + \left(\frac{\alpha}{2} - \Delta\alpha\right)\Delta\alpha + \Delta\alpha^2\right)} \qquad (24a)$$

$$\frac{(A + \Delta A_c)}{G_c}\left(\frac{\alpha}{2} - \Delta\alpha\right)\sin(\varphi) + \frac{(A + \Delta A_c)}{G_c}(C - \Delta C) = 0$$
$$\Rightarrow (C - \Delta C) = -\left(\frac{\alpha}{2} - \Delta\alpha\right)\sin(\varphi) \qquad (25a)$$

Analogously because $M_\varphi$ and $\varphi$ are independent from each other equation (23b) yields the following, also using

the above identity:

$$\left(M_\varphi - \frac{(A+\Delta A_S)}{G_S}\left(1+\left(\frac{\alpha}{2}-\Delta\alpha\right)\Delta\alpha+\Delta\alpha^2\right)\right)\sin(\varphi) = 0$$

$$\Rightarrow \frac{(A+\Delta A_S)}{G_S} = \frac{M_\varphi}{\left(1+\left(\frac{\alpha}{2}-\Delta\alpha\right)\Delta\alpha+\Delta\alpha^2\right)} \quad (24b)$$

$$\frac{(A+\Delta A_S)}{G_S}\left(\frac{\alpha}{2}-\Delta\alpha\right)\cos(\varphi) + \frac{(A+\Delta A_S)}{G_S}(S-\Delta S) = 0$$

$$\Rightarrow (S-\Delta S) = -\left(\frac{\alpha}{2}-\Delta\alpha\right)\cos(\varphi) \quad (25b)$$

Based on (24a) and (24b) the values of $(A+\Delta A_S)/G_S$ and $(A+\Delta A_C)/G_C$ are always identical. They must actually both converge to the nominal amplitude A.

The third exemplary variant is recursively and forms an independent object of the invention. It uses above formulae (3j) and (4j) for calculating $\sin_{corr}$ and $\cos_{corr}$ values from $\sin_{input}$ and $\cos_{input}$ values, then calculates with the $\sin_{corr}$ and $\cos_{corr}$ values so obtained the $M_\varphi$, and $\varphi$ using formulae (16) and (17), respectively, or by CORDIC algorithm, and $\cos(\varphi)$ and $\sin(\varphi)$ using formulae (16a) and (16b),

respectively, then uses $M_\varphi$, $\cos(\varphi)$ and $\sin(\varphi)$ so obtained in (24b), (24a), (25b) and (25a) to obtain $(A+\Delta A_S)/G_S$, $(A+\Delta A_C)/G_C$, $(S-\Delta S)$ and $(C-\Delta C)$ respectively, then uses the latter again in formulae (3j) and (4j). In these formulae the

term ( $\frac{\alpha}{2}-\Delta\alpha$ ) is an adjustable parameter that changes with each iteration. It is chosen from an array of powers $\sigma 2^{-k}$, wherein

k is an integer from an initial value up to a suitable maximum index greater than or equal to said initial value, such as in the range of 10 to 64, e.g. 10, 15 or 31) and which increases with each iteration, wherein the initial value for k may be assumed as in the range of 4 to 8, preferably is 6 but, if the magnitude of $\alpha/2$ is known, is more preferably chosen such that

$$2^{-(k+1)} < \left|\frac{\alpha}{2}\right| \leq 2^{-k}$$

and $\sigma$ is +1 if $\alpha/2$ is positive or zero and is -1 if $\alpha/2$ is negative.

The iterative phase adjustment of a given value pair of input signals $\cos_{input}$ and $\sin_{input}$ according to the third exemplary variant is as follows:

a) For the iteration start, the initial values of $\Delta\alpha$, $\Delta C$ and $\Delta S$ (as defined for above formulae (3a) and (4a)) are assumed as zero, the initial values of k and $\sigma$ are chosen as explained above, the magnitude $M_\varphi$ is assumed as a value reasonably close to the nominal amplitude A, such as in the range of 0.5 to 2 times, e.g. 1.25 times, the nominal amplitude A, and $\varphi$ is assumed as equal to the value of $\omega t$ in said value pair of input signals $\cos_{input}$ and $\sin_{input}$ to generate initial values of $\cos(\varphi)$ and $\sin(\varphi)$, wherein $\omega$ in $\omega t$ is either a nominal angular velocity derivable as $\pi v/DP'$, with v being a nominal belt travel speed and DP' being the pole pitch as defined above, representing a nominal (unelongated and not-shortened pole pitch), or $\omega$ in $\omega t$ is derived from previously determined positional angles $\varphi$ and forming a first derivative in time thereof; and t in $\omega t$ is derived from a timer or clock;

b) using the σ from step a), the k from step a) or step g), as applicable, set $\left(\dfrac{\alpha}{2}-\Delta\alpha\right)=\sigma2^{-k}$ and using that and the cos(φ) and sin(φ) from step a) or step d), as applicable, calculate values for S-ΔS and C-ΔC using above equations (25b) and (25a), respectively, and using the $M_\varphi$ from step a) or step d), as applicable, and the Δα from step a) or step f2), as applicable, calculate values for (A+ΔA$_S$)/G$_S$ and (A+ΔA$_C$)/G$_C$ using above equations (24b) and (24a), respectively (these values are thus identical);

c) With Δα, ΔC and ΔS from step a) or step f2), as applicable, and with ( $\dfrac{\alpha}{2}-\Delta\alpha$ ), (A+ΔA$_S$)/G$_S$ = (A+ΔA$_C$)/G$_C$, C-ΔC and S-ΔS from step b) calculate cos$_{corr}$ and sin$_{corr}$ using equations (3j) and (4j), respectively;
d) with cos$_{corr}$ and sin$_{corr}$ from step c) calculate a new associated magnitude $M_\varphi$ and a new associated φ, either using equations (16) and (17) or, preferably, using the above discussed CORDIC algorithm in "vectoring" mode, and new associated cos(φ) and sin(φ) values using equations (16a) and (16b), respectively, and optionally, if the numeric calculation by equation (17) or by the CORDIC algorithm provides a φ confined betwen -π/2 and +π/2, furthermore i) add 2π to that confined φ if sin$_{corr}$ < 0 and cos$_{corr}$ > 0; or ii) add π to that confined φ if sin$_{corr}$ > 0 and cos$_{corr}$ < 0; or iii) add π to that confined φ if sin$_{corr}$ < 0 and cos$_{corr}$ < 0;

e) Using the values for $M_\varphi$ obtained in step d), the Δα from step (a) or step f2), as applicable, and the ( $\dfrac{\alpha}{2}-\Delta\alpha$ ) from

step b) calculate the new value for (A+ΔA$_S$)/G$_S$ and (A+ΔA$_C$)/G$_C$ using above equations (24b) and (24a), respectively (they are thus identical);
f) if the new value for (A+ΔA$_S$)/G$_S$ = (A+ΔA$_C$)/G$_C$ is closer to A than the corresponding previous value of (A+ΔA$_S$)/G$_S$ = (A+ΔA$_C$)/G$_C$ from step b):

f1) set the new value of (A+ΔA$_S$)/G$_S$ = (A+ΔA$_C$)/G$_C$ from step e) as the corresponding previous value of (A+ΔA$_S$)/G$_S$ = (A+ΔA$_C$)/G$_C$;

f2) add the value of ( $\dfrac{\alpha}{2}-\Delta\alpha$ ), C-ΔC and S-ΔS of step b) to the value of Δα, ΔC and ΔS, respectively;

g) increase k by 1;
h) Re-iterate through steps b) to g) until k is the said other maximum index; and
i) take the $M_\varphi$ and the φ and/or the final cos(φ) and final sin(φ) as obtained in step d) of the last iteration carried out, for position determination.

A computer simulation of this third exemplary variant for error correction revealed that it is capable of removing a large part or even most of the further phase shift α between cos$_{input}$ and sin$_{input}$, while it is less suited to remove the amplitude deviations ΔA$_C$ and ΔA$_S$ and the offsets C and S. This third exemplary variant is thus particularly suited for sin$_{input}$ and cos$_{input}$ signals essentially devoid of offsets C and S and amplitude deviations ΔA$_C$ and ΔA$_S$, or wherein offsets C and S and amplitude deviations ΔA$_C$ and ΔA$_S$ have been averaged out beforehand, e.g. by using position sensing units according to the right part of Fig.1 and associated description. For this third exemplary variant the above phase error α is preferably positive, such as in the range of 0 to +0.06 radians, more preferably in the range of 0 to +0.03 radians. The computer simulation furthermore revealed that the further phase shift α can also be largely or mostly removed when sin$_{input}$ and cos$_{input}$ signals are loaden with a small random noise.

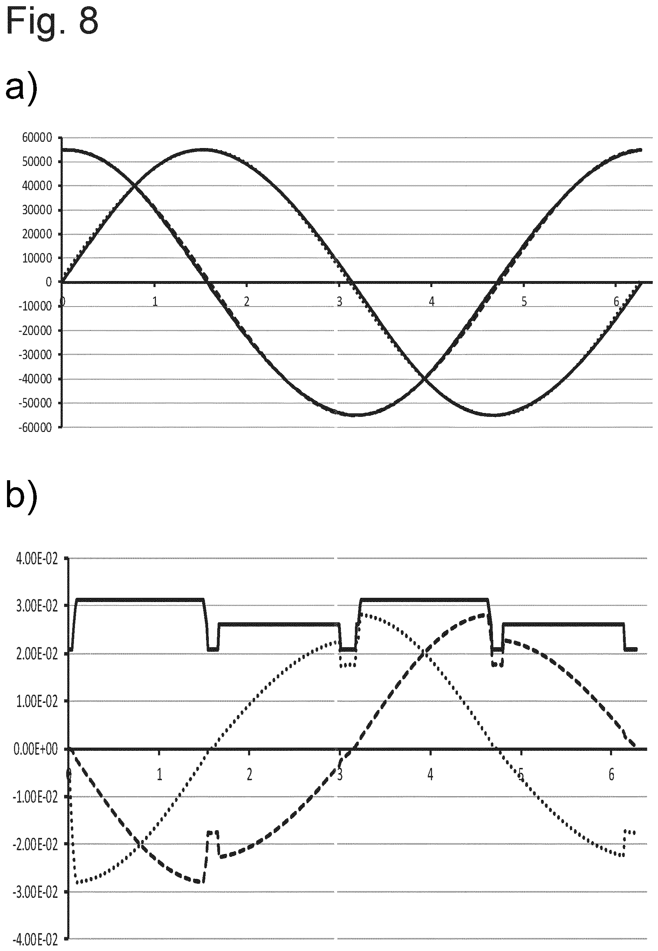

Figs. 8 a,b show the result of a phase error correction according to the above inventive third exemplary variant. Above formulae (1) and (2) contain as the phase error a term -α/2 and +α/2, respectively. If α/2 itself is greater than zero then the cos$_{input}$ as per formula (1) lags behind (is shifted to the right on the time or angle scale) whereas the sin$_{input}$ as per formula (2) runs ahead (is shifted to the left on the time or angle scale). The net result is that sin$_{input}$ is closer to cos$_{input}$ by the phase shift α, i.e. the phase shift from cos$_{input}$ to sin$_{input}$ is π/2-α instead of the normal π/2. This situation typically arises when the belt with magnetic markers has been somewhat elongated during use (the pole pitch is thus increased from a normal, unelongated DP' to an elongated DP), without in the position sensing unit the distance between the sensor generating the sinusoidal signal and the sensor generating the cosinusoidal signal having been increased accordingly. Fig.8 a shows over a full period in radians that situation for an exemplary α/2 of +0.03 radians. This corresponds to a belt elongation factor, and thus to an increase factor of DP over DP', of 1+0.06/2π = 1.0095 or nearly 1% belt elongation. The sin$_{input}$ and cos$_{input}$ have a nominal digitized amplitude (ADC units) of 55000. The cos$_{input}$ signal lagging behind in time or angle is shown with a dashed line and the $\sin_{input}$ signal running ahead in time or angle is shown with a dotted line. The phase error-corrected $\cos_{corr}$ and $\sin_{corr}$ values so obtained, using an initial magintude $M_\varphi$ of 1.25 times the nominal amplitude A, after iterating from an initial value of k = 6 up to a maximum value of 31, are plotted against the corresponding phase error-corrected angles $\varphi$ and are shown with solid lines. The $\cos_{corr}$ now essentially shows the normal phase shift of $\pi/2$ with respect to $\sin_{corr}$ with negligible additional errors. The respective corrective $\Delta\alpha$, $\Delta C$ and $\Delta S$ values obtained after the last iteration are plotted in Fig.8 b against the corresponding corrected phase angles $\varphi$ over a full period in radians and are shown with solid, dashed and dotted lines, respectively.

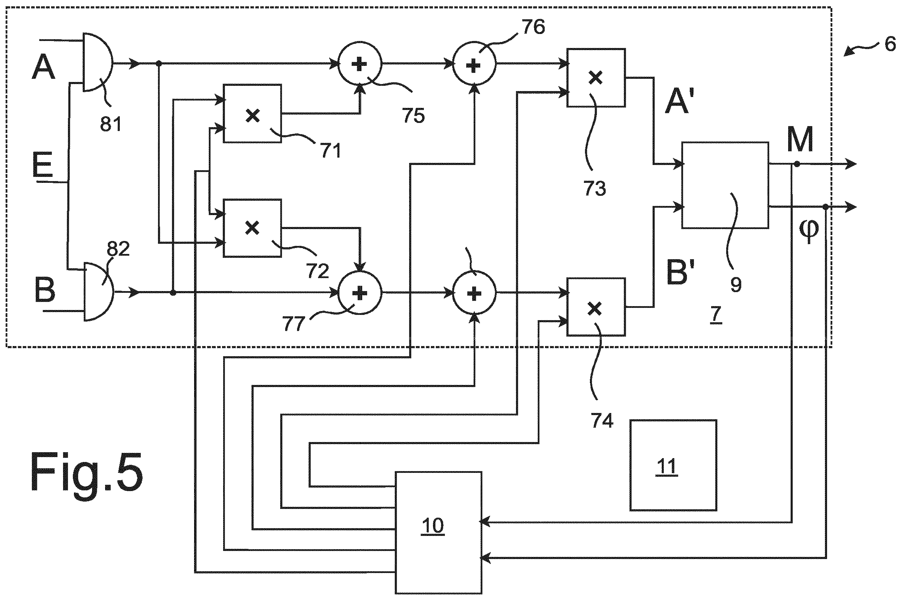

An exemplary schematic of a control unit 6 that is suitable for carrying out the above second exemplary variant with equations (3f) and (4f) and the above third exemplary variant with equations (3j) and (4j) is depicted in Fig.5. This control unit comprises an FPGA 7, e.g. a Cyclone 5 (Intel). The FPGA 7 firstly carries out, for each considered ADC signal pair A ($\cos_{input}$) and B ($\sin_{input}$) the calculation of above equations (3f) and (4f), typically using two consecutive Altera lpt_mult megafunctions for each one of the two equations. The first one for equations (3f) and (3j) has reference sign 71 and executes the multiplication of $\sin_{input}$ by any required factors. The first one for equations (4f) and (4j) has reference sign 72 and executes the multiplication of $\cos_{input}$ by any required factors. The second one for equations (3f) and (3j) has reference sign 73 and executes the final scaling multiplication by $(A+\Delta A_C)/G_C$. The second one for equations (4f) and (4j) has reference sign 74 and executes the final scaling multiplication by $(A+\Delta A_S)/G_S$. Further logic gates 75,76,77,78 implement the additions/subtractions that appear in formulae (3f), (3j), (4f) and (4j). The FPGA 7 furthermore may comprise two AND gates 81,82 for establishing whether the input signal pair A/B is to be considered, based on the signal state of the signal line E. The state of this signal line E may be directly derived from the respective position sensing unit, as the outcome of its Hall sensors which may be the said blank zone entering signal and said blank zone leaving signal. Alternatively the state of this signal may be derived from the state of the abovementioned "consideration/non-consideration" flag which in turn is set by the said blank zone entering signal and said blank zone leaving signals. The FPGA 7 furthermore comprises a suited architecture 9 for carrying out on the error-corrected output signals A' ($\cos_{corr}$) and B' ($\sin_{corr}$) so obtained the magnitude $M_\varphi$ and phase angle $\varphi$ calculations as per the said CORDIC algorithm. The control unit 6 furthermore comprises a microcontroller 10 for carrying out the calculation of the error correction values $G_C$, $G_S$, $(C-\Delta C)$, $(S-\Delta S)$ and $\Delta\alpha$ with formulae (18a)/(18b), (20a)/(20b), (19a)/(19b), (21a)/(21b) and (22a)/(22b), respectively (second exemplary variant), or for carrying out the calculation of the initial $\sin(\varphi)$ and $\cos(\varphi)$ values and the error correction values $(A+\Delta A_S)/G_S$, $(A+\Delta A_C)/G_C$, $(C-\Delta C)$ and $(S-\Delta S)$ with formulae (24b), (24a), (25a) and (25b), respectively, and for the summing up of the $(\alpha/2-\Delta\alpha)$ increments to $\Delta\alpha$ (third exemplary variant). If the control unit 6 is used in the second exemplary variant for error correction it furthermore comprises a read/write storage 11 for storing the value pairs magnitude M and phase $\varphi$ of one or two periods. Alternatively, if it is used in the third exemplary variant no such read/write storage 11 is required. The outputs of the microcontroller 10 serve as input for the FPGA 7. On the other hand, the final output values of $M_\varphi$ and $\varphi$ will be used for further processing, as will be explained below.

The shown operation path in Fig.5 is for one sole considered ADC input signal pair A/B and one signal E; in reality the FPGA 7 would comprise for each ADC input signal received from a position sensing unit (whether considered or not) a corresponding operation path.

The control unit performs as a third, mandatory task, a calculation of an incremental position angle $\varphi$. This may be either obtained by directly dividing each $\sin_{input}$ and $\cos_{input}$ value directly received from any of the considered ADC's and calculating the inverse tangent from the quotient so obtained (if the above second but preferred error correction was not carried out), or it may be the final phase $\varphi$ obtained after having carried out one of the above second but preferred error corrections.

The control unit performs as a fourth, optional task, simultaneously with or sequentially after the third task, the calculation of a first derivative in time of the incremental position angle $\varphi$, to obtain the $\omega$ defined above, which is independent of any (unknown) phase shifts $\beta$ between the raw $\sin_{input}$ and $\cos_{input}$ signals obtained from different considered ADC's. If the fourth task is performed simultaneously with the third task then directly:

$$\frac{d\left(\arctan\left(\dfrac{\sin(\omega t+\beta)}{\cos(\omega t+\beta)}\right)\right)}{dt} \equiv \omega$$

Such unknown phase shifts $\beta$ may be due e.g. to distances $L_{ik}$ between two position sensing units to be considered which are non-integer multiples of 2*DP (DP as defined above) and/or to the length of the end-joining zone $L_j$ being a non-integer multiple of 2*DP. The control unit may calculate $\omega$ only approximately at discrete time points, each time point being separated from the next time point by a finite, constant time interval $\Delta t$ as

$$\frac{\arctan\left(\dfrac{\sin\left(\omega\left(t+\Delta t\right)+\beta\right)}{\cos\left(\omega\left(t+\Delta t\right)+\beta\right)}\right)-\arctan\left(\dfrac{\sin\left(\omega t+\beta\right)}{\cos\left(\omega t+\beta\right)}\right)}{\Delta t}\approx\omega$$

wherein $\Delta t$ is sufficiently small such as to constitute a reasonable approximation for the foregoing formula.

The control unit may assume the $\omega$ as constant in time or as variable in time. In particular in the case of the above approximative calculation it may consider the approximative $\omega$ so obtained as a series of discrete value pairs $t_n/\omega(t_n)$, wherein $t_n$ is the n-time point and $\omega(t_n)$ the value of $\omega$ at that time point. The control unity may store that series in an internal memory, to calculate therefrom approximate angular acceleration or deceleration values.

The control unit performs, as a fifth mandatory task, incremental position determination. This may be done on the one hand, when the above fourth optional task was done, by counting at a frequency proportional to said $\omega$ (whether constant or variable). The "increment" is an arbitrarily chosen incremental length $\Delta L$, chosen sufficiently small such that the position determination achieves the required fineness. $\Delta L$ may typically be in the range of 1 millimetre to 1 nanometre, depending on the required fineness. That spatial incremental length $\Delta L$ may be stored in the control unit, in erasable/overwritable form or in read-only form. The control unit comprises for the counting of such $\Delta L$ increments typically an integer register that can be incremented in steps of 1. Each such increment of 1 added to the integer register corresponds to one spatial increment of length $\Delta L$ to the absolute position. The control unit increments the count in the integer register at a frequency f which is

$$f=\frac{DP\times\omega}{\pi\times\Delta L}$$

wherein all symbols are as defined above. Alternatively, if the above optional fourth task was not done, then incremental position determination is done directly from the incremental position angle $\varphi$ obtained in the above third mandatory task, by methods and calculations disclosed in WO 2016/146463 A1.

The control unit may perform, as a sixth optional but preferred task, a reset to zero for each of the foregoing integer registers for which it receives from the respective magnetic position sensing unit an blank zone entering signal, or for which it receives from that position sensing unit an blank zone leaving signal. The result is that the integer registers then contain an integer $p_i$ representing an absolute position $P_i$ of each i-th position sensing unit with respect to the start of the end-joining zone as reference point (if the control unit uses the blank zone entering signals for resetting) or with respect to the end of the end-joining zone (if the control unit uses the blank zone leaving signals for resetting). There is thus the defining relation $P_i \equiv \Delta L \times p_i$.

The control unit performs, as a seventh optional but preferred task, one or more of the evaluations outlined below with the of position information contained in its integer registers.

A first type of evaluation is that each $p_i$ in the i-th integer register that corresponds to an i-th position sensing unit being considered (thus wherein the associated "consideration/non-consideration" flag is set to "consideration") may deviate at any time by some offset from the theoretical correct integer value representing the absolute position at that time of each position sensing unit along the belt periphery with respect to the end of the end-joining zone as reference. In order to correct this first type of error the control unit compares, typically when the position sensing unit with a given, fixed index (typically the index 0) has produced the blank zone leaving signal and has the $p_i$ contained in its associated integer register re-set to zero (see above), the content of any integer register wherein the said flag is set to "consideration" with a respective comparative value stored in a lookup table, and replaces the content of each integer register which deviates from the corresponding comparative value by that comparative value. Alternatively the control unit may simply replace, when the position sensing unit with a given, fixed index (typically the index 0) has produced the blank zone leaving signal and has the $p_i$ contained in its associated integer register re-set to zero (see above), the contents of all other integer registers by the corresponding comparative values from the lookup table. The comparative value stored in the lookup table for each position sensing unit is the quotient obtained by dividing (by integer division) its absolute position along the belt periphery with respect to the end of the belt's end-joining zone by the above defined $\Delta L$; under the assumption that the belt is at a position such that the position sensing unit with said given fixed index, such as 0, is exactly at the end of the belt's end-joining zone, thus has a comparative value of 0 as obtained by said integer division.

A second type of evaluation the control unit may correct is positional deformation of the belt by uneven acceleration/deceleration thereof. It is noted that in the case of a multipass inkjet printer, which is one of the preferred applications of the conveyor of the invention, the belt is typically subject to acceleration/deceleration steps by a servo motor, when the belt is supposed to move from one line that has been printed to the next line to be printed, whereas during printing of that next line the belt does not move at all. In order to correct this second type of error the control unit may compare after fixed time periods, which may be integer multiples of the said

The control unit may issue its final position information in one or more channels e.g. as a customary quadrature signal using A and B channels. If the inventive conveyor is used in an single pass or multipass inkjet printer, in particular for printing on textiles, then the final position information may be fed into a customary printer head driver for controlling the printing.

A preferred conveyor of the invention suitable for effecting the above inventive phase error correction (third exemplary variant) thus preferably comprises:

(a) an endless conveyor belt with a belt periphery, an outer conveying surface, an inner pulley-facing surface, magnetic markers being arranged periodically in belt travel direction such that in alternating manner the north pole or the south pole of a magnetic marker points to the outer conveying surface, adjacent such north and south poles being spaced apart from each other by an elongated pole pitch DP producing thereby an alternating magnetic field, the elongated pole pitch DP being greater than, equal to, or shorter than an unelongated and not-shortened pole pitch DP';

(b) at least one position sensing unit arranged along the belt periphery and in spatial proximity of the magnetic markers, that at least one position sensing unit being capable, when the conveyor belt runs in travel direction and DP is greater or smaller than said DP', of detecting from the magnetic field of the magnetic markers 1) a cosinusoidal voltage signal; and 2) a corresponding phase-shifted sinusoidal voltage signal being shifted by a phase angle $\alpha$-$\pi/2$ with respect to the cosinusoidal signal 1), $\alpha$ being greater than zero; and that at least one position sensing unit also being capable, when the conveyor belt runs in travel direction and DP is equal to DP', of detecting from the magnetic field of the magnetic markers 3) a cosinusoidal voltage signal corresponding to an angular position of the position sensing unit with respect to the magnetic marker pattern; and 4) a corresponding sinusoidal voltage signal being shifted by a phase angle $-\pi/2$ with respect to the cosinusoidal signal 3) and corresponding to the same angular position of the position sensing unit with respect to the magnetic marker pattern;

(d) a control unit that derives position information from digitized sinusoidal and cosinusoidal voltage signals of the at least one position sensing unit, the digitized signals having a nominal amplitude A, wherein the control unit is furthermore configured for performing iterative phase error corrections using above third exemplary variant with formulae (3j) and (4j) on the digitized sinusoidal ($\sin_{input}$) and cosinusoidal ($\cos_{input}$) voltage value pairs as follows:

a) for an iteration start, to assume initial values of $\Delta\alpha$, $\Delta C$ and $\Delta S$ as appearing in above formulae (3j) and (4j) and as defined for above formulae (3a) and (4a) as zero; to assume a value $\sigma$ which is +1 if $\alpha/2$ is positive or zero and which is -1 if $\alpha/2$ is negative; to assume an initial initial integer value of k in the range of 4 to 8, preferably 6, or, if the

$$2^{-(k+1)} < \left|\frac{\alpha}{2}\right| \leq 2^{-k}$$

magnitude of $\alpha/2$ is known, to assume an initial value of k such that ; to assume a magnitude $M_\varphi$ reasonably close to said nominal amplitude A, preferably in the range of 0.5 to 2 times said nominal amplitude A, and to assume an initial position angle $\varphi = \pi vt/DP'$ (wherein v is a nominal belt travel speed, t is derivable from a timer or clock comprised in the control unit, and DP' is the above unelongated and not-shortened pole pitch) and to generate from said initial initial $\varphi$ value initial values of $\cos(\varphi)$ and $\sin(\varphi)$;

b) using the $\sigma$ from step a) and the k from step a) or step g), as applicable, to set a value $\left(\frac{\alpha}{2} - \Delta\alpha\right) = \sigma 2^{-k}$ , and to use that value and the $\cos(\varphi)$ and $\sin(\varphi)$ from step a) or step d), as applicable, to calculate values for S-$\Delta$S and C-$\Delta$C using above equations (25b) and (25a), respectively, and to use the $M_\varphi$ from step a) or step d), as applicable, and the $\Delta\alpha$ from step a) or step f2), as applicable, to calculate values for (A+$\Delta A_S$)/$G_S$ and (A+$\Delta A_C$)/$G_C$ using above equations (24b) and (24a), respectively (these values are thus identical);

c) to calculate a $\cos_{corr}$ value and a $\sin_{corr}$ value using equations (3j) and (4j), respectively, using $\Delta\alpha$, $\Delta C$ and $\Delta S$ from step a) or step f2), as applicable, and $\left(\frac{\alpha}{2} - \Delta\alpha\right)$ , (A+$\Delta A_S$)/$G_S$ = (A+$\Delta A_C$)/$G_C$, C-$\Delta$C and S-$\Delta$S from step b);

d) to calculate with the $\cos_{corr}$ and $\sin_{corr}$ values obtained in step c) a new associated magnitude $M_\varphi$ and a new associated $\varphi$ value using equations (16) and (17) or, preferably, using the above discussed CORDIC algorithm in "vectoring" mode, respectively, and new associated $\cos(\varphi)$ and $\sin(\varphi)$ values using equations (16a) and (16b), and, optionally, if the calculation by equation (17) or by the CORDIC algorithm provides a $\varphi$ confined betwen $-\pi/2$ and $+\pi/2$, to

i) add $2\pi$ to that confined $\varphi$ if $\sin_{corr} < 0$ and $\cos_{corr} > 0$; or

ii) add $\pi$ to that confined $\varphi$ if $\sin_{corr} > 0$ and $\cos_{corr} < 0$; or

iii) add $\pi$ to that confined $\varphi$ if $\sin_{corr} < 0$ and $\cos_{corr} < 0$;

e) to use the values for $M_\varphi$ obtained in step d), the $\Delta\alpha$ from step (a) or step f2), as applicable, and the $\left(\dfrac{\alpha}{2} - \Delta\alpha\right)$ value from step b), and to calculate a new value $(A+\Delta A_S)/G_S = (A+\Delta A_C)/G_C$ using above equations (24b) or (24a) (they are thus identical);

f) to check if the new value for $(A+\Delta A_S)/G_S = (A+\Delta A_C)/G_C$ is closer to A than the corresponding previous value of $(A+\Delta A_S)/G_S = (A+\Delta A_C)/G_C$ from step b), and if so:

f1) to set the new value of $(A+\Delta A_S)/G_S = (A+\Delta A_C)/G_C$ from step e) as the corresponding previous value of $(A+\Delta A_S)/G_S = (A+\Delta A_C)/G_C$;

f2) to add the values of $\left(\dfrac{\alpha}{2} - \Delta\alpha\right)$, C-$\Delta$C and S-$\Delta$S of step b) to the values of $\Delta\alpha$, $\Delta$C and $\Delta$S, respectively;

and

g) to increase k by 1;

h) to re-iterate through steps b) to g) until k is a maximum index greater than or equal to said initial value, such as in the range of 10 to 64, e.g. 10, 15 or 31) ; and

i) to take the $M_\varphi$ and the $\varphi$ and/or the $\cos(\varphi)$ and final $\sin(\varphi)$ as obtained in step d) of the last iteration carried out, for position determination;

whereby the control unit is configured for not employing read/write storage means containing stored digitized sinusoidal and/or cosinusoidal voltage signals while carrying out the above iterations.

For this inventive conveyor the above phase error $\alpha$ is preferably in the range of 0 to +0.06 radians, corresponding to a ratio of DP/DP', and thus to a belt elongation, in the range of 1 to 1.00955 . More preferably the above phase error $\alpha$ is in the range of 0 to +0.03 radians, corresponding to a ratio of DP/DP', and thus to a belt elongation, in the range of 1 to 1.00477.

Also more preferably for this inventive conveyor, the signal offsets C and S appearing in the phase error-loaden $\cos_{input}$ and $\sin_{input}$ of above formulae (1) and (2) are each zero, and the ADC zero point Z also appearing in above formulae (1) and (2) is also zero or has been corrected to zero.

Preferably for this inventive conveyor the control unit comprises a FPGA and/or a microcontroller.

The sensors generating sinusoidal and cosinusoidal voltage signals in this inventive conveyor may be Hall sensors generating signals from the intensity of the magnetic flux density B or may be Wheatstone bridge(s) generating signals from the direction of the magnetic flux density B, as decribed above. In this latter case each sensor may comprise one or two Wheatstone bridges, and here more referred embodiments of this conveyor are as described in claim 3 (one Wheatstone bridge for each sensor) and claim 4 (two Wheatstone bridges for each sensor).

For the purposes of the invention, any absolute position of a position sensing unit is understood as the absolute position, with respect to the end (or start) of the belt's end-joining zone and along the belt periphery, of the point which is halfway on the spacing between the two magnetoresistive sensors contained therein, wherein the length of said spacing, involving two magnetoresistive sensors as endpoints, is calculated as defined above.

The magnetic markers may typically be in the form of a matrix of elastomeric, thermoplastic elastomeric or thermoplastic material comprising particles of a ferromagnetic material. The ferromagnetic material for the magnetic markers is not particularly limited, as long as it fulfils the foregoing magnetic parameters. It may preferably be selected from the group consisting of alkaline earth metal ferrites (e.g. barium ferrite, strontium ferrite), alnico types, and ferromagnetic chromium(IV)oxide and iron oxide types. Preferably the ferromagnetic material is anisotropic.

The matrix material in which the particles of ferromagnetic material are embedded is either an elastomer, a thermoplastic elastomer or a thermoplastic. The most preferred material for the matrix is an elastomer, in particular NBR or EPDM, or a thermoplastic elastomer, in particular TPU.

The filling degree of ferromagnetic material particles in the matrix is typically 60 to 90%, preferably 60 to 80 vol%, more preferably 65 to 75 % by volume, based on the matrix with ferromagnetic particles embedded therein.

The geometric thickness of the markers so introduced is preferably 30 to 70%, more preferably 30 to 60% of the overall thickness of the belt.

The magnetic markers so introduced produce a raw magnetic signal which can be detected by the magnetoresistive sensors, if arranged at a certain distance A, or air gap, between the surface of the magnetic markers and the centre of the bridge of the Wheatstone bridge contained in the magnetoresistive sensors (see Fig.1). The air gap A typically depends from, and preferably is approximately proportional to, the pole pitch DP. For instance, the air gap A may typically be 0.2 to 1.0 times the pole pitch DP.

The periodic pattern of magnetic markers may be provided in the form of a preformed strip of markers of ferromagnetic particles embedded in a matrix of elastomeric material, optionally with a suited backing material. Preformed strips of this type are commercially available in open-ended (linear) form for use in static (non-conveyor belt) applications. Examples thereof at the filing time of this application are the Plastiform® strips of Arnold Magnetic Technologies, Norfolk, Newark, USA, and the Tromaflex® strips of Max Baermann Holding AG, Bergisch Gladbach, Germany. Preferably the strip(s) with the matrix of elastomeric or thermoplastic elastomeric material comprising the particles of ferromagnetic material is(are) incorporated into the cover layer of the belt. In particular it can be embedded into a groove of matching shape which has been milled into the cover layer, the groove running in the longitudinal direction of the belt. The strip may be welded after incorporation to the belt by adhesive or thermoplastic bonding. Preferably the cover layer and the strip of matrix material with ferromagnetic material embedded therein are furthermore overcoated with a top layer to shield the strip from environmental dust or dirt.

The belt as such contained in the conveyor of the invention is conventional. It may be any type of monolithic or monolayer or multilayer fabric-reinforced or cord-reinforced belt, provided it is suitable for inserting therein the periodic pattern of magnetic markers and is suitable for end-joining from a two-ended form into an endless form. The joining of the belt ends, to make the belt endless, may preferably be done using the so-called "finger end" method, wherein the two ends of the open-ended belt are cut into a saw toothed shape in such a way that each tooth of one end can seamlessly abut with a corresponding recess between two teeth of the other end, and vice-versa. Once the teeth of the one end of the belt are engaged seamlessly with the teeth of the other end, the two belt ends are welded together using heat and pressure and optionally with co-use of a hotmelt adhesive. The result is a zig-zaged belt joint extending over the entire transversal width of the now endless belt.

The conveyor of the invention does not use any extra reference markers for detecting any blank zone(s), it only relies on the magnetic markers themselves for detecting the blank zone(s).

The conveyor of the invention may be used in any field where a position determination, in particular a high precision position determination, of the belt is necessary. It may then e.g. be configured and used as a timing belt, positive driven belt, flat belt, positive driven belt or power transmission belt. The preferred application for the conveyor of the invention with alternating markers, in particular with a periodic marker pattern, is however in a single pass or multipass inkjet printers, in particular for printing of textiles. Such a printer is in fact a conveying device typically having at least a drive pulley and a idler pulley and an endless conveyor belt looping around these, but with furthermore the capability to simultaneously print upon a conveyed substrate.

Fig.5 shows an exemplary embodiment of an inkjet printer containing the inventive conveyor. This printer (which may be a single pass or multipass inkjet printer) comprises four inkjet printing heads 101,102,103,204, which might correspond to the C, M, Y and K colours, respectively. There is again a control unit 6 which would evaluate the angular information received from the position sensing units 51,52,53,...5N (total 8 position sensing units). In this embodiment two position sensing units are associated within the control unit 6 for each inkjet printing head, e.g. the two position sensing units 101,102 (which could be considered as having indexes 1 and 2) are associated in the control unit 6 with the first printing head 101 (which might be considered as having index 1); the two position sensing units 53,54 (which might be considered as having indexes 3 and 4) are associated in the control unit 6 with the second printing head 102 (which might be considered as having index 2), and so on. This figure also illustrates the meaning of the absolute position Pm of the m-th printing head (here: m = 4) with respect to the end of the end-joining zone, if the belt is assumed as travelling in clockwise rotation around the pulleys. The control unit 6 produces for each of the printing heads position information from the two position sensing units that are associated with that printing head, which position is transmitted to that printing head containing a printer driver for timing the printer heads 101, 102. The generation of such timing based on position information of the belt and on the image to be printed is as such conventional and well known in the art of inkjet printers, particularly in the field of textile printing machines.

The invention will now be further illustrated with examples.

Example 1: Synchronisation errors test with inventive conveyor

An inventive conveyor similar as the one of Fig.4 was set up. The periodic pattern of magnetic markers 3 was in the form of a commercially available magnetic strip yet devoid of magnetic markers, which corresponds to a spatial frequency $\xi_m$ of the magnetic markers of 200 m$^{-1}$. The belt was made endless to give an endless belt of 4 m length with a end-joining (blank) zone of a length $L_j$ of approximately 100 mm and was mounted on the conveyor 1. Following that the magnetic strip was provided with magnetic marker with a pole pitch of 5 mm which corresponds to a spatial frequency $\xi_m$ of the magnetic markers of 200 $m^{-1}$. The magnetic markers were applied to the entire peripery of the endless belt except for a blank zone of about 100 mm, which was the end-joining zone of the belt, where no magnetic markers were applied. A set of periodically repeating identical small test images of approximately rectangular shape was then burnt onto the entire longitudinal periphery of the conveying surface 23 of the belt 2 by a laser. The number of the test images, $N_i$, was 800, and they were spaced apart from each other in belt travel direction by 5 mm. Thus their spatial frequency, $\xi_i$, was 200 $m^{-1}$, which was identical to above $\xi_m$.

Atop of the portion not bein bent over to pulleys, 22, of the periphery of the belt 2 were mounted two position sensing units according to the preferred embodiment depicted in the right part of Fig.1 and associated description (AL780AMA, Sensitec), one upstream and one downstream with reference to the belt's travel (looping) direction, and spaced apart from each other at an exactly known distance $L_{12}$ which was an integer multiple of $1/\xi_m$, and which was thus the same integer multiple of $1/\xi_i$.

For the detection of the end-joining (blank) zone of the conveyor belt 2 four Hall sensors (EQ-731L, Asahi Kasei Microdevices) were placed atop of a portion of the periphery of the belt 2 not being bent over pulleys, 22, such that each of the two position sensing units was sandwiched between two Hall sensors. The inner two Hall sensors, corresponding to the end signalling means for the upstream position sensing unit and to the start signalling means for the downstream position sensing unit, were spaced apart by a distance greater than the length of the blank zone, and accordingly the above length L12 was even greater than the length of that blank zone. This corresponds to above most preferred embodiment B2.

Each of the raw sinusoidal and cosinusoidal output of the two position sensing units was low pass filtered, scaled by means of a two op amp instrumentation amplifier and converted to digital signals by two 18bit ADC's, to give digitized sinusoidal and cosinusoidal output signals with a nominal amplitude A of 50000 ADC units in the form of signed integers (Z = 0). These were processed by a control unit 6 similar as the one schematically depicted in Fig.4 and associated description, using error correction according to the above second exemplary variant of the general specification and end-joining (blank) zone detection as also described in the general specification. The control unit 6 produced a square wave signal with a spatial resolution of 400000 $m^{-1}$ by default from the signals of the upstream position sensing unit, unless its output was to be disregarded (see above), in which case the control unit 6 generated that square wave signal from the signals of the downstream position sensing unit. This spatial resolution of the square wave signal was thus 2000 times the above spatial resolutions $1/\xi_m$ and $1/\xi_i$, thus an integer multiple of both these two spatial resolutions. Furthermore near each of the two position sensing units was mounted a photographic camera focusing onto the conveying surface 23 of the belt 2, with the two cameras being spaced apart by the same distance $L_{12}$ as the position sensing units and with each camera being able to take pictures of the said small test images on the belt's conveying surface. Each of the cameras was controlled by an individual synchronisation station in such a way that it would take one photograph of the belt's surface for every 2000 pulses of the said square wave signal, thus, in view of its said spatial frequency of 400000 $m^{-1}$, for every 5 mm of belt travel distance. Thus each camera so synchronized would take exactly one photograph for every small test image passing the camera.

Once the start of the pattern of small test images passed the first, upstream position sensing unit and camera, the associated synchronisation station started to generate a trigger signal for the upstream camera for every 2000 pulses of the square wave signal. The photographs generated by the upstream camera were corrected for vignetting effects and brightness and stored on a computer. After the pattern of small test images had completely passed the upstream camera and position sensing unit, the photographic acquisition process by the upstream camera was stopped.

However the synchronisation station for the upstream camera also transmitted that first trigger signal to the synchronisation station of the downstream camera. After receipt of that trigger signal the synchronisation station for the downstream camera waited a predefined integer number of pulses from the square wave signal of the control unit 6, which predefined number was above $L_{12}$ multiplied by 400000 $m^{-1}$, and after that predefined number of pulses was reached the synchronisation station for the downstream camera started to create trigger signals for the downstream camera every 2000 pulses of the square wave signal from the control unit 6. The photographs generated by the downstream camera were also corrected for vignetting effects and brightness and stored on the computer. After the pattern of small test images had completely passed the downstream synchronization station, the photographic acquisition process by the downstream camera was also stopped.

Thus, in theory, each photograph of a given n-th small test image, taken by the upstream camera at a count of n $\times$ 2000 pulses of the square wave signal, should give rise to an exactly corresponding (identical) photograph of the same small test image taken by the downstream camera at a count of $(n + L_{12} \times 400000\ m^{-1}) \times 2000$ pulses of the square wave signal from the control unit 6.

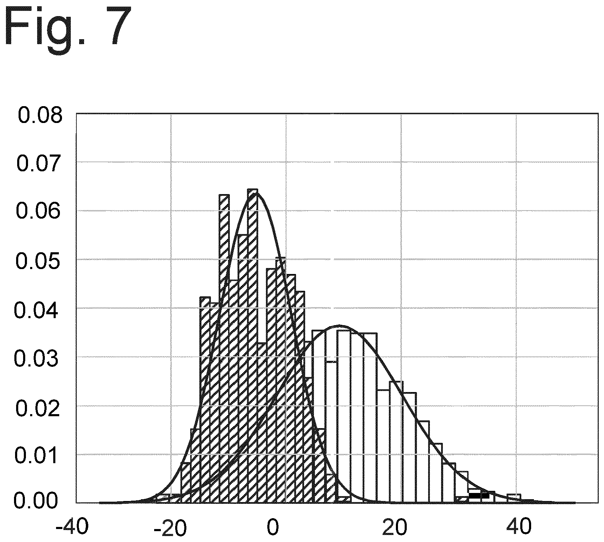

The inventive conveyor 1 so prepared and set up was conveyed at a nominal belt travel speed of 0.25 $m\ s^{-1}$. This speed was dictated only by the maximum number of photographs that the cameras could take, namely 60 photographs $s^{-1}$. Taking a photograph at every 5 mm belt travel distance (see above) gave, at 0.25 $m\ s^{-1}$, 50 photographs per second. A series of 3 belt revolutions were done. The corresponding photographs of upstream and downstream camera of a given small test image with index n (as described in the foregoing paragraph) were compared by the computer to find out whether the centres of the test images, as appearing on the two corresponding photographs, deviated from each other by some distance $\Delta x$ in the horizontal direction of the photographs (which corresponded to the travel direction of the belt during conveying). This distance $\Delta x$, which was typically in the magnitude of micrometres, was considered as the synchronisation error in the longitudinal (travel) direction of the belt for the n-th test image. All synchronisation errors so obtained were categorized into groups of 2 micrometres width, ranging from -40 micrometres to +40 micrometres (thus the first group contained the number of observed synchronisation errors in the range of -40 to -38 micrometres, the second group contained the number of synchronisation errors in the range of -38 to -36 micrometres, until the last group which contained the number of synchronisation errors in the range of +38 micrometres to +40 micrometres), and the number of observed synchronisation errors in each group was divided by the total number of synchronisation errors, to give probabilities of the synchronisation errors being in a given group. The probability groups so obtained were best fitted by a first Gaussian curve. The groups so obtained are shown in Fig.7 as hatched bars and the best fit first Gaussian curve is laid atop of them. The x-axis in the graph of Fig.7 is the synchronisation error in micrometres and the y-axis of the graph is in probability units (thus between 0 and 1). That first best fit Gaussian curve has mean value of -5.33 micrometres and standard deviation of 6.28 micrometres.

Comparative Example 2: Synchronisation errors test with a conveyor using a prior art linear encoder

The setup of Example 1 was repeated, except that instead of the two position sensing units and the control unit 6 a commercial linear encoder (Lika) was used for generating a square wave signal with same spatial frequency of $400000\text{m}^{-1}$. This commercial linear encoder is also able to step over the end-joining zone of length $L_j$ of the conveyor belt without loss of position information. The exact construction and working principle of this commercial linear encoder is however unknown. The same synchronisation errors were produced with this comparative setup as with the inventive setup of Example 1 and they were again categorized into probability groups as described in Example 1. The resulting probability groups are also shown in Fig.7 as white bars and a best fit second Gaussian curve is also laid atop of them. This second best fit Gaussian curve has mean value of +9.27 micrometres and standard deviation of 10.96 micrometres, indicating that synchronisation errors are on average greater and furthermore more unevenly distributed than with the inventive setup.

**Claims**

1.  A conveyor (1) comprising

    a) an endless conveyor belt (2) with a belt periphery (21,22), an outer conveying surface (23), an inner pulley-facing surface (24), magnetic markers (3) along the entire belt periphery (21,22) except for one or more blank zone(s) (4) each of a length $L_j$, wherein j is the index of the blank zone, the magnetic markers (3) being arranged in belt travel direction such that in alternating manner the north pole (31) or the south pole (32) of a magnetic marker (3) points to the outer conveying surface (23), adjacent such north and south poles being spaced apart from each other by a pole pitch DP, producing thereby an alternating magnetic field of a default maximum intensity; wherein in each of said blank zone(s) (4) the magnetic markers are absent or produce a magnetic field of lower maximum intensity than said default maximum intensity;
    b) at least 2 position sensing units (51,52,53,54,55,56,57,58) arranged along the belt periphery (21,22) and in spatial proximity of the magnetic markers (3), each one being capable, when the conveyor belt (2) runs in travel direction, of detecting the magnetic field from magnetic markers (3) not being in the blank zone(s) (4) and to produce thereby when the belt runs in travel direction, 1) a sinusoidal voltage signal about the orientation of the magnetic flux density B sensed from the magnetic markers and thus corresponding to the angular position of the position sensing unit with respect to the pattern; and 2) a corresponding cosinusoidal voltage signal corresponding to the angular position of the position sensing unit with respect to the pattern; wherein among said at least 2 position sensing units (51,52,53,54,55,56,57,58) there are at least 2 spaced position sensing units (51,52,53,54,55,56,57,58) of which each one is spaced apart from any one of the remaining spaced position sensing units by a peripheral distance in belt travel direction which is greater than any length $L_j$ of any blank zone (4);
    c) means (51,52,53,511,521,531,532,533,534) capable of generating a blank zone entering signal when the maximum intensity of the magnetic field detected by a position sensing unit drops, or is about to drop, down to or below a threshold intensity lower than said default maximum intensity and means (512,522) capable of generating a blank zone leaving signal for that position sensing unit when the maximum intensity of the magnetic field detected by that same position sensing unit rises, or has risen, to or above said threshold intensity; and
    d) a control unit (6) that derives, when the conveyor belt (2) runs in travel direction, belt position information from the sinusoidal and cosinuosoidal voltage signals of all position sensing units (51,52,53,54,55,56,57,58), provided that the control unit (6) disregards the sinusoidal and cosinusoidal voltage signals from any position sensing unit as from the time point that it receives said blank zone entering signal for that position sensing unit and re-considers the sinusoidal and cosinusoidal voltage signals of that position sensing unit as from the time point that it receives said blank zone leaving signal for that position sensing unit.

2. The conveyor (1) of claim 1, wherein there are at least 3 position sensing units (51,52,53,54,55,56,57,58); among which there are at least 3 spaced position sensing units (51,52,53,54,55,56,57,58) of which each one is spaced apart from any one of the remaining spaced position sensing units by a peripheral distance in belt travel direction which is greater than said $L_j$.

3. The conveyor (1) of claim 1 or 2, wherein each position sensing unit (51,52,53,54,55,56,57,58) comprises

   i) two Wheatstone bridges (513,514) each comprising upper and lower legs of magnetoresistive sensors operating by anisotropic magnetoresistivity (AMR), the Wheatstone bridges (513,514) being spaced apart from each other by a spacing distance DP/4, DP being as defined in claim 1, such that, when the position sensing unit (51,52,53,54,55,56,57,58) is arranged in said spatial proximity of the magnetic markers (3) in such a way that the direction of the magnetic marker pattern, and thus the conveyor belt's (2) travel direction, is parallel to said spacing distance and the conveyor belt (2) runs in said travel direction, one of the two Wheatstone bridges (513 or 514) generates from the angle between orientation of the magnetic flux density B and said direction of the magnetic marker pattern said sinusoidal voltage signal and the other one (514 or 513) generates said corresponding cosinusoidal voltage signal.

4. The conveyor (1) of claim 1 or 2, wherein each position sensing unit (51,52,53,54,55,56,57,58) comprises a first pair of Wheatstone bridges (513,514) being separated from each other by DP/4, DP being as defined in claim 1, so as to generate from the pattern of alternating north and south magnetic poles a sinusoidal and a corresponding cosinusoidal signal, and also comprises a second pair of Wheatstone bridges (515,516) being again separated from each other by DP/4 so as to generate from the pattern of alternating north and south magnetic poles again a sinusoidal and a corresponding cosinusoidal signal, and the two pairs of Wheatstone bridges in turn being separated from each other by said DP, and furthermore one of the pairs of Wheatstone bridges (513,514 or 515,516) having a power supply the polarity of which is inverted with respect to the polarity of the power supply of the other pair of Wheatstone bridges (515,516 or 513,514) such that the first Wheatstone bridge (515) of the second pair (515,516) detects a magnetic north pole while being over a magnetic south pole (32), simultaneously when the first Wheatstone bridge (513) of the first pair (513,514) is over, and detects, a magnetic north pole (31), and vice versa; and the first Wheatstone bridge (515) of the second pair (515,516) detects a magnetic south pole while being over a magnetic north pole (31), simultaneously when the first Wheatstone bridge (513) of the first pair (513,514) is over, and detects, a magnetic south pole (32), and vice versa; and the signals from the first Wheatstone bridge (513) of the first pair (513,514) and the signal from the first Wheatstone bridge (515) of the second pair (515,516) are summed and optionally averaged; and the signals from the second Wheatstone bridge (514) of the first pair (513,514) and the signal from the second Wheatstone bridge (516) of the second pair (515,516) are summed and optionally averaged.

5. The conveyor of anyone of the preceding claims, wherein each position sensing unit (51,52,53,54,55,56,57,58) itself generates a blank zone entering signal when the maximum intensity of the magnetic field detected by it drops down to or below a threshold intensity lower than said default maximum intensity and generates a blank zone leaving signal when the maximum intensity of the magnetic field detected by it rises to or above said threshold intensity.

6. The conveyor of claim 5, which is capable of forming a sum of the squares of the intensities of the sinusoidal and cosinusoidal signals detected by each position sensing unit (51,52,53,54,55,56,57,58) or a square root of such sum, is capable of generating said blank zone entering signal for that position sensing unit when said sum of squares of signal intensities, or said square root thereof, from that position sensing unit drops significantly below said default intensity, and is capable of generating said blank zone leaving signal for that position sensing unit when said sum of squares of signal intensities, or said square root thereof, rises to or above said threshold intensity.

7. The conveyor (1) of anyone of claims 1 to 4, wherein for each position sensing unit (54,55) there is one start signalling means (511,521) capable of generating a blank zone entering signal when the maximum intensity of the magnetic field detected by that start signalling means (511,521) drops down to or below a threshold intensity lower than said default maximum intensity and one end signalling means (512,522) capable of generating a blank zone leaving signal when the maximum intensity of the magnetic field detected by that end signalling means (512,522) rises to or above said threshold intensity, wherein each start signalling means (511 resp. 521) is upstream of one corresponding position sensing unit (54 resp. 55) and each end signalling means (512 resp. 522) is downstream of that corresponding position sensing unit (54 resp. 55), such that start and end signalling means sandwich between them the corresponding position sensing unit; and wherein for the said at least two spaced position sensing units (54,55) any pair of two upstream and downstream spaced position sensing units (54,55) furthermore has the end signalling means (512) of the paired upstream position sensing unit (54) spaced apart from the start signalling means (521) of the paired downstream position sensing unit (55) by a distance L which is greater than the greatest length $L_j$ of any blank zone (4) present on the conveyor belt (2), and wherein any references to "upstream" and "downstream" are relative to the belt's travel direction.

8. The conveyor of claim 7, wherein each start signalling means (511 resp. 521) corresponding to a position sensing unit (54 resp. 55) and each end signalling means (512 resp. 522) corresponding to the same position sensing unit (54 resp. 55) are spaced apart from each other by a distance LH which is given by the formula

$$LH = (2N + 0.5) \times DP$$

wherein N is a positive integer of at least 0 and DP is as defined above, provided that N is large enough to accomodate for the position sensing unit in question (54 resp. 55) to be sandwiched between said start signalling means (511 resp. 521) and said end signalling means (512 resp. 522), and the conveyor (1) is capable of forming a sum of the squares of the intensities of the signals detected by a pair of start and end signalling means (511,512 or 521,522) so spaced apart, and generates said blank zone entering signal for said sandwiched position sensing unit (54 resp. 55) when said sum of squares of signal intensities drops below said default intensity, and is capable of generating said blank zone leaving signal for said sandwiched position sensing unit (54 resp. 55) when said sum of squares of signal intensities rises to or above said threshold intensity.

9. The conveyor of anyone of claims 1 to 4, wherein there is one first start signalling means (531) which is upstream of all position sensing units (56,57,58) and is capable of generating a blank zone entering signal for a most upstream (and not necessarily but preferably adjacent) position sensing unit (56) when entering a blank zone (4), one second start signalling means (534) which is downstream of all position sensing units (56,57,58) and is capable of generating, when entering a blank zone (4), a blank zone entering signal which is used or interpreted for a most downstream (and not necessarily but preferably adjacent) position sensing unit (58) as a blank zone leaving signal, and further start signaling means (532,533) in a number which is one less than the number of position sensing units (56,57,58), and any such position units sandwiching pairwise (56,57 resp. 57,58) in between them one such extra means (532 resp. 533), and each further start signalling means (532 resp. 533) being capable of generating, when entering a blank zone (4), a blank zone entering signal for a sandwiching position sensing unit (57 resp. 58) downstream of (and not necessarily but preferably adjacent to) that start signalling means, which signal is also used or interpreted as a blank zone leaving signal for a sandwiching position sensing unit (56 resp. 57) upstream of (and not necessarily but preferably adjacent to) that further start signalling means, wherein the distance $L_m$ by which any further start signalling means (532 resp. 533) is separated from the corresponding sandwiching upstream position sensing unit (56 resp. 57) is greater than the greatest length $L_j$ of any blank zone (4) present on the conveyor belt (2), and also the distance $L_n$ by which said second start signalling means (534) is separated from said most downstream position sensing unit (58) is greater than the greatest length $L_j$ of any blank zone (4) present on the conveyor belt (2), and wherein any references to "upstream" and "downstream" are relative to the belt's travel direction.

10. The conveyor of claim 9, wherein

a) said first start signalling means (531) and one further start signalling means (532) sandwich in between said most upstream position sensing unit (56), and are spaced apart from each other by a distance LH; and
b) said second start signalling means (534) and one further start signalling means (533) sandwich in between them said most downstream position sensing unit (58) and are spaced apart from each other by a distance LH; and
c) in any other pair of further start signalling means (532,533), sandwiching in between them another position sensing unit (57), these further start signalling means are spaced apart from each other by a distance LH;

wherein any such distance LH is given by

$$LH=(2N+0.5)\times DP$$

wherein N is a positive integer of at least 0 and DP is as defined in claim 1, provided that N is large enough to accomodate for the position sensing unit that is sandwiched in between them, and the conveyor (1):

i) is capable of forming a sum of the squares of the intensities of the signals detected by the first start signalling means (531), or a square root thereof, and the one further start signalling means (532) so spaced apart, and of generating a blank zone entering signal for said sandwiched most upstream position sensing unit (56) when said sum of the squares of the intensities of the signals detected by the first start signalling means (531) and the one further start signalling means (532) so spaced apart, or said square root of the sum, drops significantly below said default intensity, and of generating said blank zone leaving signal for said sandwiched most upstream position sensing unit (56) when said sum of squares of signal intensities rises to or above said threshold intensity;

ii) is capable of forming a sum of the squares of the intensities of the signals detected by the second start signalling means (534) and said one further start signalling means (533) so spaced apart, or a square root of said sum, and of generating a blank zone entering signal for said sandwiched most downstream position sensing unit (58) when said sum of the squares of the intensities of the signals detected by the second start signalling means (534) and the further start signalling means (533) so spaced apart, or the square root of said sum, drops significantly below said default intensity, and of generating said blank zone leaving signal for said sandwiched most downstream position sensing unit (58) when said sum of squares of signal intensities, or said square root of said sum, rises to or above said threshold intensity; and

iii) is capable of forming a sum of the squares of the intensities of the signals detected by any paired further start signalling means (532,533), or a square root of said sum, and of generating a blank zone entering signal for the position sensing unit (57) sandwiched in between them when the sum of the squares of the intensities of the signals detected by the pair of further start signalling means (532,533) so spaced apart, or the square root of said sum, drops significantly below said default intensity, and of generating said blank zone leaving signal for said position sensing unit (57) sandwiched in between them when said sum of squares of signal intensities, or the square root of said sum, rises to or above said threshold intensity;

and wherein any references to "upstream" and "downstream" are relative to the belt's travel direction.

11. The conveyor (1) of claim 7 or 8, wherein the first start signalling means (531) and/or the second start signalling means (534) are Hall sensors.

12. The conveyor (1) of claim 9 or 10, wherein the first start signalling means (531), the second start signalling means (534) and/or the further start signalling means (532,533) are Hall sensors.

13. The conveyor (1) of anyone of the preceding claims, which is devoid of any other markers for detecting the blank zone(s) (4), besides the magnetic markers (3).

14. The conveyor (1) of anyone of the preceding claims, comprising 3 to 16 position sensing units (51,52,53,54,55,56,57,58).

15. The conveyor (1) of anyone of the preceding claims, wherein the position sensing units (51,52,53,55,56,57,58) are arranged near, or atop of, or below a portion (22) of the conveyor belt (2) which is not bent over pulleys.

16. The conveyor (1) of anyone of the preceding claims, wherein said DP is in the range of about 0.5 mm to about 10 mm, and preferably is about 0.5 mm, about 1 mm, about 2 mm, about 2.5 mm, about 5 mm or about 10 mm.

17. The conveyor (1) of anyone of the preceding claims, wherein the magnetic markers form a pattern which is essentially periodic in belt travel direction.

18. A single pass or multipass inkjet printer comprising the conveyor (1) of anyone of the preceding claims.

**Patentansprüche**

1. Förderer (1) umfassend

a) ein endloses Förderband (2) mit einem Bandumfang (21, 22), einer äußeren Förderfläche (23), einer inneren, zu einer Riemenscheibe zugewandten Fläche (24), magnetischen Markierungen (3) entlang des gesamten Bandumfangs (21, 22) mit Ausnahme einer oder mehrerer Leerzonen (4) mit je einer Länge $L_j$, wobei j der Index der Leerzone ist, wobei die magnetischen Markierungen (3) in Förderbandlaufrichtung so angeordnet sind, dass abwechselnd der Nordpol (31) oder der Südpol (32) einer magnetischen Markierung (3) zur äußeren Förderfläche (23) zeigt, wobei benachbarte Nord- und Südpole durch einen Polabstand DP voneinander beabstandet sind, wodurch ein wechselndes Magnetfeld mit einer Standard-Maximalintensität erzeugt wird; wobei in jedem der Leerzonen (4) die magnetischen Markierungen fehlen oder ein Magnetfeld mit einer geringeren Maximalintensität als der Standard-Maximalintensität erzeugen;

b) mindestens 2 Positionserfassungseinheiten (51, 52, 53, 54, 55, 56, 57, 58), die entlang des Bandumfangs (21, 22) und in räumlicher Nähe zu den magnetischen Markern (3) angeordnet sind, wobei jede einzelne davon in der Lage ist, bei Bewegung des Förderbands (2) in Laufrichtung das Magnetfeld von magnetischen Markern (3), die sich nicht in der(den) Leerzone(s) (4) befinden, zu erfassen, und dadurch, wenn das Band in Laufrichtung läuft, 1) ein sinusförmiges Spannungssignal über die Ausrichtung der von den magnetischen Markern erfassten magnetischen Flussdichte B und somit entsprechend der Winkelposition der Positionserfassungseinheit in Bezug auf das Muster zu erzeugen; und 2) ein entsprechendes kosinusförmiges Spannungssignal, das der Winkelposition der Positionserfassungseinheit in Bezug auf das Muster entspricht, zu erzeugen; wobei unter den mindestens 2 Positionserfassungseinheiten (51, 52, 53, 54, 55, 56, 57, 58) mindestens 2 beabstandete Positionserfassungseinheiten (51, 52, 53, 54, 55, 56, 57, 58) vorhanden sind, von denen jede von jeder der übrigen beabstandeten Positionserfassungseinheiten durch einen Umfangsabstand in Bandlaufrichtung beabstandet ist, der größer ist als jede Länge $L_j$ von jeder Leerzone (4);

c) Mittel (51, 52, 53, 511, 521, 531, 532, 533, 534), die in der Lage sind, ein Leerzoneneintrittssignal zu erzeugen, wenn die maximale Intensität des von einer Positionserfassungseinheit erfassten Magnetfelds auf oder unter eine Schwellenintensität fällt oder zu fallen droht, die niedriger ist als die genannte Standardmaximalintensität, und Mittel (512, 522), die in der Lage sind, ein Leerzonenaustrittssignal für diese Positionserfassungseinheit zu erzeugen, wenn die maximale Intensität des von derselben Positionserfassungseinheit erfassten Magnetfelds auf oder über die besagte Schwellenintensität ansteigt oder angestiegen ist; und

d) eine Steuereinheit (6), die, wenn das Förderband (2) in Laufrichtung läuft, Bandpositionsinformationen aus den sinusförmigen und kosinusförmigen Spannungssignalen aller Positionserfassungseinheiten (51, 52, 53, 54, 55, 56, 57, 58) ableitet, mit der Massgabe, dass die Steuereinheit (6) die Sinus- und Kosinus-Spannungssignale von jeder Positionserfassungseinheit ab dem Zeitpunkt, zu dem sie das Leerzoneneintrittssignal für diese Positionserfassungseinheit empfängt, ignoriert, und die Sinus- und Kosinus-Spannungssignale dieser Positionserfassungseinheit ab dem Zeitpunkt, zu dem sie das Leerzonenaustrittssignal für diese Positionserfassungseinheit empfängt, erneut berücksichtigt.

2. Förderer (1) nach Anspruch 1, wobei mindestens 3 Positionserfassungseinheiten (51, 52, 53, 54, 55, 56, 57, 58) vorhanden sind; unter denen mindestens 3 beabstandete Positionserfassungseinheiten (51, 52, 53, 54, 55, 56, 57, 58) sind, von denen jede von jeder der übrigen beabstandeten Positionserfassungseinheiten durch einen Umfangsabstand in Bandlaufrichtung beabstandet ist, der größer ist als $L_j$.

3. Förderer (1) nach Anspruch 1 oder 2, wobei jede Positionserfassungseinheit (51, 52, 53, 54, 55, 56, 57, 58) umfasst:

i) Zwei Wheatstone-Brücken (513, 514), die jeweils obere und untere Schenkel von magnetoresistiven Sensoren umfassen, die mit anisotroper Magnetoresistenz (AMR) arbeiten, wobei die Wheatstone-Brücken (513, 514) voneinander durch einen Abstand DP/4 beabstandet sind, wobei DP wie in Anspruch 1 definiert ist, so dass, wenn die Positionserfassungseinheit (51, 52, 53, 54, 55, 56, 57, 58) in der besagten räumlichen Nähe der magnetischen Markierungen (3) so angeordnet ist, dass die Richtung des magnetischen Markierungsmusters, und damit die Bewegungsrichtung des Förderbands (2), parallel zu dem besagten Abstand ist, und wenn das Förderband (2) in die besagte Laufrichtung läuft, eine der beiden Wheatstone-Brücken (513 oder 514) aus dem Winkel zwischen der Ausrichtung der magnetischen Flussdichte B und der Richtung des magnetischen Markierungsmusters das sinusförmige Spannungssignal erzeugt und die andere (514 oder 513) das entsprechende kosinusförmige Spannungssignal erzeugt.

4. Förderer (1) nach Anspruch 1 oder 2, wobei jede Positionserfassungseinheit (51, 52, 53, 54, 55, 56, 57, 58) ein erstes Paar Wheatstone-Brücken (513, 514) umfasst, die durch DP/4 voneinander getrennt sind, wobei DP wie in Anspruch 1 definiert ist, um aus dem Muster abwechselnder Nord- und Südmagnetpole ein Sinus- und ein entsprechendes Kosinussignal zu erzeugen, und außerdem ein zweites Paar Wheatstone-Brücken (515, 516) umfasst, die wiederum durch DP/4 voneinander getrennt sind, um aus dem Muster abwechselnder Nord- und Südmagnetpole wiederum ein Sinus- und ein entsprechendes Kosinussignal zu erzeugen, wobei die beiden Paare von Wheatstone-Brücken ihrerseits durch das besagte DP voneinander getrennt sind, und darüber hinaus eines der Paare von Wheatstone-Brücken (513, 514 oder 515, 516) eine Stromversorgung aufweist, deren Polarität in Bezug auf die Polarität der Stromversorgung des anderen Paares von Wheatstone-Brücken (515, 516 oder 513,514) umgekehrt ist, so dass die erste Wheatstone-Brücke (515) des zweiten Paares (515, 516) einen magnetischen Nordpol erkennt während sie sich über einem magnetischen Südpol (32) befindet, gleichzeitig wenn die erste Wheatstone-Brücke (513) des ersten Paares (513, 514) sich über einem magnetischen Nordpol (31) befindet und diesen erkennt, und umgekehrt; und die erste Wheatstone-Brücke (515) des zweiten Paares (515, 516) einen magnetischen Südpol erkennt, während sie sich über einem magnetischen Nordpol (31) befindet, gleichzeitig wenn die erste Wheatstone-Brücke (513) des ersten Paares (513, 514) sich über einem magnetischen Südpol (32) befindet und diesen erkennt, und umgekehrt; und die Signale von der ersten Wheatstone-Brücke (513) des ersten Paares (513, 514) und das Signal von der ersten Wheatstone-Brücke (515) des zweiten Paares (515, 516) summiert und optional gemittelt werden; und die Signale von der zweiten Wheatstone-Brücke (514) des ersten Paares (513, 514) und das Signal von der zweiten Wheatstone-Brücke (516) des zweiten Paares (515, 516) summiert und optional gemittelt werden.

5.  Förderer nach irgendeinem der vorstehenden Ansprüche, wobei jede Positionserfassungseinheit (51, 52, 53, 54, 55, 56, 57, 58) selbst ein Leerzoneneintrittssignal erzeugt, wenn die von ihr erfasste maximale Intensität des Magnetfelds auf oder unter eine Schwellenintensität fällt, die niedriger ist als die besagte Standard-Maximalintensität, und ein Leerzonenaustrittssignal erzeugt, wenn die von ihr erfasste maximale Intensität des Magnetfelds auf oder über die besagte Schwellenintensität ansteigt.

6.  Förderer nach Anspruch 5, der in der Lage ist, eine Summe der Quadrate der Intensitäten der von jeder Positionserfassungseinheit (51, 52, 53, 54, 55,56, 57, 58) erfassten sinusförmigen und kosinusförmigen Signale oder eine Quadratwurzel dieser Summe zu bilden, in der Lage ist, das besagte Leerzoneneintrittssignal für diese Positionserfassungseinheit zu erzeugen, wenn die Summe der Quadrate der Signalintensitäten oder deren Quadratwurzel von dieser Positionserfassungseinheit deutlich unter die besagte Standardintensität fällt, und in der Lage ist, das besagte Leerzonenaustrittssignal für diese Positionserfassungseinheit zu erzeugen, wenn die Summe der Quadrate der Signalintensitäten oder deren Quadratwurzel auf oder über die besagte Schwellenintensität ansteigt.

7.  Förderer (1) nach irgendeinem der Ansprüche 1 bis 4, wobei für jede Positionserfassungseinheit (54, 55) ein startsignalgebendes Mittel (511, 521) vorgesehen ist, das ein Leerzoneneintrittssignal erzeugen kann, wenn die maximale Intensität des von diesem startsignalgebenden Mittel erfassten Magnetfelds (511, 521) auf oder unter eine Schwellenintensität fällt, die niedriger ist als die genannte Standardmaximalintensität, und ein endsignalgebendes Mittel (512, 522) vorgesehen ist, das ein Leerzonenaustrittssignal erzeugen kann, wenn die von diesem endsignalgebenden Mittel (512, 522) erfasste maximale Intensität des Magnetfelds auf oder über die besagte Schwellenintensität ansteigt, wobei jedes startsignalgebende Mittel (511 bzw. 521) sich stromaufwärts von einer entsprechenden Positionserfassungseinheit (54 bzw. 55) befindet und jedes endsignalgebende Mittel (512 bzw. 522) sich stromabwärts von dieser entsprechenden Positionserfassungseinheit (54 bzw. 55) befindet, so dass die start- und endsignalgebenden Mittel die entsprechende Positionserfassungseinheit zwischen sich einschließen; und wobei für die besagten mindestens zwei beabstandeten Positionserfassungseinheiten (54, 55) jedes Zweierpaar aus stromaufwärts und stromabwärts beabstandeten Positionserfassungseinheiten (54, 55) ferner das endsignalgebende Mittel (512) der hierzu gehörenden stromaufwärts gelegenen Positionserfassungseinheit (54) von dem startsignalgebenden Mittel (521) der hierzu gehörenden stromabwärts gelegenen Positionserfassungseinheit (55) um um einen Abstand L beabstandet ist, der größer ist als die größte Länge $L_j$ irgendeiner auf dem Förderband (2) vorhandenen Leerzone (4), und wobei sich alle Verweise auf "stromaufwärts" und "stromabwärts" auf die Laufrichtung des Bandes beziehen.

8.  Förderer nach Anspruch 7, wobei jedes startsignalgebende Mittel (511 bzw. 521), das zu einer Positionserfassungseinheit (54 bzw. 55) gehört, und jedes endsignalgebende Mittel (512 bzw. 522), das zu derselben Positionserfassungseinheit (54 bzw. 55) gehört, voneinander um einen Abstand LH beabstandet sind, der durch die Formel

$$LH = (2N + 0.5) \times DP$$

gegeben ist, wobei N eine positive ganze Zahl von mindestens 0 ist und DP wie oben definiert ist, mit der Massgabe, dass N groß genug ist, um die betreffende Positionserfassungseinheit (54 bzw. 55) zwischen dem besagten startsignalgebenden Mittel (511 bzw. 521) und dem besagten endsignalgebenden Mittel (512 bzw. 522) aufzunehmen, und der Förderer (1) in der Lage ist, eine Summe der Quadrate der Intensitäten der Signale zu bilden, die von einem Paar dergestalt voneinander beabstandeten start- und endsignalgebenden Mitteln (511, 512 bzw. 521, 522) erkannt werden, und das besagte Leerzoneneintrittssignal für die dazwischenliegende Positionserfassungseinheit (54 bzw. 55) dann erzeugt, wenn die besagte Summe der Quadrate der Signalintensitäten unter die besagte Standardintensität fällt, und in der Lage ist, das besagte Leerzonenaustrittssignal für die dazwischenliegende Positionserfassungseinheit (54 bzw. 55) dann zu erzeugen, wenn die besagte Summe der Quadrate der Signalintensitäten auf oder über die besagte Schwellenintensität ansteigt.

9. Förderer nach irgendeinem der Ansprüche 1 bis 4, wobei es ein erstes startsignalgebendes Mittel (531) gibt, das stromaufwärts von allen Positionserfassungseinheiten (56, 57, 58) ist und in der Lage ist, ein Leerzoneneintrittssignal für eine am meisten stromaufwärts liegende (und nicht notwendigerweise, aber vorzugsweise benachbarte) Positionserfassungseinheit (56) zu erzeugen, wenn es in eine Leerzone (4) eintritt, es ein zweites startsignalgebendes Mittel (534) gibt, das stromabwärts von allen Positionserfassungseinheiten (56, 57, 58) ist und in der Lage ist, beim Eintritt in eine Leerzone (4) ein Leerzoneneintrittssignal zu erzeugen, das für eine am weitesten stromabwärts liegende (und nicht notwendigerweise, aber vorzugsweise benachbarte) Positionserfassungseinheit (58) verwendet oder interpretiert wird, und es weitere startsignalgebende Mittel (532, 533) in einer Anzahl gibt, die um eins geringer ist als die Anzahl der Positionserfassungseinheiten (56, 57, 58), und wobei jegliche solche Positionserfassungseinheiten (56, 57 bzw. 57, 58) paarweise ein solches zusätzliches Mittel (532 bzw. 533) zwischen sich aufnehmen, und wobei jedes weitere startsignalgebende Mittel (532 bzw. 533) in der Lage ist, beim Eintritt in eine Leerzone (4) ein Leerzoneneintrittssignal für eine dazwischen aufnehmende Positionserfassungseinheit (57 bzw. 58), die stromabwärts von (und nicht notwendigerweise, aber vorzugsweise benachbart zu) diesem weiteren startsignalgebenden Mittel liegt, zu erzeugen, wobei dieses Signal auch als Leerzonenaustrittssignal für eine dazwischen aufnehmende Positionserfassungseinheit (56 bzw. 57), die stromaufwärts von (und nicht notwendigerweise, aber vorzugsweise benachbart zu) dieser weiteren Startsignaleinrichtung liegt, verwendet oder interpretiert wird, wobei der Abstand $L_m$, um den jedes weitere startsignalgebende Mittel (532 bzw. 533) von der entsprechenden stromaufwärts gelegenen und dazwischen aufnehmenden Positionserfassungseinheit (56 bzw. 57) getrennt ist, größer ist als die größte Länge $L_j$ jeder auf dem Förderband (2) vorhandenen Leerzone (4), und auch der Abstand $L_n$, um den das besagte zweite startsignalgebende Mittel (534) von der besagten am weitesten stromabwärts gelegenen Positionserfassungseinheit (58) getrennt ist, größer ist als die größte Länge $L_j$ jeder auf dem Förderband (2) vorhandenen Leerzone (4), und wobei sich alle Verweise auf "stromaufwärts" und "stromabwärts" auf die Bewegungsrichtung des Bandes beziehen.

10. Förderer nach Anspruch 9, wobei

a) das besagte erste startsignalgebende Mittel (531) und ein weiteres startsignalgebendes Mittel (532) zwischen sich die besagte am meisten stromaufwärts gelegene Positionserfassungseinheit (56) einschliessen und voneinander um einen Abstand LH beabstandet sind; und

b) das besagte zweite startsignalgebende Mittel (534) und ein weiteres startsignalgebendes Mittel (533) zwischen sich die besagte am meisten stromabwärts gelegene Positionserfassungseinheit (58) einschliessen und voneinander um einen Abstand LH beabstandet sind; und

c) in jedem anderen Paar von weiteren startsignalgebenden Mitteln (532, 533), die zwischen sich eine weitere Positionserfassungseinheit (57) einschliessen, diese weiteren startsignalgebenden Mittel voneinander um einen Abstand LH beabstandet sind;

wobei jeder solche Abstand LH gegeben ist durch

$$LH = (2N + 0.5) \times DP$$

wobei N eine positive ganze Zahl von mindestens 0 ist und DP wie in Anspruch 1 definiert ist, mit der Massgabe, dass N groß genug ist, um für die zwischen ihnen eingeschlossene Positionserfassungseinheit Platz zu schaffen, und der Förderer (1):

i) ist in der Lage, eine Summe der Quadrate der Intensitäten der von dem ersten (531) und dem eine weiteren (532) startsignalgebenden, so beabstandeten Mittel erfassten Signale, oder eine Quadratwurzel daraus, zu bilden, und ist in der Lage, ein Leerzoneneintrittssignal für die besagte dazwischenliegende, am weitesten stromaufwärts gelegene Positionserfassungseinheit (56) zu erzeugen, wenn die besagte Summe der Quadrate der Intensitäten der von dem ersten (531) und dem einen weiteren (532) startsignalgebenden, so beabstandeten Mittel erfassten Signale, oder die besagte Quadratwurzel der Summe, deutlich unter die besagte Standardintensität fällt, und und ist in der Lage, das besagte Leerzonenaustrittssignal für die dazwischenliegende, am weitesten stromaufwärts gelegene Positionserfassungseinheit (56) zu erzeugen, wenn die Summe der Quadrate der Signalintensitäten auf die Schwellenintensität oder darüber ansteigt;

ii) ist in der Lage, eine Summe der Quadrate der Intensitäten der von dem zweiten (534) und dem einen weiteren (533) so voneinander beabstandeten startsignalgebenden Mittel erfassten Signale, oder eine Quadratwurzel der besagten Summe, zu bilden, und ein Leerzoneneintrittssignal für die besagte dazwischenliegende am meisten stromabwärts gelegene Positionserfassungseinheit (58) zu erzeugen, wenn die Summe der Quadrate der Intensitäten der von dem zweiten (534) und dem einen weiteren (533) so voneinander beabstandeten startsignalgebenden Mittel erfassten Signale, oder die Quadratwurzel dieser besagten Summe, deutlich unter die besagte Standardintensität fällt, und ein Leerzonenaustrittssignal für die besagte dazwischen liegende, am weitesten stromabwärts gelegene Positionserfassungseinheit (58) zu erzeugen, wenn die Summe der Quadrate der Signalintensitäten, oder die besagte Quadratwurzel dieser besagten Summe, auf oder über die besagte Schwellenintensität ansteigt; und

iii) ist in der Lage, eine Summe der Quadrate der Intensitäten der von einem beliebigen weiteren gepaarten startsignalgebenden Mitteln (532, 533) erfassten Signale, oder die Quadratwurzel dieser besagten Summe, zu bilden und ein Leerzoneneintrittssignal für die dazwischen angeordnete Positionserfassungseinheit (57) zu erzeugen, wenn die Summe der Quadrate der Intensitäten der von den gepaarten weiteren startsignalgebenden, so beabstandeten Mitteln (532, 533) erfassten Signale, oder die Quadratwurzel dieser besagten Summe, deutlich unter die besagte Standardintensität fällt, und das besagte Leerzonenaustrittssignal für die dazwischen angeordnete Positionserfassungseinheit (57) zu erzeugen, wenn die besagte Summe der Quadrate der Signalintensitäten, oder die Quadratwurzel dieser besagten Summe, auf oder über die Schwellenintensität ansteigt;

und wobei sich alle Verweise auf "stromaufwärts" und "stromabwärts" auf die Laufrichtung des Bandes beziehen.

11. Förderer (1) nach Anspruch 7 oder 8, wobei das erste startsignalgebende Mittel (531) und/oder das zweite startsignalgebende Mittel (534) Hall-Sensoren sind.

12. Förderer (1) nach Anspruch 9 oder 10, wobei das erste startsignalgebende Mittel (531), das zweite startsignalgebende Mittel (534) und/oder die weiteren startsignalgebenden Mittel (532, 533) Hall-Sensoren sind.

13. Förderer (1) nach irgendeinem der vorstehenden Ansprüche, der außer den magnetischen Markern (3) keine weiteren Marker zum Erfassen der leeren Zone(n) (4) aufweist.

14. Förderer (1) nach irgendeinem der vorstehenden Ansprüche, der 3 bis 16 Positionserfassungseinheiten (51, 52, 53, 54, 55, 56, 57, 58) umfasst.

15. Förderer (1) nach irgendeinem der vorstehenden Ansprüche, wobei die Positionserfassungseinheiten (51, 52, 53, 55, 56, 57, 58) in der Nähe oder oberhalb oder unterhalb eines Abschnitts (22) des Förderbandes (2), der nicht über Riemenscheiben gebogen ist, angeordnet sind.

16. Förderer (1) nach irgendeinem der vorstehenden Ansprüche, wobei das besagte DP im Bereich von etwa 0,5 mm bis etwa 10 mm liegt und vorzugsweise etwa 0,5 mm, etwa 1 mm, etwa 2 mm, etwa 2,5 mm, etwa 5 mm oder etwa 10 mm beträgt.

17. Förderer (1) nach irgendeinem der vorstehenden Ansprüche, wobei die magnetischen Markierungen ein Muster bilden, das in Förderrichtung des Bandes im Wesentlichen periodisch ist.

18. Ein Single-Pass- oder Multipass-Tintenstrahldrucker, der den Förderer (1) von irgendeinem der vorstehenden Ansprüche umfasst.

**Revendications**

1. Convoyeur (1) comprenant

   a) une courroie de transport sans fin (2) avec une périphérie de courroie (21, 22), une surface de convoyage extérieure (23), une surface intérieure faisant face à une poulie (24), des marqueurs magnétiques (3) le long de toute la périphérie de courroie (21, 22) excepté pour une ou plusieurs zone(s) vide(s) (4) chacune d'une longueur Lj, dans lequel j est l'indice de la zone vide, les marqueurs magnétiques (3) étant agencés dans une direction d'avance de courroie de telle manière que d'une manière alternative le pôle nord (31) ou le pôle sud (32) d'un marqueur magnétique (3) pointe vers la surface de convoyage extérieure (23), de tels pôles nord et pôles sud adjacents étant espacés entre eux d'un pas de pôle DP, produisant ainsi un champ magnétique alternatif d'une intensité maximale normale; dans lequel dans chacune desdites zone(s) vide(s) (4) les marqueurs magnétiques sont absents ou produisent un champ magnétique d'intensité maximum inférieure à ladite intensité maximale normale;

   b) au moins 2 unités de détection de position (51, 52, 53, 54, 55, 56, 57, 58) agencées le long de la périphérie de courroie (21, 22) et à proximité spatiale des marqueurs magnétiques (3), chacune pouvant, quand la courroie de transport (2) avance dans la direction d'avance, détecter le champ magnétique venant des marqueurs magnétiques (3) n'étant pas dans la(es) zone(s) vide(s) (4) et produire ainsi quand la courroie avance dans la direction d'avance, 1) un signal de tension sinusoïdal sur l'orientation de la densité de flux magnétique détectée depuis les marqueurs magnétiques et correspondant ainsi à la position angulaire de l'unité de détection de position par rapport au motif ; et (2 un signal de tension cosinusoïdal correspondant à la position angulaire de l'unité de détection de position par rapport au motif ; dans lequel parmi lesdites au moins 2 unités de détection de position (51, 52, 53, 54, 55, 56, 57, 58) il y a au moins 2 unités de détection de position (51, 52, 53, 54, 55, 56, 57, 58) espacées dont chacune est espacée de l'une quelconque des unités de détection de position espacées restantes par une distance périphérique dans la direction d'avance de courroie qui est supérieure à toute longueur $L_j$ de toute zone vide (4) ;

   c) des moyens (51, 52, 53, 511, 521, 531, 532, 533, 534) pouvant générer un signal d'entrée de zone vide quand l'intensité maximale du champ magnétique détectée par une unité de détection de position tombe, ou est près de tomber, à ou sous un seuil d'intensité inférieur à ladite intensité maximale normale et des moyens (512, 522) pouvant générer un signal de sortie de zone vide pour cette unité de détection de position quand l'intensité maximum du champ magnétique détecté par la même unité de détection de position monte, ou est montée, jusqu'à ou au-dessus dudit seuil d'intensité ; et

   d) une unité de commande (6) qui dérive, quand la courroie de transport (2) avance dans la direction d'avance, une information de position de courroie des signaux de tension sinusoïdaux et cosinusoïdaux de toutes les unités de détection de position (51, 52, 53, 54, 55, 56, 57, 58), pour autant que l'unité de commande (6) ne tient pas compte des signaux de tension sinusoïdaux et cosinusoïdaux venant d'une quelconque unité de détection de position comme depuis le point de temps où elle reçoit ledit signal d'entrée de zone vide pour cette unité de détection de position et reconsidère les signaux de tension sinusoïdaux et cosinusoïdaux de cette unité de détection de position comme depuis le point de temps où elle reçoit ledit signal de sortie de zone vide pour cette unité de détection de position.

2. Convoyeur (1) selon la revendication 1, dans lequel il y a au moins 3 unités de détection de position (51, 52, 53, 54, 55, 56, 57, 58) parmi lesquelles il y a au moins 3 unités de détection de position (51, 52, 53, 54, 55, 56, 57, 58) espacées dont chacune est espacée de l'une quelconque des unités de détection de position espacées restantes par une distance périphérique dans la direction d'avance de courroie qui est supérieure à ladite $L_j$.

3. Convoyeur (1) selon la revendication 1 ou 2, dans lequel chaque unité de détection de position (51, 52, 53, 54, 55, 56, 57, 58) comprend :
   deux ponts de Wheatstone (513, 514) comprenant chacun des bras supérieurs et inférieurs de capteurs magnétorésistifs fonctionnant par magnétorésistivité anisotropique (AMR), les ponts de Wheatstone (513, 514) étant espacés entre eux d'une distance d'espacement DP/4, DP étant comme défini selon la revendication 1, de telle manière que, quand l'unité de détection de position (51, 52, 53, 54, 55, 56, 57, 58) est agencée dans ladite proximité spatiale des marqueurs magnétiques (3) de telle manière que la direction du motif de marqueurs magnétiques, et donc la direction d'avance de la courroie de transport (2), est parallèle à ladite distance d'espacement et la courroie de transport (2) avance dans ladite direction d'avance, un des deux ponts de Wheatstone (513 ou 514) génère à partir de l'angle entre l'orientation de la densité de flux magnétique B et ladite direction du motif de marqueurs magnétiques ledit signal de tension sinusoïdal et l'autre (514 ou 513) génère ledit signal de tension cosinusoïdal.

4. Convoyeur (1) selon la revendication 1 ou 2, dans lequel chaque unité de détection de position (51, 52, 53, 54, 55, 56, 57, 58) comprend une première paire de ponts de Wheatstone (513, 514) étant séparés entre eux par DP/4, DP étant comme défini selon la revendication 1, de façon à générer à partir du motif de pôles magnétiques alternatifs nord et sud un signal sinusoïdal et un signal cosinusoïdal correspondant, et comprend aussi une seconde paire de ponts de Wheatstone (515, 516) étant aussi séparés entre eux par DP/4 de façon à générer aussi à partir du motif de pôles magnétiques alternatifs nord et sud un signal sinusoïdal et un signal cosinusoïdal correspondant, et les deux paires ponts de Wheatstone étant à leur tour séparées entre elles de ladite DP, et en outre l'une des paires de ponts de Wheatstone (513, 514 ou 515, 516) ayant en outre une alimentation électrique dont la polarité est inversée par rapport à la polarité de l'alimentation électrique de l'autre paire de ponts de Wheatstone (515, 516 ou 513, 514) de telle manière que le premier pont de Wheatstone (515) de la seconde paire (515, 516) détecte un pôle nord magnétique tout en étant sur un pôle sud magnétique (32), simultanément quand le premier pont de Wheatstone (513) de la première paire (513, 514) est au-dessus, et détecte, un pôle nord magnétique (31), et vice versa ; et le premier pont de Wheatstone (515) de la seconde paire (515, 516) détecte un pôle sud magnétique tout en étant sur un pôle nord magnétique (31), simultanément quand le premier pont de Wheatstone (513) de la première paire (513, 514) est au-dessus, et détecte, un pôle sud magnétique (32), et vice versa ; et les signaux venant du premier pont de Wheatstone (513) de la première paire (513, 514) et le signal venant du premier pont de Wheatstone (515) de la seconde paire (515, 516) sont sommés et en option moyennés ; et les signaux venant du second pont de Wheatstone (514) de la première paire (513, 514) et le signal venant du second pont de Wheatstone (516) de la seconde paire (515, 516) sont sommés et en option moyennés.

5. Convoyeur selon l'une quelconque des revendications précédentes, dans lequel chaque unité de détection de position (51, 52, 53, 54, 55, 56, 57, 58) génère elle-même un signal d'entrée de zone vide quand l'intensité maximale du champ magnétique détecté par elle tombe à ou sous un seuil d'intensité inférieur à ladite intensité maximale normale et génère un signal de sortie de zone vide quand l'intensité maximum du champ magnétique détecté par elle monte à ou au-dessus dudit seuil d'intensité.

6. Convoyeur selon la revendication 5, qui peut former une somme des carrés des intensités des signaux sinusoïdaux et cosinusoïdaux détectés par chaque unité de détection de position (51, 52, 53, 54, 55, 56, 57, 58) ou une racine carrée d'une telle somme, peut générer ledit signal d'entrée de zone vide pour cette unité de détection de position quand ladite somme des carrés des intensités de signaux, ou ladite racine carrée de celle-ci, depuis cette unité de détection de position tombe significativement sous ladite intensité normale, et peut générer ledit signal de sortie de zone vide pour cette unité de détection de position quand ladite somme des carrés des intensités de signaux, ou ladite racine carrée de celle-ci, monte jusqu'à ou au-dessus dudit seuil d'intensité.

7. Convoyeur (7) selon l'une quelconque des revendications 1 à 4, dans lequel pour chaque unité de détection de position (54, 55) il y a un moyen de signalisation de début (511, 521) pouvant générer un signal d'entrée de zone vide quand l'intensité maximale du champ magnétique détectée par ce moyen de signalisation de début (511, 521) tombe jusqu'à ou sous un seuil d'intensité inférieur à ladite intensité maximale normale et un moyen de signalisation de fin (512, 522) pouvant générer un signal de sortie de zone vide quand l'intensité maximum du champ magnétique détectée par ce moyen de signalisation de fin (512, 522) monte jusqu'à ou au-dessus dudit seuil d'intensité, dans lequel chaque moyen de signalisation de début (511 resp. 521) est en amont d'une unité de détection de position (54 resp. 55) correspondante et chaque moyen de signalisation de fin (512 resp. 522) est en aval de cette unité de détection de position (54 resp. 55) correspondante, de telle manière que des moyens de signalisation de début et de fin prennent en sandwich entre eux l'unité de détection de position correspondante ; et dans lequel pour lesdites au moins deux unités de détection de position (54, 55) espacées toute paire de deux unités de détection de position (54, 55) espacées amont et aval a en outre le moyen de signalisation de fin (512) de l'unité de détection de position (54) amont appariée espacée du moyen de signalisation de début (521) de l'unité de détection de position (55) aval appariée par une distance L qui est supérieure à la longueur la plus grande Lj de toute zone vide (4) présente sur la courroie de transport (2), et dans lequel toutes références à "amont" et "aval" sont relatives à la direction d'avance de la courroie.

8. Convoyeur selon la revendication 7, dans lequel chaque moyen de signalisation de début (511 resp. 521) correspondant à une unité de détection de position (54 resp. 55) et chaque moyen de signalisation de fin (512 resp. 522) correspondant à la même unité de détection de position (54 resp. 55) sont espacés entre eux par une distance LH qui est donnée par la formule

$$LH = (2N + 0,5) \times DP$$

où N est un entier positif d'au moins 0 et DP est comme défini ci-dessus, du moment que N est suffisamment grand pour accueillir l'unité de détection de position (54 resp. 55) en question pour être prise en sandwich entre ledit moyen de signalisation de début (511 resp. 521 et ledit moyen de signalisation de fin (512 resp. 522), et le convoyeur (1) peut former une somme des carrés des intensités des signaux détectés par une paire de moyens de signalisation de début et fin (511, 512 ou 521, 522) ainsi espacés, et génère ledit signal d'entrée de zone vide pour ladite unité de détection de position (54 resp. 55) prise en sandwich quand ladite somme des carrés des intensités de signaux tombe sous ladite intensité par défaut, et peut générer ledit signal de sortie de zone vide pour ladite unité de détection de position (54 resp. 55) prise en sandwich quand ladite somme de carrés des intensités de signaux monte jusqu'à ou au-dessus dudit seuil d'intensité.

9. Convoyeur selon l'une quelconque des revendications 1 à 4, dans lequel il a un premier moyen de signalisation de début (531) qui est en amont de toutes les unités de détection de position (56, 57, 58) et peut générer un signal d'entrée de zone vide pour une unité de détection de position (56) la plus en amont (et pas nécessairement mais de préférence adjacente) lors de l'entrée dans une zone vide (4), un second moyen de signalisation de début (534) qui est en aval de toutes les unités de détection de position (56, 57, 58) et peut générer, quand il entre dans une zone vide (4), un signal d'entrée de zone vide qui est utilisé ou interprété pour une unité de détection de position (58) la plus en aval (et pas nécessairement mais de préférence adjacente) comme un signal de sortie de zone vide, et d'autres moyens de signalisation de début (532, 533) en un nombre qui un de moins que le nombre d'unités de détection de position (56, 57, 58), et toutes telles unités de position prises les prenant en sandwich par paires (56, 57 resp. 57, 58) entres elles un tel moyen supplémentaire (532 resp. 533), et chaque autre moyen de signalisation de début (532 resp. 533) pouvant générer, quand il entre dans une zone vide (4), un signal d'entrée de zone vide pour une unité de détection de position (57 resp. 58) le prenant en sandwich en aval de (et pas nécessairement mais de préférence adjacente à) ce moyen de signalisation de début, lequel signal est aussi utilisé ou interprété comme un signal de sortie de zone vide pour une unité de détection de position (56 resp. 57) le prenant en sandwich en amont de (et pas nécessairement mais de préférence adjacente à) cet autre moyen de signalisation de début, dans lequel la distance $L_m$ par laquelle tout autre moyen supplémentaire (532 resp. 533) est séparé de l'unité de détection de position (56 resp. 57) amont le prenant en sandwich correspondante est supérieure à la longueur la plus grande $L_j$ de toute zone vide (4) présente sur la courroie de transport (2) de convoyeur, et aussi la distance $L_n$ par laquelle ledit second moyen de signalisation de début (534) est séparé de ladite unité de détection de position (58) la plus en aval est supérieure à la longueur la plus grande $L_j$ de toute zone vide (4) présente sur la courroie de transport (2) de convoyeur, et dans lequel toutes références à "amont" et "aval" sont relatives à la direction d'avance de la courroie.

10. Convoyeur (1) selon la revendication 9, dans lequel

a) lesdits premier moyen de signalisation de début (531) et un autre moyen de signalisation de début (532) prennent en sandwich entre eux ladite unité de détection de position (56) la plus en amont, et sont espacés l'un de l'autre par une distance LH ; et
b) lesdits second moyen de signalisation de début (534) et un autre moyen de signalisation de début (533) prennent en sandwich entre eux ladite unité de détection de position (58) la plus en aval et sont espacés l'un de l'autre par une distance LH ; et
c) dans toute autre paire d'autres moyens de signalisation de début (532, 533), prenant en sandwiche entre eux une autre unité de détection de position (57), ces autres moyens de signalisation de début sont espacés l'un de l'autre par une distance LH ;

dans lequel toute telle distance LH est donnée par

$$LH = (2N + 0,5) \times DP$$

où N est un entier positif d'au moins 0 et DP est comme défini dans la revendication 1, du moment que N est suffisamment grand pour accueillir l'unité de détection de position qui est prise en sandwich entre eux, et le convoyeur (1) :

i) peut former une somme des carrés des intensités des signaux détectés par le premier moyen de signalisation de début (531), ou une racine carrée de celle-ci, et l'un autre moyen de signalisation de début (532) ainsi espacés, et de générer un signal d'entrée de zone vide pour ladite unité de détection de position (56) la plus en amont prise en sandwich quand ladite somme des carrés des intensités des signaux détectés par le premier moyen de signalisation de début (531) et l'un autre moyen de signalisation de début (532) ainsi espacés, ou ladite racine carrée de la somme, tombe significativement sous ladite intensité normale, et peut générer ledit signal de sortie de zone vide pour ladite unité de détection de position (56) la plus en amont prise en sandwich quand ladite somme de carrés des intensités de signaux, ou ladite racine carrée de celle-ci, monte jusqu'à ou au-dessus dudit seuil d'intensité ;

ii) peut former une somme des carrés des intensités des signaux détectés par le second moyen de signalisation de début (534) et ledit un autre moyen de signalisation de début (533) ainsi espacés, ou une racine carrée ladite somme, et de générer un signal d'entrée de zone vide pour ladite unité de détection de position (58) la plus en aval prise en sandwich quand ladite somme des carrés des intensités des signaux détectés par le second moyen de signalisation de début (534) et l'un autre moyen de signalisation de début (533) ainsi espacés, ou ladite racine carrée de ladite somme, tombe significativement sous ladite intensité normale, et peut générer ledit signal de sortie de zone vide pour ladite unité de détection de position (58) la plus en aval prise en sandwich quand ladite somme de carrés des intensités de signaux, ou ladite racine carrée de ladite somme, monte jusqu'à ou au-dessus dudit seuil d'intensité ; et

iii) peut former une somme des carrés des intensités des signaux détectés par tous autres moyens de signalisation début (532, 533), ou une racine carrée de ladite somme, et de générer un signal d'entrée de zone vide pour l'unité de détection de position (57) prise en sandwich entre eux quand la somme des carrés des intensités des signaux détectés par la paire de moyens de signalisation de début (532, 533) ainsi espacés, ou ladite racine carrée de ladite somme, tombe significativement sous ladite intensité normale, et peut générer ledit signal de sortie de zone vide pour ladite unité de détection de position (57) prise en sandwich entre eux quand ladite somme de carrés des intensités de signaux, ou ladite racine carrée de ladite somme, monte jusqu'à ou au-dessus dudit seuil d'intensité ;

et dans lequel toutes références à "amont" et "aval" sont relatives à la direction d'avance de la courroie.

11. Convoyeur (1) selon la revendication 7 ou 8, dans lequel le premier moyen de signalisation de début (531) et/ou le second moyen de signalisation de début (534) sont des capteurs à effet Hall.

12. Convoyeur (1) selon la revendication 9 ou 10, dans lequel le premier moyen de signalisation de début (531), le second moyen de signalisation de début (534) et/ou les autres moyens de signalisation de début (532, 533) sont des capteurs à effet Hall.

13. Convoyeur (1) selon l'une quelconque des revendications précédentes, qui est dépourvu de tous autres marqueurs pour détecter la(es) zone(s) vide(s) (4), en dehors des marqueurs magnétiques (3).

14. Convoyeur (1) selon l'une quelconque des revendications précédentes, comprenant de 3 à 16 unités de détection de position (51, 52, 53, 54, 55, 56, 57, 58).

15. Convoyeur (1) selon l'une quelconque des revendications précédentes, dans lequel les unités de détection de position (51, 52, 53, 54, 55, 56, 57, 58) sont agencées près de, ou au-dessus de, ou au-dessous d'une partie (22) de la courroie de transport (2) qui n'est pas courbée au-dessus des poulies.

16. Convoyeur (1) selon l'une quelconque des revendications précédentes, dans lequel ladite DP est dans la plage d'environ 0,5 mm à environ 10 mm, et de préférence est d'environ 0,5 mm, d'environ 1 mm, d'environ 2 mm, d'environ 2,5 mm, d'environ 5 mm ou d'environ 10 mm.

17. Convoyeur (1) selon l'une quelconque des revendications précédentes, dans lequel les marqueurs magnétiques forment un motif qui est sensiblement périodique dans la direction d'avance de la courroie.

18. Imprimante à jet d'encre mono-passage ou multi-passage comprenant le convoyeur (1) selon l'une quelconque des revendications précédentes.

# Fig.1

EP 4 558 338 B1

Fig.2

Fig.3

Fig.4

Fig.5

EP 4 558 338 B1

Fig. 6

# Fig. 7

# Fig. 8

## a)

## b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55123806 A
- JP 2001125333 A
- US 2008049054 A1
- US 20080192076 A1
- EP 4060291 A1
- JP 2006096429 A
- US 2012124848 A1
- US 2012124849 A1
- WO 2016146463 A1
- US 2017322052 A1